(19) Europäisches Patentamt
European Patent Office
Office européen des brevets

(11) EP 1 326 241 A1

(12) **EUROPEAN PATENT APPLICATION**
published in accordance with Art. 158(3) EPC

(43) Date of publication:
**09.07.2003 Bulletin 2003/28**

(21) Application number: **01965569.5**

(22) Date of filing: **10.09.2001**

(51) Int Cl.7: **G11B 7/095**, G11B 7/004, G11B 20/14, G11B 19/28

(86) International application number:
**PCT/JP01/07857**

(87) International publication number:
**WO 02/023543 (21.03.2002 Gazette 2002/12)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **13.09.2000 JP 2000278844**

(71) Applicant: **MATSUSHITA ELECTRIC INDUSTRIAL CO., LTD.**
**Kadoma-shi, Osaka 571-8501 (JP)**

(72) Inventors:
- **HINO, Yasumori**
  **Ikoma-shi, Nara 630-0112 (JP)**
- **OYAMA, Hideki**
  **Tamana-gun, Kumamoto 869-0233 (JP)**
- **INOUE, Takashi**
  **Osaka-shi, Osaka 535-0022 (JP)**

(74) Representative: **Schirdewahn, Jürgen**
**Jung Schirdewahn Lemke**
**Clemensstrasse 30**
**80803 München (DE)**

# (54) TRACK ERROR SIGNAL GENERATOR, TRACK ERROR SIGNAL GENERATION METHOD, CONTROLLER, AND CONROL METHOD

(57) A tracking error signal generating apparatus having an inexpensive and simple configuration for a disc-shaped information recording medium driven in conformity with a given system, such as the CAV system, CLV system or ZCLV system, is provided. The tracking error signal generating apparatus in accordance with the present invention comprises a reproduction portion of butputting the reproduction signal of prepits formed on the disc-shaped information recording medium; a clock pit signal detection portion of detecting a first clock pit signal from the reproduction signal; a first clock pit signal interval measurement portion of outputting the interval value between two adjacent first clock pit signals; a computation portion of calculating and outputting first and second wobble pit signal interval values nearly proportional to the interval value; first and second wobble pit signal detection portions of detecting the first and second wobble pit signals, respectively, on the basis of the first and second wobble pit signal interval values and the like; and a differential signal generation portion of generating the differential signal between the above-mentioned first and second wobble pit signals.

101 : OPTICAL DISC
BEAM SPOT
SPINDLE MOTOR
HEAD PORTION
SPINDLE MOTOR CONTROL PORTION
LASER APC
HEAD AMP
FOCUS SERVO
DIFFERENTIATING CIRCUIT
COMPARATOR
COMPARATOR
PEAK HOLDER
PEAK HOLDER
SAMPLE HOLDER
TIMING GENERATING CIRCUIT
DATA-USE PLL
PHASE COMPARATOR
LOOP FILTER
VCO
1/M FREQUENCY DIVIDER
DATA-USE CLOCK
TRACKING CONTROL PORTION
VOICE COIL MOTOR DRIVING PORTION
VOICE COIL MOTOR

FIG. 1



Printed by Jouve, 75001 PARIS (FR)

## Description

TECHNICAL FIELD

The present invention relates to a disc-shaped information recording medium control apparatus (including a tracking error signal generating apparatus) and its control method (including a tracking error signal generating method).

BACKGROUND TECHNOLOGY

In recent years, information processing apparatuses, such as personal computers, have really become widespread in general households. Accordingly, demand for compact large-capacity portable external storage devices is increasing, and compact disc-shaped information recording medium recording/reproducing apparatuses (for example, optical disc apparatuses) having recording densities higher than those of conventional optical disc apparatuses have been proposed by various companies.

The disc-shaped information recording medium recording/reproducing apparatuses include a disc-shaped information recording medium control apparatus (including a tracking error signal generating apparatus).

As conventional optical disc tracking control systems, systems that use tracking guide grooves formed on a disc are available. As one of the systems, a push-pull system wherein primary diffraction light from grooves is used as a tracking control signal and control is carried out so that this primary diffraction light becomes equal is frequently used. However, this push-pull system has a disadvantage of causing an error in the position of tracking in the case when a disc is tilted or a lens is shifted, whereby control is not carried out accurately to the track center. In order to overcome this disadvantage, a three-beam tracking system is available, wherein a light beam is divided into three light beams comprising one main beam and two sub-beams by using a diffraction grating, the divided sub-beams are disposed so as to be shifted by the 1/2 period of the track pitch, and tracking is carried out so that the amounts of light from groove tracks become equal. Since this system generates a tracking control signal from the difference between the amounts of light from the grooves, excellent tracking performance is obtained regardless of disturbance, such as the tilt of the disc and the shift of the lens. However, since the difference between the amounts of reflected light from groove portions and inter-groove portions is used as a tracking control signal, if the width of the groove portion (groove) becomes nearly equal to that of the inter-groove portion (land), no tracking control signal is generated. Therefore, this system has a disadvantage of being unable to be used for a land groove system wherein both the grooves and the lands are used as recording/reproducing tracks thereby to attain a high-density disc having a narrow track pitch.

Furthermore, as an optical disc tracking control system, a differential push-pull system is also available, wherein a light beam is divided into two sub-beams and one main beam, and these divided sub-beams are disposed so as to be shifted by the 1/2 period of the track pitch so that two push-pull signals obtained when the left and right sub-beams are reflected from groove tracks become equal. Since this system generates a tracking control signal from the difference between the push-pull signals from the left and right tracks adjacent to the track for tracking, excellent tracking performance is obtained regardless of disturbance, such as the tilt of the disc and the shift of the lens. In addition, since the push-pull signals are used, both the grooves and the lands are used as recording/reproducing tracks, whereby it is possible to attain a high-density disc having a narrow track pitch.

In conventional optical memories, the reproduction resolution of a signal was almost determined by the wavelength $\lambda$ of reproduction light and the numerical aperture (NA) of an objective lens, and the pit period of a detection limit was about $\lambda/(2 \cdot NA)$. However, since it is not easy to shorten the wavelength of the reproduction light or to increase the numerical aperture of the objective lens, attempts to increase the recording density of information by devising a recording medium or a reproduction method have been taken. However, in recent years, in particular, in the case of an optical disc recording medium, various attempts to increase the information recording density, regardless of this wavelength and NA, have been proposed.

For example, Japanese Laid-open Patent Application No. Hei 6-290496 discloses a technology (super resolution reproduction technology) for improving reproduction resolution beyond the detection limit determined by the above-mentioned wavelength and the above-mentioned numerical aperture of the objective lens by displacing domain walls approaching a light beam for reproduction one after another and by detecting this displacement of the domain walls (the DWDD system). In the reproduction system using this DWDD, crosstalk from adjacent tracks can be reduced, since a signal is read by a super resolution operation owing to the displacement of domain walls. This indicates that a DWDD disc has a potential power capable of attaining an optical disc recording medium having a track density higher than those of conventional recording media. In conventional recording media, such as DVD-R and DVD-RW, if the track pitch is increased, crosstalk from the adjacent tracks causes a problem; hence, the limit of the track pitch becomes a track pitch about 1.4 times as large as the limit of optical resolution, that is, $\lambda/(2 \cdot NA)$. With this amount of track pitch, the push-pull signal from grooves can be obtained. As described above, in the conventional optical disc that does not use the super resolution effect, the limit of the track pitch restricted by crosstalk is nearly equal to the limit of the track pitch at which a tracking error signal is obtained; hence, they are well balanced. However, when the super resolution reproduction technology, such as DWDD, is used, crosstalk from adjacent tracks can be reduced, whereby track density can be improved higher than those of conventional media.

However, when this track density is improved, the distance between the recording tracks decreases; this causes close writing, that is, the adjacent tracks are erased during recording. In order not to cause this close writing, it is reported that recording in grooves is advantageous (Lecture No. TuA1 at Optical Data Storage Topical Meeting, 2000). However, if the track density is improved by using only grooves which are less affected by close writing as recording tracks, the pitch of the grooves becomes small, and the groove pitch exceeds the optical resolution, whereby no tracking error signal can be obtained securely.

In order to solve this problem, a system is disclosed wherein a data recording region is spaced from a tracking control region (in Japanese Patent Application No. 2000-188200 and PCT/JP01/05232 invented by the same inventors as those of the present application). This corresponds to the sample servo system wherein a tracking control signal is generated from sample servo pits shared by adjacent tracks. By this system, an optical disc having a high track density is attained while recording in grooves is attained.

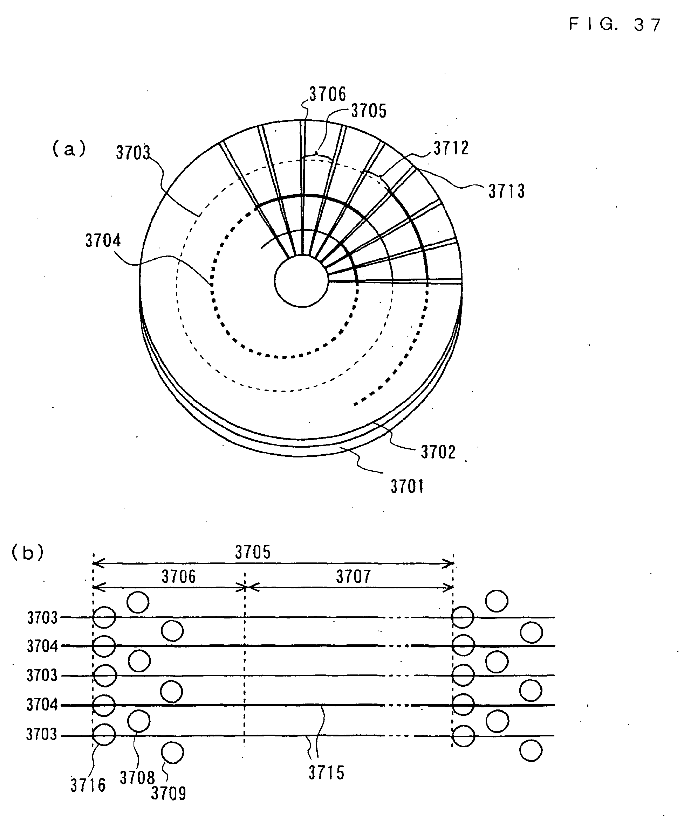

FIG. 37 shows the structure of a conventional example of an optical disc of a flat plate type (having no groove portions or inter-groove portions).

The portion (a) of FIG. 37 shows the schematic overall configuration of a conventional example of a magneto-optical disc.

In the portion (a) of FIG. 37, numeral 3701 designates an optical disc substrate, numeral 3702 designates a recording film, numeral 3703 designates a first recording track, numeral 3704 designates a second recording track adjacent to the first recording track, numeral 3705 designates a segment obtained by dividing the first recording track 3703 and the second recording track 3704 into 1280 pieces, and numerals 3706 and 3713 designate pre-pit regions (pre-format regions).

The pre-pit regions 3706 and 3713 each have a clock pit 3716, a first wobble pit 3708 and a second wobble pit 3709.

As shown in the figure, each of the first recording track 3703 and the second recording track 3704 is a spiral region wherein the pre-pit region 3713 is used as a starting point and an ending point; in the case when the spiral recording track is traced from the inner circumference to the outer circumference of the magneto-optical disc, the second recording track 3704 ends at the pre-pit region 3713, and the first recording track 3703 starts at the position (the pre-pit region 3713) wherein the second recording track 3704 ends.

In the portion (a) of FIG. 37 for explaining the format configuration of the magneto-optical disc, the first recording track 3703 and the second recording track 3704 adjacent to each other are shown so as to be significantly magnified in comparison with the overall size of the magneto-optical disc.

The portion (b) of FIG. 37 is a schematic magnified view showing one segment 3705.

In the portion (b) of FIG. 37, the segment 3705 has the pre-pit region 3706 and a data recording region 3715 having a length of 3707.

The pre-pit region 3706 has the clock pit 3716 used as a positional reference in the direction of the recording track of the optical disc, the first wobble pit 3708 for detecting a tracking signal and the second wobble pit 3709.

One of the first wobble pit 3708 and the second wobble pit 3709 is disposed so as to be displaced from the center line of the recording track by a 1/2 track pitch in the inner circumferential direction of the disc, and the other is disposed so as to be displaced from the center line of the recording track by a 1/2 track pitch in the outer circumferential direction of the disc.

In the conventional example of the magneto-optical disc, the first wobble pit 3708 and the second wobble pit 3709 for tracking control in conformity with the sample servo system are shared with adjacent recording tracks.

The first recording track 3703 and the second recording track 3704 being different in tracking polarity (the wobble pits 3708 and 3709 are positioned at the left and right of the extension line of the recording track or positioned conversely at the right and left thereof) are formed alternately in every other circuit.

The conventional example of the magneto-optical disc has the recording tracks 3703, 3704, etc. formed spirally, and each of the recording tracks 3703, 3704, etc. is divided into 1280 segments 3705 by the pre-pit regions 3706 provided radially (in the radial direction of the magneto-optical disc).

The pre-pit regions 3706 of the respective segments are provided at equiangular intervals, have equiangular regions and are aligned in the radial direction of the magneto-optical disc.

All the pre-pit regions 3706 have similar shapes, and the respective pre-pits are disposed at relatively identical positions in the pre-pit regions.

Hence, in the case when represented by angular coordinates having an origin at the center of the magneto-optical disc, the pre-pit regions are provided at every 360 degrees/1280 pieces = 0.28125 degrees on the magneto-optical disc, regardless of the distance from the origin to the position of the recording track.

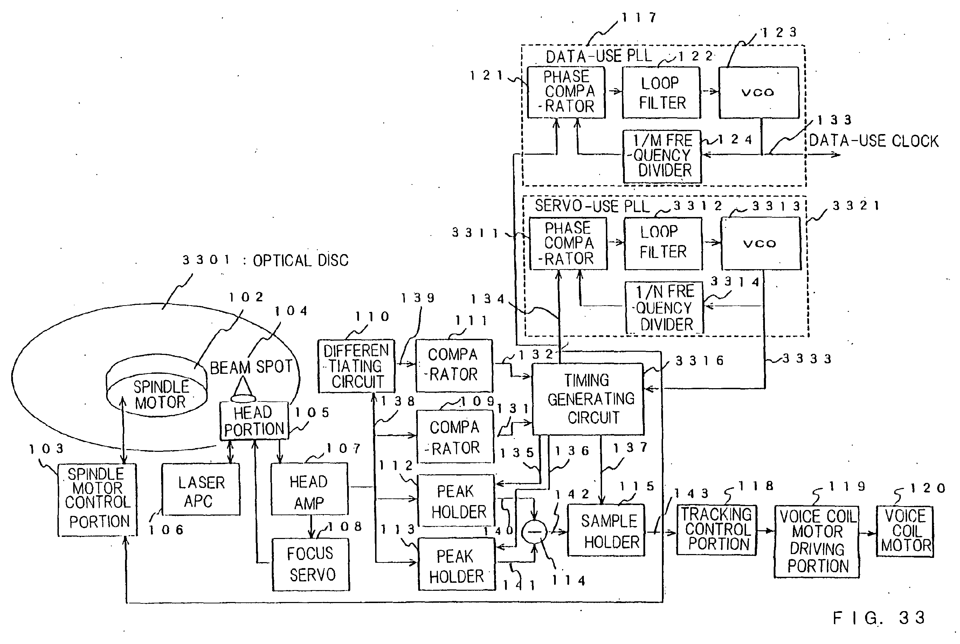

FIG. 33 is a view showing the configuration of a conventional optical disc control apparatus in conformity with the CAV (Constant Angular Velocity) system. The control apparatus of FIG. 33 controls the optical disc of FIG. 37.

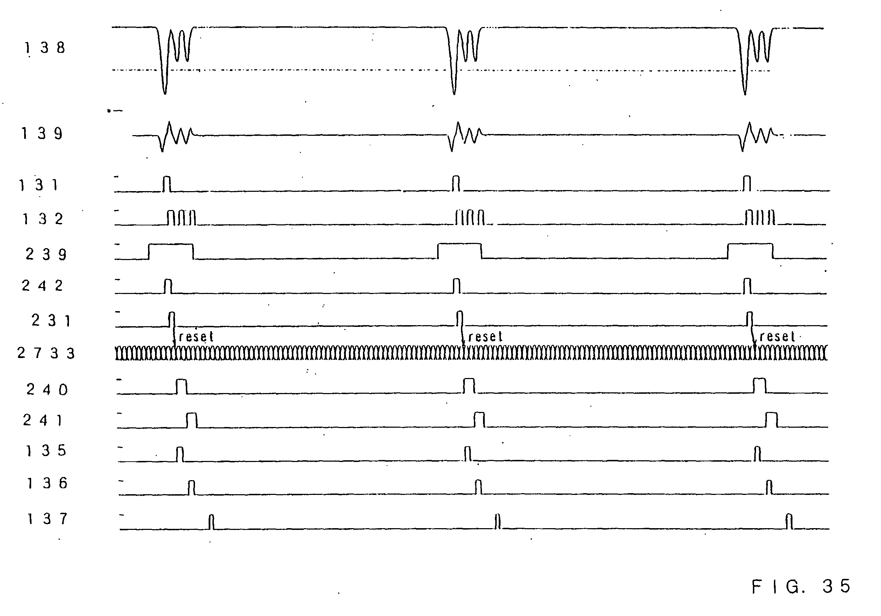

In FIG. 33, numeral 3301 designates an optical disc on which data is recorded, numeral 102 designates a spindle motor for rotating the optical disc 3301 at a constant rotation speed, numeral 103 designates a spindle motor control portion for driving the spindle motor 102, numeral 104 designates a beam spot wherein light is gathered at the magnetic recording layer on the optical disc 3301, numeral 105 designates a head portion including a laser, an optical pickup, a photoreceptor, etc., numeral 106 designates a laser APC (Auto Power Control) circuit, numeral 107 designates a head amp, numeral 108 designates a focus servo circuit, numerals 109 and 111 designate comparators, numeral 110 designates a differentiating circuit, numerals 112 and 113 designate peak holders, numeral 114 designates a subtracter, numeral 115 designates a sample holder, numeral 118 designates a tracking control portion, numeral 119 designates a voice coil motor driving portion, numeral 120 designates a voice coil motor, numeral 3316 designates a timing generating circuit, numeral 117 designates a data-use PLL (Phase Lock Loop) circuit, and numeral 3321 designates a servo-use PLL circuit. FIG. 35 shows a timing chart for main signals.

The head amp 107 receives a reflected light amount signal output from the head portion 105 and amplifies the signal and outputs a reproduction signal 138. The reproduction signal 138 is input to the comparator 109, the differentiating circuit 110 and the peak holders 112 and 113.

The comparator 109 compares the reproduction signal 138 with a predetermined threshold value 601 (FIG. 35) in terms of magnitude and outputs an output signal 131 (binarized reproduction signal) which is the result of the comparison. The output signal, which is the result of the comparison, includes pre-pit signals corresponding to the pre-pits formed on the optical disc and the like.

The differentiating circuit 110 differentiates the reproduction signal 138 and outputs a differentiated reproduction signal 139.

The comparator 111 receives the differentiated reproduction signal 139, compares the differentiated reproduction signal 139 with a predetermined threshold value in terms of magnitude and outputs an output signal (binarized differentiated reproduction signal) 132 which is the result of the comparison.

The timing generating circuit 3316 receives a clock signal 3333 output from a voltage controlled oscillator (VCO) 3313, the binarized reproduction signal 131, which is the output signal of the comparator 109, and the binarized differentiated reproduction signal 132, which is the output signal of the comparator 111, and outputs a clock pit pulse signal 134, a first wobble pit signal detection signal 135, a second wobble pit signal detection signal 136 and a differential signal latch signal 137.

The peak holder 112 samples and holds the above-mentioned reproduction signal 138 by using the first wobble pit signal detection signal 135 (output at the position of the first wobble pit 3508) and detects, holds and outputs the peak value (the first wobble pit signal) 140 of the reproduction signal 138. The peak holder 113 samples and holds the reproduction signal 138 by using the second wobble pit signal detection signal 136 (output at the position of the second wobble pit 3509) and detects, holds and outputs the peak value (the second wobble pit signal) 141 of the reproduction signal 138.

The subtraction circuit 114 carries out subtraction between the first wobble pit signal 140 and the second wobble pit signal 141, and outputs a differential signal 142 which is the result of the subtraction.

The sample holder 115 holds the differential signal 142 by using the latch signal 137 and outputs a tracking error signal 143 which is the held signal.

The tracking control portion 118 receives the tracking error signal 143, generates a control output signal that makes the tracking error signal smaller, and outputs the control output signal.

The data-use PLL circuit 117 generates a data-use clock signal.

The data-use PLL circuit 117 has a phase comparator 121, a loop filter 122, a VCO (Voltage Controlled Oscillator) 123 and a l/m frequency divider 124.

The VCO 123 is a voltage controlled oscillator having a variable range of about ±10%. A data-use clock signal 133, which is the output signal of the VCO 123, is used as a clock signal for data recording to the data recording region 3515 and a clock signal for data reproduction from the data recording region 3515. The l/m frequency division signal of the data-use clock signal 133 is phase-locked to the clock pit pulse signal 134.

The servo-use PLL circuit 3321 generates a servo-use (control) clock signal.

The servo-use PLL circuit 3321 has a phase comparator 3311. a loop filter 3312, a VCO 3313 and a 1/n frequency divider 3314.

The VCO 3313 is a voltage controlled oscillator having a variable range of about ±10%. A servo-use clock signal 3333, which is the output signal of the VCO 3313, is transmitted to the timing generating circuit 3316 and used as a clock signal or the like for detecting the clock pit 3716, the first wobble pit 3508 and the second wobble pit 3509. The 1/n frequency division signal of the servo-use clock signal 3333 is phase-locked to the clock pit pulse signal 134.

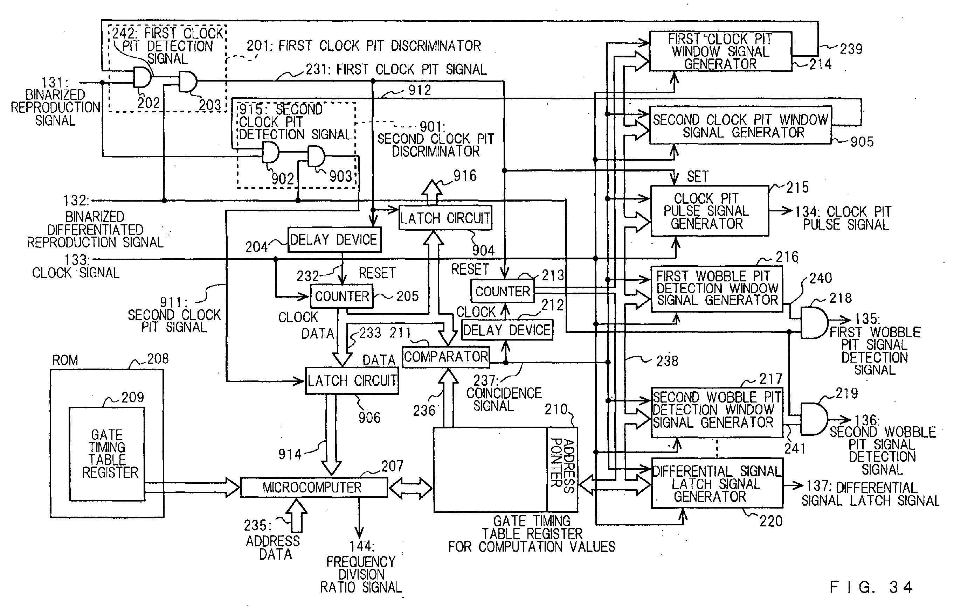

FIG. 34 is a schematic block diagram of the timing generating circuit 3316.

The timing generating circuit 3316 generates control signals for the peak holder 112 and the like.

In FIG. 34, numeral 201 designates a first clock pit discriminator, numerals 205 and 213 designate counters, numeral 209 designates a gate timing table register, numeral 211 designates a comparator, numeral 212 designates a delay device, numeral 214 designates a first clock pit window signal generator, numeral 215 designates a clock pit pulse signal generator, numeral 216 designates a first wobble pit detection window signal generator, numeral 217 designates a second wobble pit detection window signal generator, numeral 218 and 219 designate AND gates, and numeral 220 designates a differential signal latch signal generator.

An AND gate 202 receives the binarized reproduction signal 131 and a first clock pit window signal 239, and outputs a first clock pit detection signal 242 which is the AND of both signals.

An AND gate 203 receives the first clock pit detection signal 242 and the binarized differentiated reproduction signal (the differentiated signal of the binarized reflected light amount signal) 132, and outputs a first clock pit signal 231 which is the AND of both signals.

The binary counter 205 receives the first clock pit signal 231 at its reset terminal and is reset, receives the servo-use clock signal 3333 at its clock terminal, and carries out counting up. The binary counter 205 outputs a count value 233 proportional to the length of a time starting from the first clock pit signal 231.

The gate timing table register 209 is a ROM in which count values for generating various timing signals are stored at respective addresses designated by an address pointer.

The various count values exemplified in the gate timing table register 209 of FIG. 34 are indicated so as to be classified in terms of items; the count values are not indicated in ascending order.

The comparator 211 receives the count value 236 stored in the gate timing table register 209 and the count value 233 of the binary counter 205, compares both, and outputs a coincidence signal 237 that indicates as to whether both are coincident with each other or not.

The counter 213 receives the first clock pit signal 231 at its reset terminal and is reset, receives the coincidence signal 237 that is delayed by the delay device 212 by a very short time at its clock terminal, and carries out counting up each time the coincidence signal 237 changes from 0 to 1.

The delay device 212 is intended to operate so that the binary counter 213 carries out counting up slightly after the various timing signal generators, such as the first clock pit window signal generator 214, receive the coincidence signal 237.

The count value 238 of the counter 213 is input to the address pointer of the gate timing table register 209.

The gate timing table register 209 whose address is designated by the count value of the binary counter 213 (the count value is set at the address pointer) outputs count values for sequentially generating various timing signals by using the first clock pit signal 231 as the starting point (the count value is 0 at the starting point).

The first clock pit window signal generator 214, the clock pit pulse signal generator 215, the first wobble pit detection window signal generator 216, the second wobble pit detection window signal generator 217, the differential signal latch signal generator 220, etc. generate various timing signals.

The first wobble pit detection window signal generator 216 includes count values N3 and N4 ($N3 < N4$).

The first wobble pit detection window signal generator 216 receives the count value 238, the coincidence signal 237 and the clock signal 3333, and outputs a first wobble pit detection window signal 240. When the count value 238 is coincident with the count value N3 and when the coincidence signal 237 (the count value 233 is coincident with the count value 236 of the gate timing table register 209) is input, the first wobble pit detection window signal 240 changes from 0 to 1.

When the count value 238 is coincident with the count value N4 and when the coincidence signal 237 having a value of 1 is input, the first wobble pit detection window signal 240 changes from 1 to 0.

The first wobble pit detection window signal 240 comprises pulses that rise and have a constant time width so that the time required when the optical pickup passes over the first wobble pit 3508 is put between the pulses.

The AND gate 218 receives the first wobble pit detection window signal 240 and the binarized differentiated reproduction signal 132, and outputs the first wobble pit signal detection signal 135.

Similarly, the second wobble pit detection window signal generator 217 and the AND gate 219 output the second wobble pit signal detection signal 136.

Similarly, the first clock pit window signal generator 214 generates the first clock pit window signal 239 which is a constant signal. The first clock pit window signal is input to the AND gate 202, whereby the binarized reproduction signal 131 generating at times other than the time width of the window signal is eliminated, and the first clock pit signal 231 being proper is discriminated.

Similarly, the clock pit pulse signal generator 215 (having the count value N2) receives the first clock pit signal 231, the count value 238, the coincidence signal 237 and the clock signal 3333, and outputs the clock pit pulse signal 134 which is a constant signal.

The clock pit pulse signal 134 is the phase lock reference signal of the data-use PLL 117 and input to the phase comparator 121.

In addition, the clock pit pulse signal 134 is the phase lock reference signal of the servo-use PLL 3321 and input to the phase comparator 3311.

The peak holder 112 receives the first wobble pit signal detection signal 135 and the reproduction signal 138, and holds the peak of the reproduction signal 138 at the timing of the first wobble pit signal detection signal 135. The reproduction signal whose peak is held is the reproduction signal of the first wobble pit 3508.

The peak holder 113 receives the second wobble pit signal detection signal 136 and the reproduction signal 138, and holds the peak of the reproduction signal 138 at the timing of the second wobble pit signal detection signal 136. The reproduction signal whose peak is held is the reproduction signal of the second wobble pit 3509.

The differential signal latch signal generator 220 outputs a differential signal latch signal in accordance with a similar method.

The differential signal latch signal is input to the sample holder 115. The sample holder 115 samples and holds the differential signal 142 at the input timing of the differential signal latch signal.

In a disc apparatus in conformity with the CAV operation, by using a ZBR (Zoned Bit Recording) technology wherein the recording bit rate of recording data is raised as the head portion (for example, an optical pickup) moves from the inner circumference to the outer circumference, the shortest recording mark length can be maintained nearly constant in the range of the inner circumference to the outer circumference of the disc.

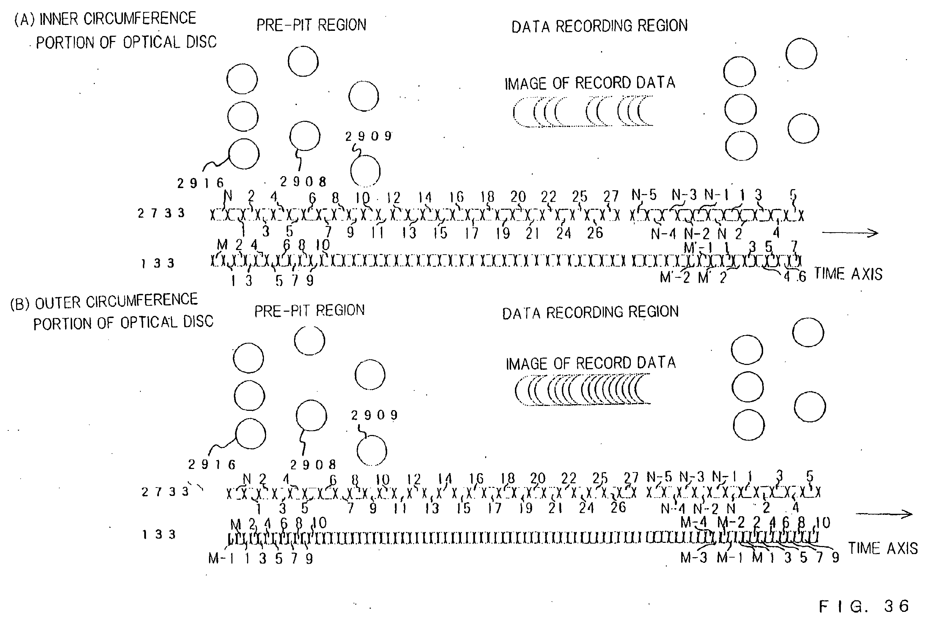

FIG. 36 shows the relationship among pre-pits, recording data pits, the servo-use clock signal 3333 and the data-use clock signal 133 in conformity with the CAV (Constant Angular Velocity) operation, wherein the horizontal axis is used as the time axis. The portion (a) of FIG. 36 shows the relationship at the inner circumference portion, and the portion (b) of FIG. 36 shows the relationship at the outer circumference portion

In the optical disc shown in the portion (a) of FIG. 37, the length of the pre-pit region 3506 and the length of the data recording region 3515 (a longitudinal length of the recording track) increases in the direction from the inner circumference to the outer circumference.

However, in the CAV operation, the optical disc is rotated so that its angular velocity becomes constant; therefore, the linear velocity (the relative velocity between the optical pickup and the optical disc) also increases in the direction from the inner circumference to the outer circumference.

In FIG. 36 wherein the time axis is used as the horizontal axis, at the inner circumference portion (the portion (a) of FIG. 36) and the outer circumference portion (the portion (b) of FIG. 36), the clock pit 3516, the first wobble pit 3508 and the second wobble pit 3509 are shown at the same positions.

In the range from the inner circumference to the outer circumference of the optical disc, the servo-use clock signal 3333 has a constant frequency, and has the same waveform at the inner circumference portion (the portion (a) of FIG. 36) and the outer circumference portion (the portion (b) of FIG. 36).

Depending on the position of the optical pickup on the optical disc (at each zone divided depending on the distance in the radial direction), a CPU rewrites the value of the frequency division ratio m of the l/m frequency divider. The value of m increases in the direction from a zone in the inner circumference portion to a zone in the outer circumference portion, and the shortest recording mark length is almost constant in all zones.

In FIG. 36 wherein the time axis is used as the horizontal axis, the frequency of the data-use clock signal 133 is higher and the time length of recording data is shorter at the outer circumference portion (the portion (b) of FIG. 36) than at the inner circumference portion (the portion (a) of FIG. 36).

In the conventional optical disc apparatus, the oscillation frequency of the VCO 3313 changes depending on the rotation speed of the optical disc, the first wobble pit detection window signal generator 216 and the like count the clock signal (the output signal of the VCO 3313) and output a signal having a constant count value. In the case when the rotation speed of the conventional optical disc apparatus was changed, the oscillation frequency of the VCO 3313 was changed in proportion to the rotation speed.

However, when attaining the ZCLV (Zoned CLV) and CLV (Constant Linear Velocity) systems having a nearly constant transfer rate by using the above-mentioned conventional sample servo optical disc, a big problem was caused. Hence, in the conventional sample servo system, the ZCAV system was used to improve the recording density (Japanese Laid-open Patent Application No. Hei 5-314664, Japanese Laid-open Patent Application No. Hei 8-115571, etc.).

This system is intended to improve the recording density by rotating the disc at a constant rotation speed, by dividing the disc into a plurality of zones, and by changing the recording frequency among the zones. However, in a digital apparatus for recording/reproducing digital video signals, digital audio signals, etc., input data is generally input continuously at a constant data rate or output data is generally output continuously at a constant data rate. Therefore, as the drive system of the recording medium for recording/reproducing digital video signals and the like, the CLV system wherein recording or reproduction is carried out at a constant data rate or the ZCLV system wherein recording or reproduction is carried out at a nearly constant data rate is preferable to the CAV system wherein the data rate changes as the optical pickup moves from the inner circumference to the outer circumference. In the ZCLV system, the data recording region of a recording medium is divided into a plurality of zones depending on the distance in the radial direction of the recording medium, the recording medium is rotated in conformity with the CAV system in each zone, and the rotation speed in conformity with the CAV system is made different in different zones. The rotation speed in a zone of the outer circumference is lower than that in a zone of the inner circumference, whereby recording or reproduction can be carried out at nearly constant data rate in the range from the inner circumference to the outer circumference.

In addition, in the case of the ZCAV system wherein data is recorded by modulating a magnetic field, a problem of increasing power consumption also occurs. In the ZCAV system, the recording frequency is required to be changed depending on the inner/outer circumference of the disc. This frequency increases in the direction to the outer circumference of the disc. The magnetic head and the drive circuit for generating the recording magnetic field are required to securely obtain performance satisfactorily generating the maximum frequency at the outer circumference. When driving the magnetic head at a high frequency, the inductance of the magnetic head is required to be decreased. In order to decrease the inductance of the magnetic head, the number of turns of the winding of the magnetic head is required to be decreased, whereby the magnetic field generation efficiency of the magnetic head is lowered. As described above, the power consumption of the magnetic head and the circuit for generating the magnetic field increases in proportion to the maximum frequency required to be generated; hence, even in the case of carrying out driving at a low frequency at the inner circumference of the disc, power consumption similar to that for carrying out driving at a frequency corresponding to that at the outer circumference of the disc is required. In the case when a portable apparatus is assumed in particular, the ZCLV system is more advantageous than the ZCAV system in power consumption.

However, as described with respect to the conventional technology, in the case of an optical disc in conformity with the sample servo system, PLLs are required to generate a recording clock and to generate a tracking signal from sample servo pits. In the conventional sample servo optical disc, since clock pits and wobble pits are formed radially at constant angles, when the disc is rotated at a constant rotation speed, the clock of the PLL has a constant frequency and is completely synchronized with the clock pits and the wobble pits, regardless of the position of the pickup on the disc. In order to stably carry out clock synchronization in the conventional optical disc as described above, the CAV and ZCAV systems wherein the rotation speed is constant have been used. When the clock pits and the wobble pits are synchronized with the PLL clock, the tracking control signal can be easily generated from the wobble pits as described with respect to the conventional example.

However, in the case when the optical disc in conformity with the sample servo system is used in the ZCLV system, a big problem occurs in generating a tracking error signal. In the case of the ZCLV system, the rotation speed changes among zones obtained by dividing the disc in the radial direction. Hence, even if the rotation speed changes, the PLL clock is required to always secure a synchronous relationship with the pits on the disc. If this synchronization is lost, tracking error generation cannot be carried out. However, in the case when access from the inner circumference to the outer circumference is assumed, the rotation speed of the disc is required to be changed nearly depending on the radius ratio in the ZCLV system. When a seek time is assumed to be 40 ms, the frequency changes two or more times in 40 ms (it is assumed that the radius of the outermost circumference divided by the radius of the innermost circumference is > 2). The PLL for sample servo is a closed loop wherein on the basis of about 1000 to 1500 clock pits provided on the disc, the phase difference between the PLL clock and the clock pits is extracted, and the phase is locked to the clock pits. The gain intersection of the PLL is required to be sufficiently lower than the sampling frequency of the clock pits. The gain intersection is usually about 100 to 150 times as high as the rotation frequency of the disc, and cannot be set at a frequency higher than this. Therefore, when seek at about 200 ms is assumed, the frequency changes twice or more in 200 ms; hence, a considerably large phase error occurs transiently, whereby the synchronization between the PLL clock and the pits is shifted. Therefore, wobble pit detection becomes impossible transiently. For this reason, it was difficult to attain the ZCLV format by using sample servo.

Furthermore, in order to attain high-speed access, it is advantageous to adopt a swing arm type used for a hard disk drive and the like, instead of a traverse motor for transferring the optical pickup in the radial direction of the optical disc. However, when the transfer system of the swing arm is used, the seek locus of the optical pickup becomes a circular form, instead of a form in the radial direction of the optical disc; hence, the detection phase of the clock pit signal detected by the optical pickup from the optical disc having clock pits arranged in the radial direction is changed greatly. In this case, the PLL also causes a great phase error, and wobble pit detection becomes impossible transiently. This was a cause of being unable to use the transfer system of the swing arm in the conventional sample servo optical disc system and being unable to attain high-speed seek.

Furthermore, in the case of the sample servo system, the clock of the PLL is also used as the clock for data recording. This PLL clock is generated by carrying out frequency division of 1000 to 2000 corresponding to the number of pits to be recorded in a segment and by comparing with the reference pits on the disc. Therefore, the VCO constituting the PLL is controlled depending on error information fed back at every 1000 to 2000 clocks; however, since no error information is available in the period of 1000 to 2000 clocks, stable oscillation with no frequency change is required in this period.

In order to attain the ZCLV system in the conventional sample servo system, since the rotation speed of the motor changes depending on the radius ratio at the inner and outer circumferences of the disc, the PLL clock also changes depending on this ratio. Therefore, the lock range of the PLL for pit detection is required to be made identical to the ratio between the radius of the data recording region of the outermost circumference and the radius of the data recording region of the innermost circumference. Generally, the ratio of the radius of the data recording region of the outermost circumference : the radius of the data recording region of the innermost circumference is two or more. In addition, in order to use the PLL clock as the clock for recording, a stable PLL that oscillates stably with no frequency change is required in the period of 1000 to 2000 clocks. It was difficult to attain a PLL that has a lock range of twice or more and oscillates stably in the period of 1000 to 2000 clocks. This made the attainment of a sample servo disc in conformity with the ZCLV system difficult.

In consideration of the above-mentioned problems, the present invention is intended to provide an optical disc being capable of detecting a tracking control signal in conformity with the ZCLV and CLV systems, although the optical disc conforms to the sample servo system.

DISCLOSURE OF THE INVENTION

The present invention is significantly characterized by having a configuration wherein tracking error information can be detected from pit windows generated by a clock being asynchronous with the positions of pit signals or from pit signals A/D-sampled by the above-mentioned asynchronous clock even when a PLL clock is not securely synchronized with pits on a disc.

By using this kind of configuration, the PLL clock for recording is not required to be synchronous with the pits, whereby the clock frequency for recording becomes nearly constant even when the rotation speed of a disc in conformity with the ZCLV system or the CLV system changes. Hence, the clock for recording, which is required to have high accuracy, can be formed by a PLL with a VCO having a narrow frequency variable range, and its stabilization can be attained. With this configuration, contradictory issues, that is, the generation of a stable recording clock and the extraction of pit signals (a tracking error signal and the like) at a given rotation speed, are solved, whereby the ZCLV system can be attained.

In order to specifically attain the detection of tracking error information asynchronously, the optical disc apparatus in accordance with the present invention has a configuration described below.

The tracking error signal generating apparatus in accordance with the present invention measures the ratio of a plurality of physical amounts (for example, the mutual ratio or the like between pre-pits in terms of angle, length or period) formed on a disc-shaped information recording medium, that is, a constant value independent of the rotation speed, and computes other angles or the like by using the value of one measured physical amount (for example, one angle, length or period between pre-pits), thereby generating the detection signal of a first wobble pit signal and the detection timing signal of a second wobble pit signal.

The present invention has an action capable of attaining a tracking error signal generating apparatus having an inexpensive and simple configuration for a disc-shaped information recording medium driven in conformity with a given system, such as the CLV system or the ZCLV system, and the configuration is capable of detecting a tracking error signal at a given rotation speed, thereby being similarly applicable also to a sample servo disc conforming to the conventional CAV system.

The optical disc apparatus in accordance with the present invention will be described below specifically.

A first invention of the present invention is a tracking error signal generating apparatus for a disc-shaped information recording medium, comprising a reproduction portion of outputting a reproduction signal including information of a first clock pit, a first wobble pit and a second wobble pit formed on the disc-shaped information recording medium; a clock pit signal detection portion of detecting a first clock pit signal which is the reproduction signal of the above-mentioned first clock pit from the above-mentioned reproduction signal from the above-mentioned reproduction signal; a first clock pit signal interval measurement portion of measuring the time interval between two adjacent signals of the above-mentioned first clock pit signals and of outputting a first clock pit signal interval value which is the measured value; a computation portion of receiving the above-mentioned first clock pit signal interval value, and of calculating and outputting a first wobble pit signal interval value and a second wobble pit signal interval value, which are values nearly proportional to the above-mentioned first clock pit signal interval value; a first wobble pit signal detection portion of detecting the above-mentioned reproduction signal at first timing derived on the basis of at least the above-mentioned first clock pit signal and the above-mentioned first wobble pit signal interval value and of outputting a first wobble pit signal level which is the detected reproduction signal; a second wobble pit signal detection portion of detecting the above-mentioned reproduction signal at second timing derived on the basis of at least the above-mentioned first clock pit signal and the above-mentioned second wobble pit signal interval value and of outputting a second wobble pit signal level which is the detected reproduction signal; and a differential signal generation portion of carrying out a subtraction between the above-mentioned first wobble pit signal and the above-mentioned second wobble pit signal and of generating a differential signal.

The present invention has advantageous effects in a control apparatus for controlling, in conformity with the sample servo system, a disc-shaped information recording medium provided with, for example, pre-pit regions positioned at equiangular intervals on circumferences (or a spiral) and aligned in the radial direction of the disc-shaped information recording medium. The pre-pit regions may be positioned in equiangular regions just as in the case of an optical disc in accordance with Embodiment 1 or may be in equal-length regions just as in the case of an optical disc in accordance with Embodiment 2.

The tracking error signal generating apparatus in accordance with the present invention measures a length in which the pit position of the clock pit signal interval value (the first clock pit, the second clock pit, etc. may be used) can be computed proportionately by using a counter operating on a PLL clock for record data. A computation value corresponding to the wobble position is obtained from the measured value of this counter by proportional computation. By detecting timing wherein this computation value coincides with the count value counted from the reference position (the clock pit position or the like) of the pits, first and second wobble pit signal detection timing signals are generated.

With this configuration, the optical disc apparatus in accordance with the present invention dynamically measures the length in which the pit position of the clock pit signal interval value (the first clock pit, the second clock pit, etc. may be used) can be computed proportionately, and dynamically calculates the pit position from the measured value by proportional computation. Since the wobble pit position is computed dynamically, wobble pit detection can be carried out even when the rotation speed changes arbitrarily; hence, the generation of a tracking error signal is possible even in the ZCLV system wherein the rotation speed changes. Furthermore, the apparatus is also applicable to the CLV system wherein rotation speed changes minutely.

In the case of attaining the ZCLV system in the conventional tracking error signal generation apparatus, its PLL cannot follow the change of the rotation speed of the motor at the time when the head portion carries out seek operation, and tracking error detection becomes impossible, resulting in a big problem. Furthermore, also in the CAV system, when the head moves along an arc during seeking, the PLL for the clock signal cannot follow the movement, whereby tracking error signal detection becomes impossible. This is because phase errors owing to the change of rotation speed are integrated and accumulated in the case of the detection system using the PLL.

The tracking error signal generating apparatus in accordance with the present invention measures a length in which the pit position of the clock pit signal interval value (the first clock pit, the second clock pit, etc. may be used) and the like can be computed proportionately on the basis of a clock signal having a constant or nearly constant frequency in a typical case, a computation value corresponding to the wobble position is obtained by proportional computation from this measured value, and a tracking error signal is detected by using the position, which is obtained by carrying out counting by this computation value from the reference position (the clock pit position or the like) of the pits on the basis of the above-mentioned clock signal, as the wobble pit position. With this configuration, the counter restarts from the reference position (the clock pit position or the like) of the pits; hence, phase errors occurring owing to the change of rotation speed, seeking, etc. are reset at the reference position of the pits. Therefore, even if a large phase error occurs owing to the change of rotation speed or the like, accurate wobble pit detection is made possible.

A second invention is a tracking error signal generating apparatus for a disc-shaped information recording medium, comprising a reproduction portion of outputting a reproduction signal including information of a first clock pit, a second clock pit, a first wobble pit and a second wobble pit formed on the disc-shaped information recording medium; a clock pit signal detection portion of detecting a first clock pit signal, which is the reproduction signal of the above-mentioned first clock pit, and a second clock pit signal which is the reproduction signal of the above-mentioned second clock pit from the above-mentioned reproduction signal; a pre-pit region interval measurement portion of measuring the time interval between the above-mentioned first clock pit signal and the above-mentioned second clock pit signal and of outputting a pre-pit region interval value which is the measured value; a computation portion of receiving the above-mentioned pre-pit region interval value, of calculating a first wobble pit position and a second wobble pit position from the above-mentioned first clock pit signal or the above-mentioned second clock pit which are values nearly proportional to the above-mentioned pre-pit region interval value, and of outputting them; a first wobble pit signal detection portion of detecting the first wobble pit signal on the basis of the above-mentioned reproduction signal and the above-mentioned first wobble pit position and of outputting the signal; a second wobble pit signal detection portion of outputting the second wobble pit signal on the basis of the above-mentioned reproduction signal and the above-mentioned second wobble pit position; and a differential signal generation portion of carrying out a subtraction between the above-mentioned first wobble pit signal and the above-mentioned second wobble pit signal and of generating a differential signal.

In the first invention, the first wobble pit signal interval value and the like are computed on the basis of the measured first clock pit signal interval value and the like; however, in the second invention, the first wobble pit signal interval value and the like are computed on the basis of the measured pre-pit region interval value and the like.

For this reason, the second invention has actions and effects similar to those of the first invention.

In the second invention, the length in which the pit position can be computed proportionately in the first invention is used as a pre-pit region. By using the second invention, the pre-pit regions can have a constant length in the range from the inner circumference to the outer circumference of the disc. Conventionally, the pre-pit regions were required to be arranged radially in order to lock the pit positions by using a PLL. When the pits are arranged radially, the pre-pit regions become longer at the outer circumference, whereby the format efficiency lowers and the capacity of the disc decreases. By using the optical disc apparatus in accordance with the second invention, even when the pre-pit regions have a constant length in the range from the inner circumference to the outer circumference, the tracking error signal can be detected, whereby an optical disc having high format efficiency can be attained.

A third invention is a tracking error signal generating apparatus comprising a window signal generation portion of generating a time-related window signal for detecting the clock pits (including the first and second clock pits) and a level judgment portion for clock pit signals. A time-related window is used to predict the detection position of the next clock pit from the detection position of a clock pit; a time-related detection window is thus provided near the predicted position. The reliability of the detection can be improved higher than that in the case when the clock pits are detected at all positions. Furthermore, the level judgment portion is used to predict the detection level of the next clock pit from the detection level of a clock pit; a level detection window is thus provided near the predicted level. Similarly, in the case of this level window, the reliability of the detection can be improved higher than that in the case when the clock pits at all levels are detected.

A fourth invention is a tracking error signal generating apparatus of detecting the clock pits from the time-related change state of the waveform of the clock pit signal. The time-related change state is a change having a maximal or minimal value.

The above-mentioned third and fourth inventions have an action capable of attaining a tracking error signal generating apparatus that hardly malfunctions even if the clock pit signal is dropped or deformed owing to noise, pit defects, flaws on the surface of the disc, etc. By combining the third and fourth inventions, more significant effects can be obtained.

Just as in the case of the optical disc in accordance with Embodiment 3 and the like, in a disc-shaped information recording medium (for example, an optical disc) wherein a data recording region is provided in a groove portion or an inter-groove portion (land portion) or both the groove portion and the inter-groove portion, when the head portion is moved from the groove portion or the inter-groove portion to a pre-pit region (a region provided with a first wobble pit and the like), an edge signal (a first edge signal) corresponding to a groove leading end position is generated in the reproduction signal from the information recording medium. In the first invention, the start position of the pre-pit region is identified by the first clock pit; however, the start position of the pre-pit region can be identified by using the signal (the first edge signal) generating at this groove trailing edge position, just like the first clock. In the first invention, the first wobble pit signal interval value and the like are calculated on the basis of the measured first clock pit signal interval value and the like; however, in a fifth invention, the first wobble pit signal interval value and the like are computed on the basis of the measured first edge signal interval value and the like.

The fifth invention thus has actions and effects similar to those of the first invention.

Similarly, just as in the case of the optical disc in accordance with Embodiment 3 and the like, in a disc-shaped information recording medium wherein a data recording region is provided in a groove portion or an inter-groove portion or both the groove portion and the inter-groove portion, when the head portion is moved from a pre-pit region to a data recording region, an edge signal (a second edge signal) corresponding to each groove leading end position is generated in the reproduction signal from the information recording medium. In the second invention, the end of the pre-pit region is identified by the first clock pit; however, the end of the pre-pit region can be identified by using the signal (the second edge signal) generating at this groove leading edge position, just like the second clock. In the second invention, the first wobble pit position and the like are computed on the basis of the measured length of the pre-pit region; however, in a sixth invention, the first wobble pit signal position and the like are computed on the basis of the length (the time interval between the first edge signal and the second edge signal of the groove portion and the like) and the like of the pre-pit region measured by using the first edge signal and the second edge signal.

As a result, the sixth invention has actions and effects similar to those of the second invention.

A seventh invention is a tracking error signal generating apparatus comprising a window signal generation portion of generating a time-related window signal for detecting the first and second edge signals and a level judgment portion for the first and second edge signals. A time-related window is used to predict the detection positions of the next first and second edge signals from the detection positions of the first and second edge signals; the time-related detection window is thus provided near the predicted positions. The reliability of the detection can be improved higher than that in the case when the first and second edge signals are detected at all positions. Furthermore, the level judgment portion is used to predict the detection levels of the next first and second edge signals from the detection levels of the first and second edge signals; a level detection window is thus provided near the predicted levels. Similarly, in the case of this level window, the reliability of the detection can be improved higher than that in the case when the first and second edge signals at all levels are detected.

An eighth invention is a tracking error signal generating apparatus of detecting the groove edge positions from the time-related change state of the waveform of the edge signal. The time-related change state is a change having a monotone increasing state or a monotone decreasing state. In the eighth invention, the above-mentioned first edge signal or the above-mentioned second edge signal preferably has the center timing value of the above-mentioned five or more clock timing values in the monotone increasing or monotone decreasing signal.

Just as in the cases of the above-mentioned third and fourth inventions, the seventh and eighth inventions have an action capable of attaining a tracking error signal generating apparatus that hardly malfunctions even if the first and second edge signals are dropped or deformed owing to noise, defects, flaws on the surface of the disc, etc. By combining the seventh and eighth inventions, more significant effects can be obtained.

In a ninth invention, the detection operation in the above-mentioned first to eighth inventions is started by focus-on; hence, the above-mentioned detection operation is prevented from malfunctioning owing to a reproduction signal reproduced when focus control is not operating. The tracking error signal generating apparatus in accordance with the present invention is configured so as to predict the next detection position from the position and the level of the clock pit (groove edge) detected the last time; hence, once a wrong clock pit position and a wrong clock pit level are set by a wrong reproduction signal when the focus control is not operating, the operation becomes unstable. The ninth invention is intended to prevent this malfunction. In the ninth invention, "focus-on" designates a state wherein the radius of the optical beam on the recording film becomes minimal by controlling the distance from the recording film of the optical disc to the objective lens of the optical pickup for recording or reproduction.

A tenth invention is a disc-shaped information recording medium control apparatus comprising a reproduction portion of outputting a reproduction signal including information of a first clock pit and a second clock pit; a clock pit signal detection portion of detecting a first clock pit signal, which is the reproduction signal of the above-mentioned first clock pit, and a second clock pit signal which is the reproduction signal of the above-mentioned second clock pit from the above-mentioned pre-pits reproduction signal; and a pre-pit region interval measurement portion of measuring the time interval between the above-mentioned first clock pit signal and the above-mentioned second clock pit signal and of outputting a pre-pit region interval, which is the measured value, wherein the disc-shaped information recording medium is rotated so that the time interval between the pre-pit regions becomes a constant value.

The tenth invention has advantageous effects in the case of a disc-shaped information recording medium provided with, for example, pre-pit regions positioned at equal intervals on circumferences (or a spiral) and aligned in the radial direction of the disc-shaped information recording medium. In the conventional sample servo optical disc, since the pre-pits are arranged radially, the CLV control cannot be carried out if the radial position cannot be detected. However, the disc-shaped information recording medium control apparatus in accordance with the tenth invention carries out rotation control so that the time interval of the pre-pit regions becomes constant, whereby the CLV control is made possible without detecting the radial position. Furthermore, the CAV control is also made possible by using the first or second clock pits, just as in the case of the conventional example.

With this configuration, the present invention has an action capable of attaining a control apparatus that can control the rotation of a disc-shaped information recording medium having high accessibility in conformity with the CLV system.

An 11th invention has advantageous effects in the case of a disc-shaped information recording medium wherein, for example, pre-pit regions are provided at equal intervals on circumferences (or a spiral), data recording regions are each formed of a groove or an inter-groove or both of them, and these are aligned in the radial direction of the disc-shaped information recording medium. In the above-mentioned tenth invention, the time interval of the pre-pit regions is detected from the first and second clock pits; however, in the 11th invention, the time interval of the pre-pit regions is detected from the first and second edge signals, and rotation control is carried out so that the time interval becomes constant. Hence, effects similar to those of the tenth invention can be obtained.

Another invention is a tracking error signal generating apparatus for a disc-shaped information recording medium in accordance with the fifth or sixth invention, wherein the above-mentioned edge signal detection portion comprises a window signal generation portion of generating a window signal in which a first time measured from the above-mentioned first edge signal or the above-mentioned second edge signal is used as a starting point and a second time delayed further from the above-mentioned first time is used as an ending point; a peak detection portion of detecting the peak portion of the above-mentioned reproduction signal included in the above-mentioned window signal; a peak level judgment portion of making a judgment as to whether the level of the above-mentioned peak portion is in a constant range including the level of the above-mentioned first edge signal or the above-mentioned second edge signal; and an output portion of outputting the above-mentioned peak portion as the next above-mentioned first edge signal or the next above-mentioned second edge signal in the case when the level of the above-mentioned peak portion is in the constant range including the level of the above-mentioned first edge signal or the above-mentioned second edge signal.

Still another invention is a tracking error signal generating apparatus for a disc-shaped information recording medium in accordance with the above-mentioned other invention, wherein the above-mentioned peak detection portion detects the above-mentioned reproduction signal at five or more clock timing points sequentially arranged on a time axis, and if the level of the above-mentioned reproduction signal at each clock timing point has a single maximal or minimal value on the time axis, the above-mentioned peak detection portion outputs the above-mentioned first edge signal or the above-mentioned second edge signal having an edge at the clock timing point in which the above-mentioned single maximal or minimal value is detected.

The other invention and the still other invention described above have an action capable of attaining a tracking error signal generating apparatus that hardly malfunctions even if the edge signal is dropped or deformed owing to noise, edge defects, flaws on the surface of the disc, etc. in the case when the first edge signal or the second edge signal has a waveform similar to that of the reproduction signal of the pre-pit in the first and second inventions. By combining the other invention and the still other invention described above, more significant effects can be obtained.

A further invention is a phase lock loop apparatus comprising a reproduction portion of outputting the reproduction signal of a pit, a groove or an inter-groove formed on a disc-shaped information recording medium; an A/D converter of converting the above-mentioned reproduction signal into a digital signal; an oscillator, the oscillation frequency of which is controlled by a control signal; and a phase error detector of obtaining an extreme value of an expression of nth order (n is a given even number) by interpolating the above-mentioned reproduction signal converted into the digital signal by using the above-mentioned expression of nth order and of generating the above-mentioned control signal corresponding to the error between the phase of the above-mentioned extreme value and the phase of the output signal or its frequency division signal of the above-mentioned oscillator.

The further invention has an action capable of attaining a phase lock loop apparatus that carries out locking at a proper phase even when the reproduction signal of an optical disc is digitized at a low sampling rate.

A still further invention is a tracking error signal generating apparatus comprising a wobble pit signal detection portion of detecting a first wobble pit signal and a second wobble pit signal which are the reproduction signals of a first wobble pit and a second wobble pit; an A/D converter of converting the above-mentioned first wobble pit signal and the above-mentioned second wobble pit signal into digital signals; and an error signal generation portion of obtaining an extreme value of an expression of nth order (n is a given even number) by interpolating each of the above-mentioned first wobble pit signal and the above-mentioned second wobble pit signal converted into the digital signals by using the above-mentioned expression of nth order and of generating the differential signal between the level of the above-mentioned extreme value of the above-mentioned first wobble pit signal and the level of the above-mentioned extreme value of the above-mentioned second wobble pit signal.

The still further invention has an action capable of attaining a tracking error signal generating apparatus that generates a proper tracking error signal even when the reproduction signal of an optical disc is digitized at a low sampling rate.

A different invention is a tracking error signal generating apparatus for a disc-shaped information recording medium in accordance with the first invention, the second invention, the fifth invention or the sixth invention, further comprising a period measuring device of measuring the rotation period of the disc-shaped information recording medium, wherein the above-mentioned computation portion calculates the above-mentioned first wobble pit signal interval value and the above-mentioned second wobble pit signal interval value by using only the above-mentioned first clock pit signal interval value, the above-mentioned second clock pit signal interval value, the above-mentioned first edge signal interval value or the above-mentioned second edge signal interval value included in the range estimated on the basis of the above-mentioned rotation period.

The tracking error signal generating apparatus in accordance with the different invention described above sets a range on the basis of the rotation period of the disc-shaped information recording medium, judges that the first clock pit signal interval value and the like are correct in the case when the values are within this range, and calculates the above-mentioned first wobble pit signal interval value and the above-mentioned second wobble pit signal interval value by using the interval values. If the interval values are not within this range, the values are judged as wrong values and not used. Malfunctions in which the segment period measurement is carried out at periods two or more times as high as the segment period by mistake can be prevented by this protection.

A further different invention is a tracking error signal generating apparatus for a disc-shaped information recording medium in accordance with the first invention, the second invention, the fifth invention or the sixth invention, wherein the above-mentioned computation portion calculates the above-mentioned first wobble pit signal interval value and the above-mentioned second wobble pit signal interval value on the basis of the above-mentioned first clock pit signal interval value, the above-mentioned second clock pit signal interval value, the above-mentioned first edge signal interval value and the above-mentioned second edge signal interval value obtained by averaging n (n: a given positive integer of 2 or more) measured values, and the value of the above-mentioned n in the state when the above-mentioned disc-shaped information recording medium carries out steady rotation is larger than the value of the above-mentioned n in the state when the above-mentioned disc-shaped information recording medium accelerates or decelerates.

The tracking error signal generating apparatus in accordance with the above-mentioned further different invention measures the first clock pit signal interval value and the like n times, and averages the measured values, thereby deriving a correct interval value. Furthermore, in the state when the disc-shaped information recording medium carries out steady rotation, the value of n is made larger so that a highly accurate interval value is derived; and in the state when the disc-shaped information recording medium accelerates or decelerates, the value of n is made smaller so that an interval value is derived by quickly following the rotation speed change of the disc-shaped information recording medium. As a result, a correct tracking error signal can be generated even in the states when the disc-shaped information recording medium carries out steady rotation and when it changes its speed.

In the above-mentioned explanations, the control apparatus including the tracking error signal generating apparatus in accordance with the present invention controls, for example, the voice coil motor for driving the mechanism portion for holding the head portion (for example, an optical pickup) so that the differential signal generated by the tracking error signal generating apparatus in accordance with the present invention becomes smaller.

"A disc-shaped information recording medium" designates a given recording medium having the shape of a disc (a disc shape). This includes, for example, optical discs (including a phase change optical disc and a magneto-optical disc), magnetic discs, etc.

"A pre-pit" designates a projection or a depression formed on the information recording medium. "A first clock pit" designates a pre-pit provided at constant intervals on the circumferences (or spiral) of the disc-shaped information recording medium.

"A first wobble pit" and "a second wobble pit" designate pre-pits displaced from the center line of the recording track by, for example, a 1/2 track pitch in the inner circumferential direction or the outer circumferential direction of the disc.

In this embodiment, one of two wobble pits, positioned near the clock pit, is referred to as "a first wobble pit" and the wobble pit positioned far from the clock pit is referred to as "a second wobble pit."

"A first clock pit signal" may be a reproduction signal itself or may be a binarized reproduction signal.

"A first wobble pit signal" "detected" "at first timing derived on the basis of at least the above-mentioned first clock pit signal and the above-mentioned first wobble pit signal interval value" includes, for example, a reproduction signal detected at timing delayed by the above-mentioned first wobble pit signal interval value by using the rising edge time (or the falling edge time) of the above-mentioned first clock pit signal as a starting point, and a reproduction signal detected at timing delayed by the above-mentioned first wobble pit signal interval value by using the time (for example, the rising edge or the like of another pre-pit signal) delayed by a constant time from the above-mentioned first clock pit signal as a starting point. Furthermore, the signal includes a reproduction signal detected at one sampling point delayed by the above-mentioned first wobble pit signal interval value and the reproduction signal of a peak extracted from a point delayed by the above-mentioned first wobble pit signal interval value and a plurality of sampling points (the plurality of sampling points are derived on the basis of the above-mentioned first clock pit signal and the above-mentioned first wobble pit signal interval value. For example, the detection signal of the first wobble pit signal, which is a window signal, shown in the embodiments) near the point.

"A tracking error signal generating apparatus" is an apparatus for generating the differential signal between the first wobble pit signal and the second wobble pit signal and is included in the tracking control apparatus in conformity with the sample servo system.

While the novel features of the invention are set forth particularly in the appended claims, the invention, both as to organization and content, will be better understood and appreciated, along with other objects and features thereof, from the following detailed description taken in conjunction with the drawings.

BRIEF DESCRIPTION OF DRAWINGS

FIG. 1 is a view showing the configuration of an optical disc control apparatus (including a tracking error signal generating apparatus) in accordance with Embodiment 1;

FIG. 2 is a view showing the configuration of the timing generating circuit of an optical disc tracking error signal generating apparatus in accordance with Embodiment 1;

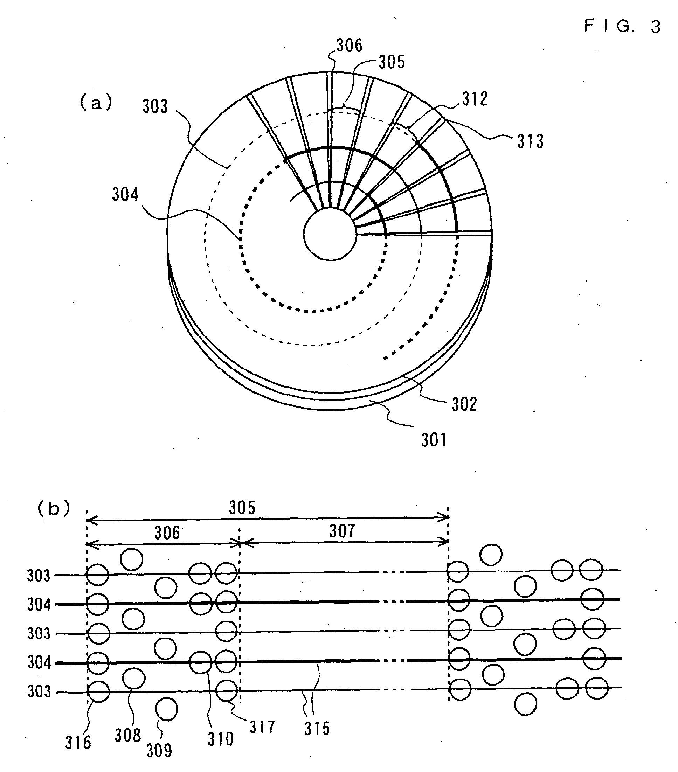

The portion (a) of FIG. 3 is a view showing the schematic overall configuration of an optical disc in accordance with Embodiment 1, and the portion (b) of FIG. 3 is a schematic magnified view showing one segment thereof;

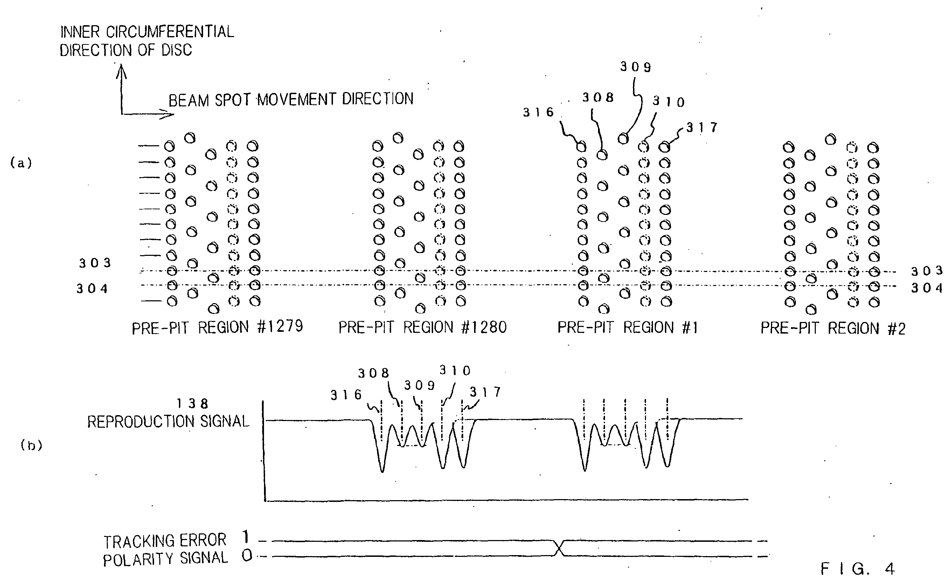

The portion (a) of FIG. 4 is a view showing the structure of the optical disc in accordance with Embodiment 1, and the portion (b) of FIG. 4 is a view showing the waveform of a reproduction signal corresponding to the structure of the optical disc;

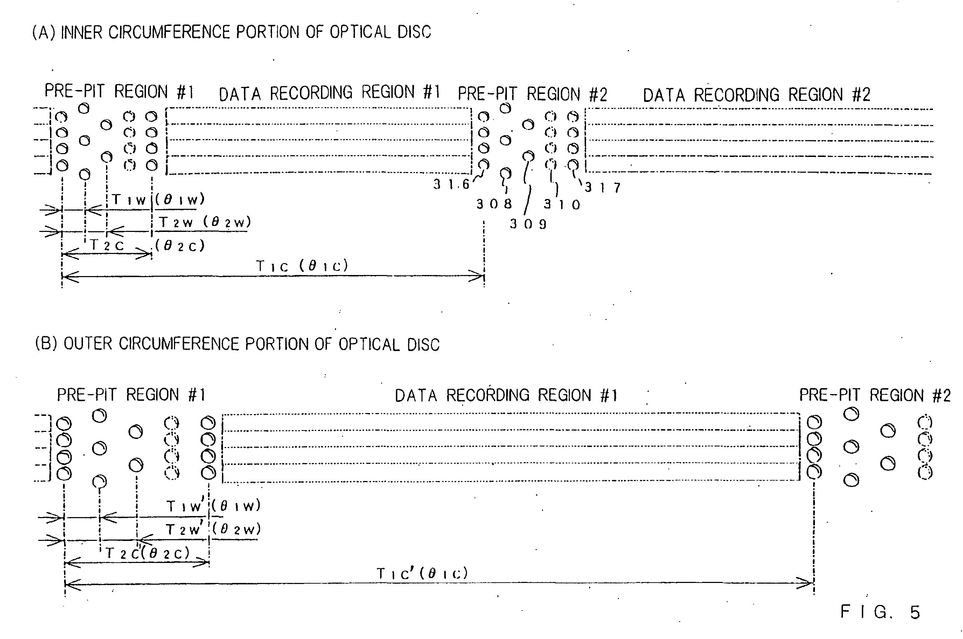

The portion (a) of FIG. 5 is a view showing the pre-pits and data recording regions in the inner circumference portion of the optical disc in accordance with Embodiment 1 driven in conformity with the CLV system, and the portion (b) of FIG. 5 is a view showing the pre-pits and data recording regions in the outer circumference portion thereof, wherein the horizontal axis is used as the time axis;

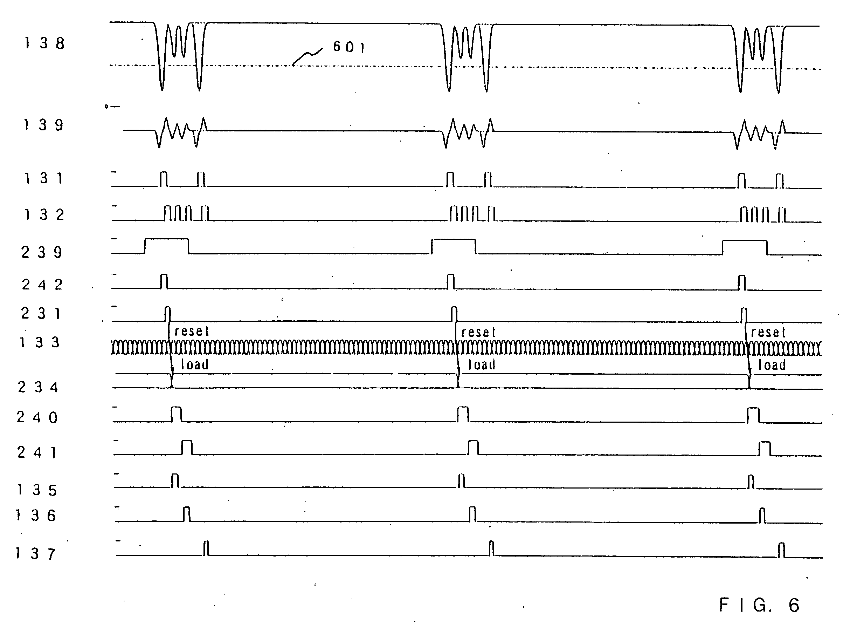

FIG. 6 is a view showing waveforms in various portions of the optical disc tracking error signal generating apparatus in accordance with Embodiment 1;

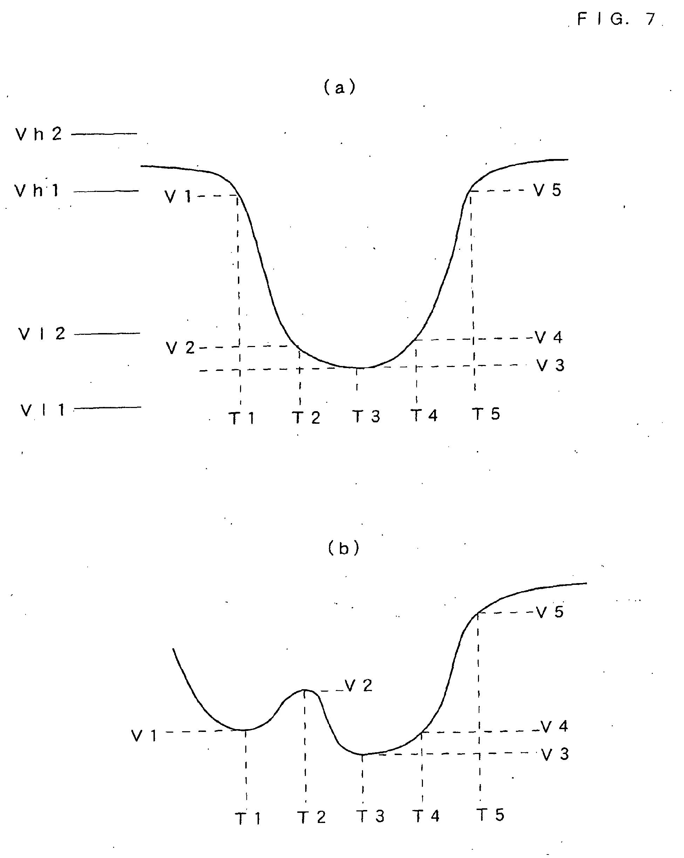

The portion (a) of FIG. 7 is a view showing the waveform of a true clock pit reproduction signal, and the portion (b) of FIG. 7 is a view showing the waveform of a false clock pit reproduction signal;

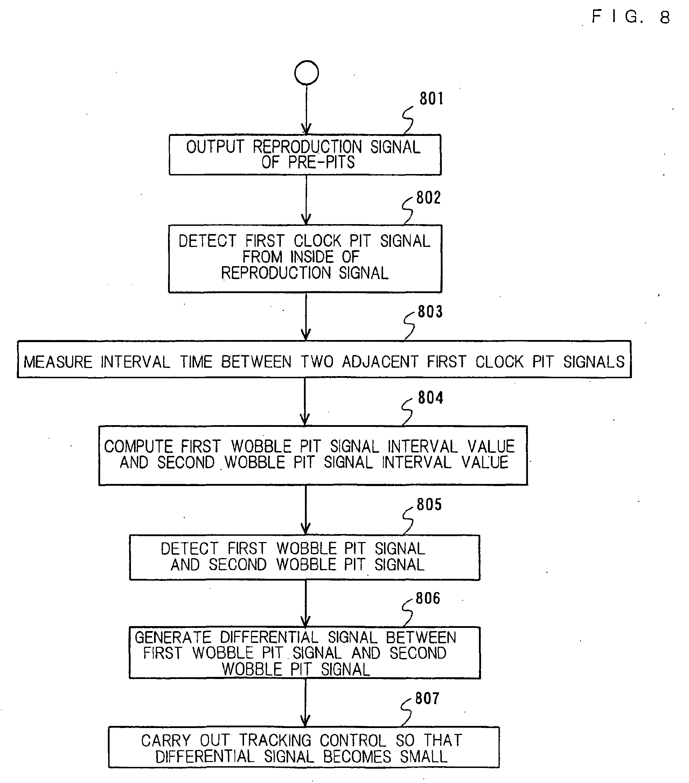

FIG. 8 is a flowchart showing an optical disc tracking error signal generating method in accordance with Embodiment 1;

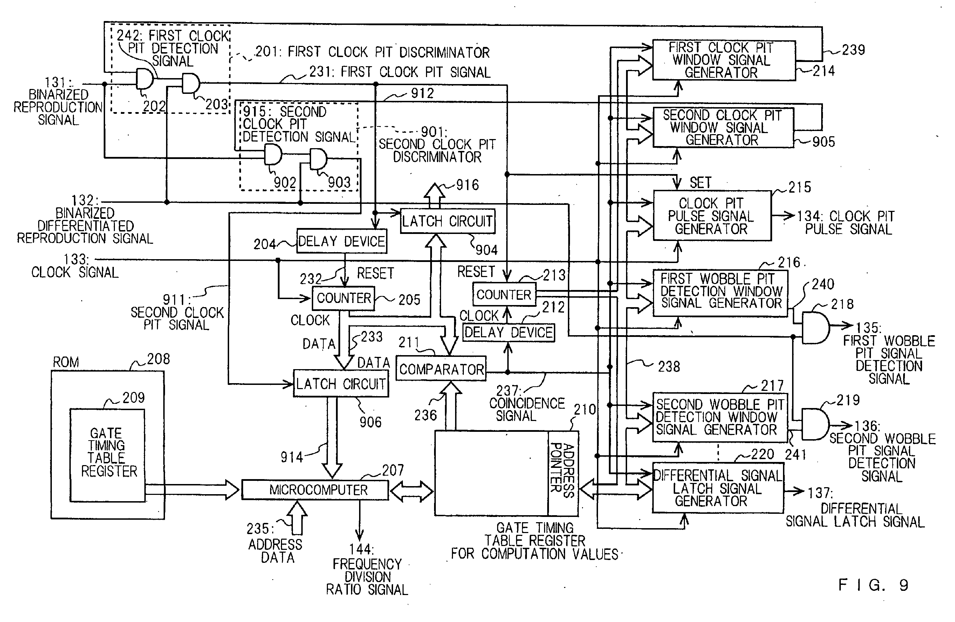

FIG. 9 is a view showing the configuration of the timing generating circuit of an optical disc tracking error signal generating apparatus in accordance with Embodiment 2;

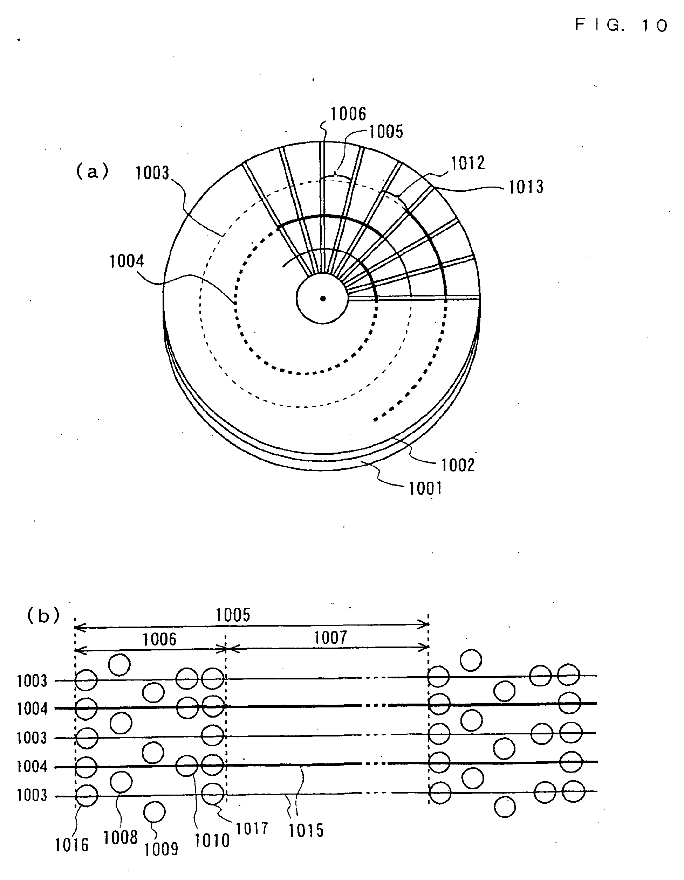

The portion (a) of FIG. 10 is a view showing the schematic overall configuration of an optical disc in accordance with Embodiment 2, and the portion (b) of FIG. 10 is a schematic magnified view showing one segment thereof;

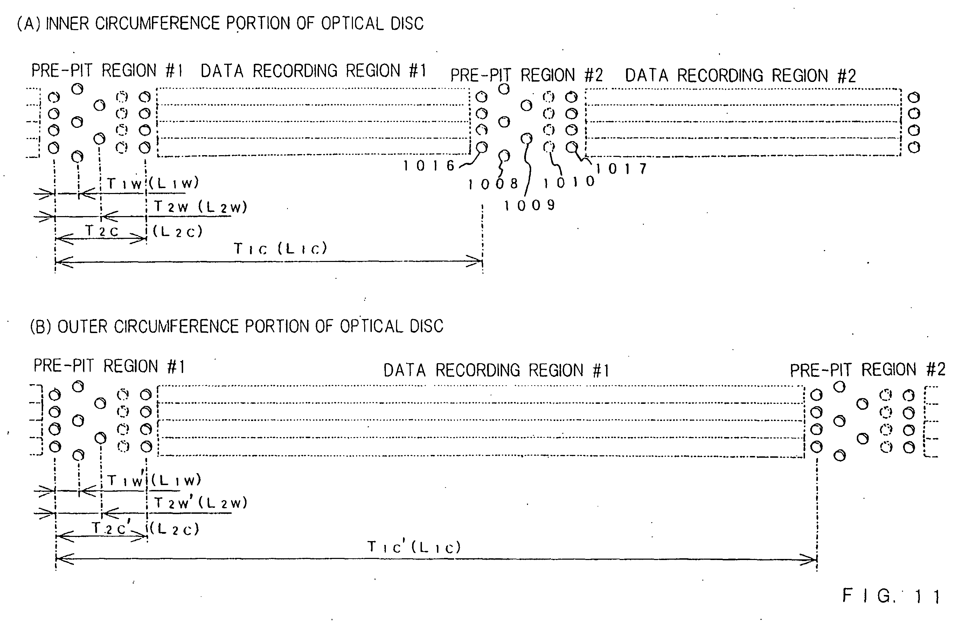

The portion (a) of FIG. 11 is a view showing the pre-pits and data recording regions in the inner circumference portion of the optical disc in accordance with Embodiment 2 driven in conformity with the CLV system, and the portion (b) of FIG. 11 is a view showing the pre-pits and data recording regions in the outer circumference portion thereof, wherein the horizontal axis is used as the time axis;

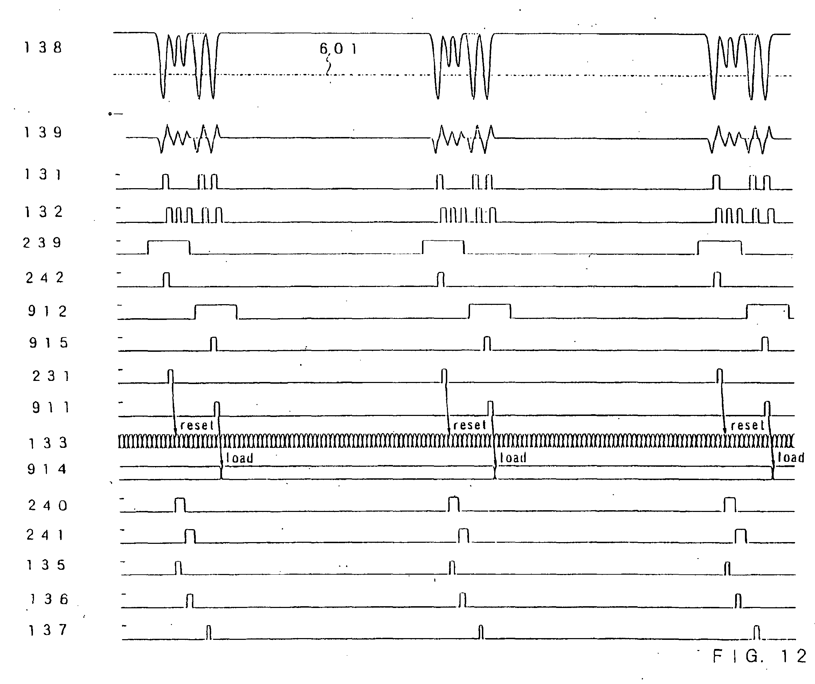

FIG. 12 is a view showing waveforms in various portions of the optical disc tracking error signal generating apparatus in accordance with Embodiment 2;

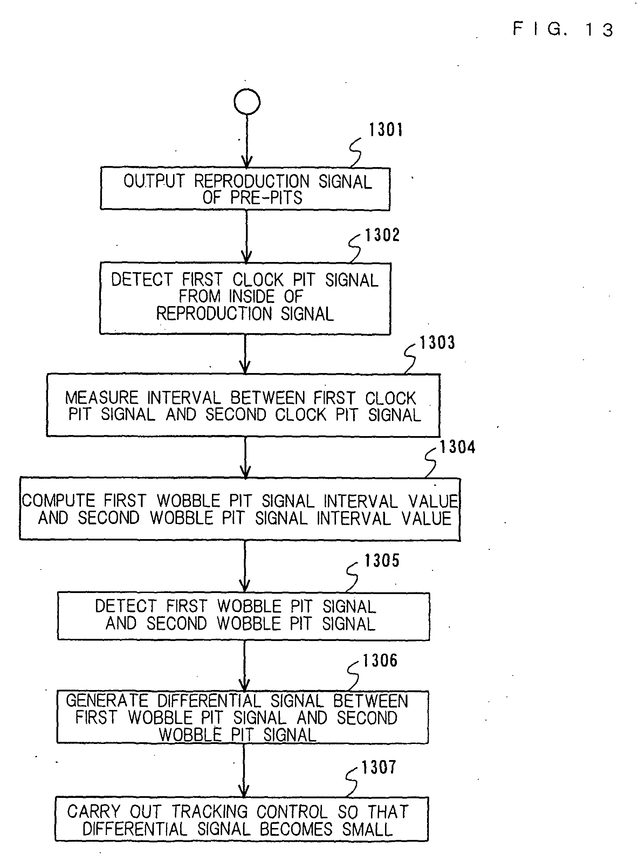

FIG. 13 is a flowchart showing an optical disc tracking error signal generating method in accordance with Embodiment 2;

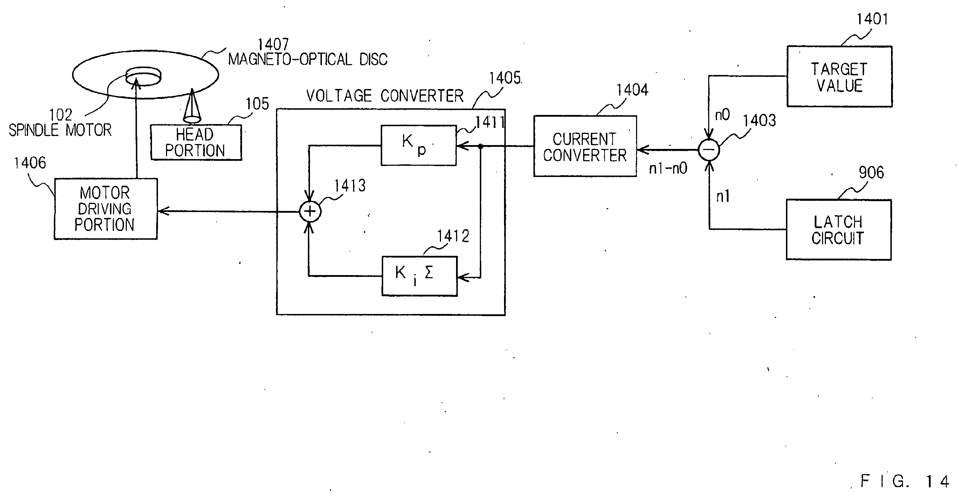

FIG. 14 is a view showing the configuration of an optical disc control apparatus in accordance with Embodiment 2;

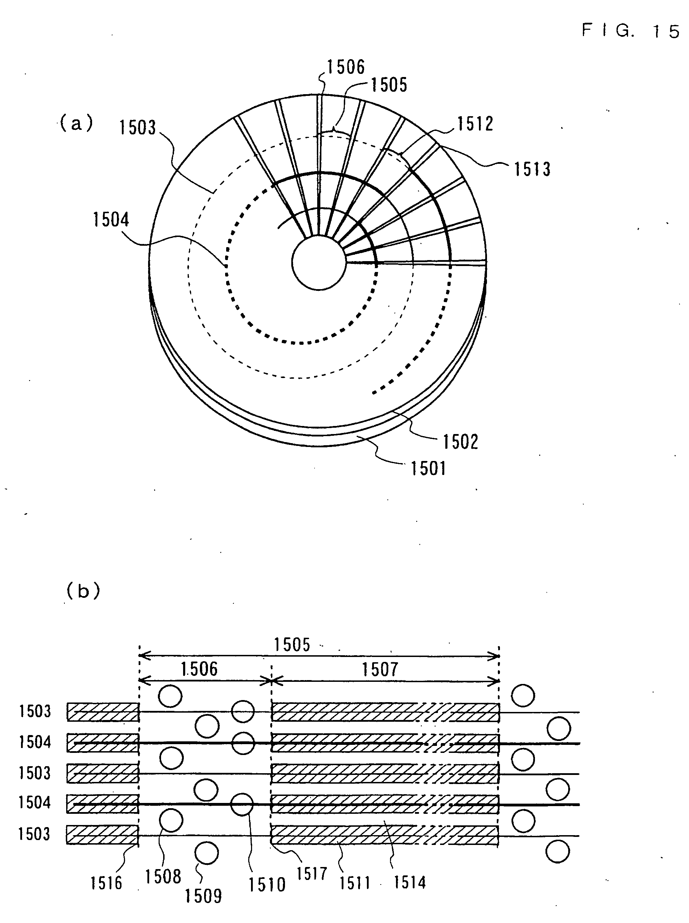

The portion (a) of FIG. 15 is a view showing the schematic overall configuration of an optical disc in accordance with Embodiment 3, and the portion (b) of FIG. 15 is a schematic magnified view showing one segment thereof;

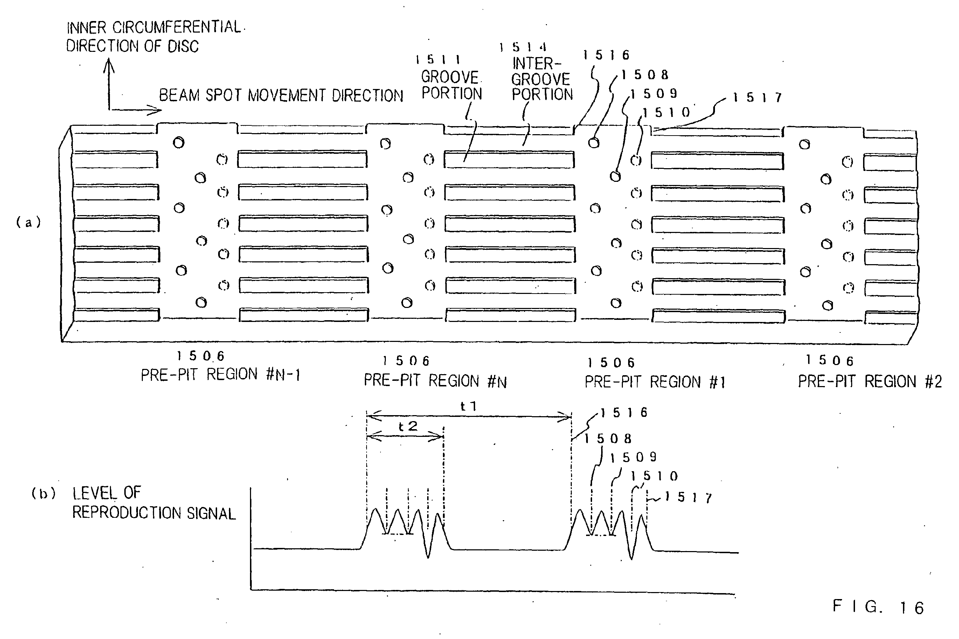

The portion (a) of FIG. 16 is a view showing the structure of the optical disc in accordance with Embodiment 3, and the portion (b) of FIG. 16 is a view showing the waveform of a reproduction signal corresponding to the structure of the optical disc;

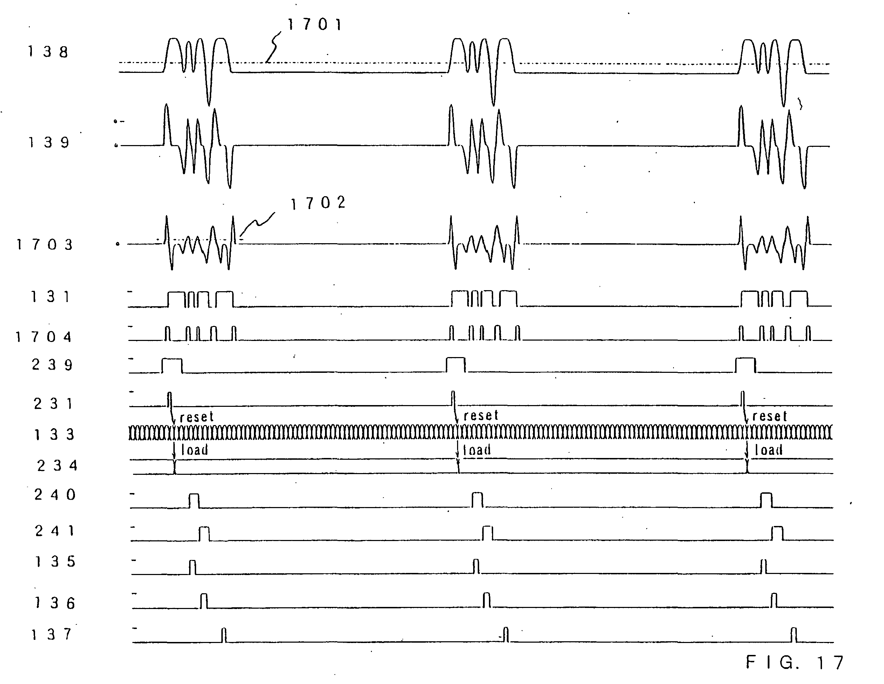

FIG. 17 is a view showing waveforms in various portions of the optical disc tracking error signal generating apparatus in accordance with Embodiment 3;

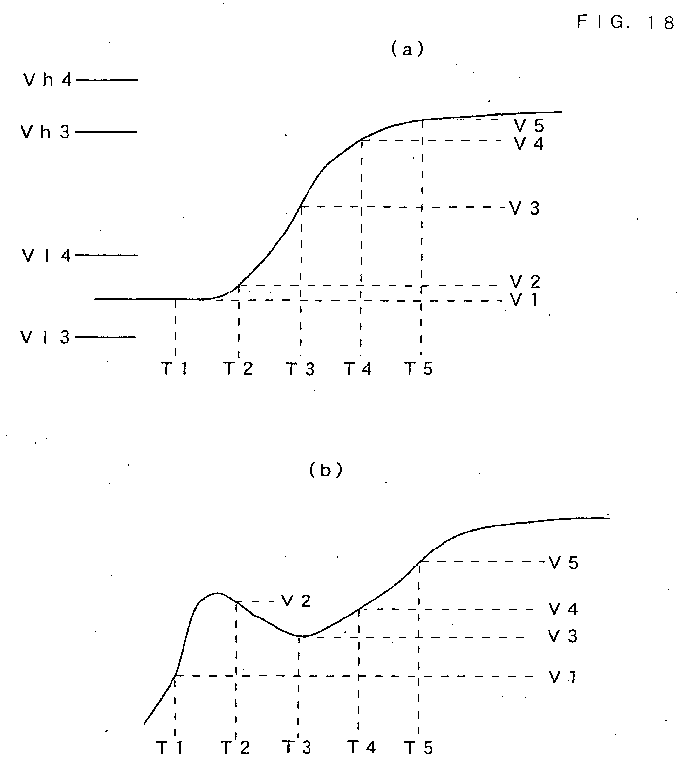

The portion (a) of FIG. 18 is a view showing the waveform of a true groove edge reproduction signal, and the portion (b) of FIG. 18 is a view showing the waveform of a false groove edge reproduction signal;

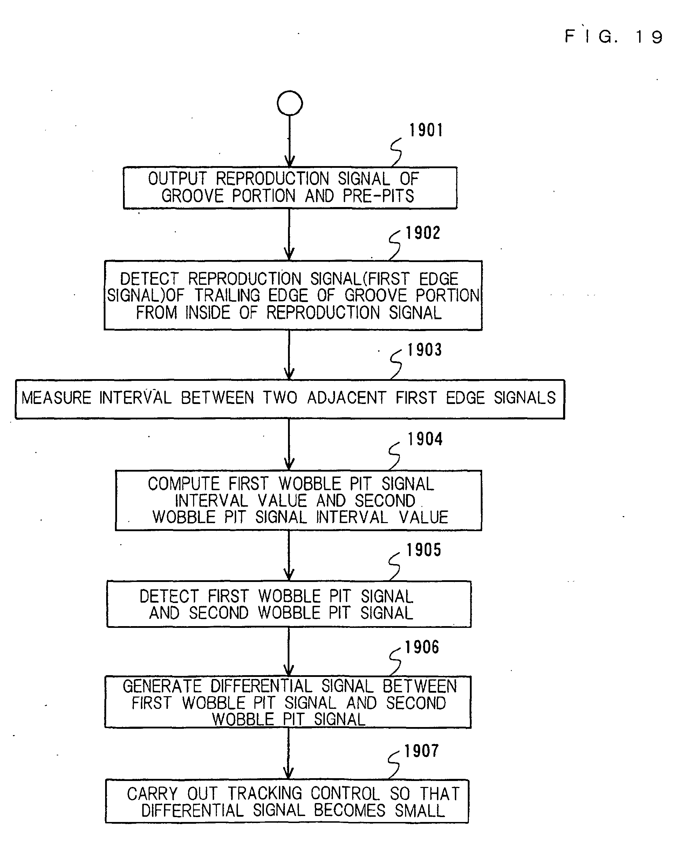

FIG. 19 is a flowchart showing an optical disc tracking error signal generating method in accordance with Embodiment 3;

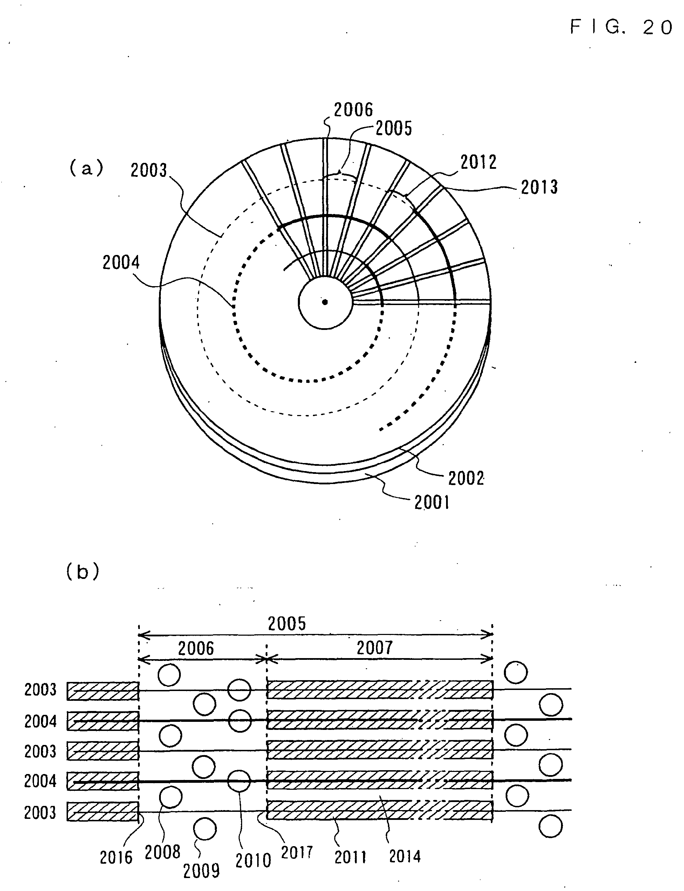

The portion (a) of FIG. 20 is a view showing the schematic overall configuration of an optical disc in accordance with Embodiment 4, and the portion (b) of FIG. 20 is a schematic magnified view showing one segment thereof;

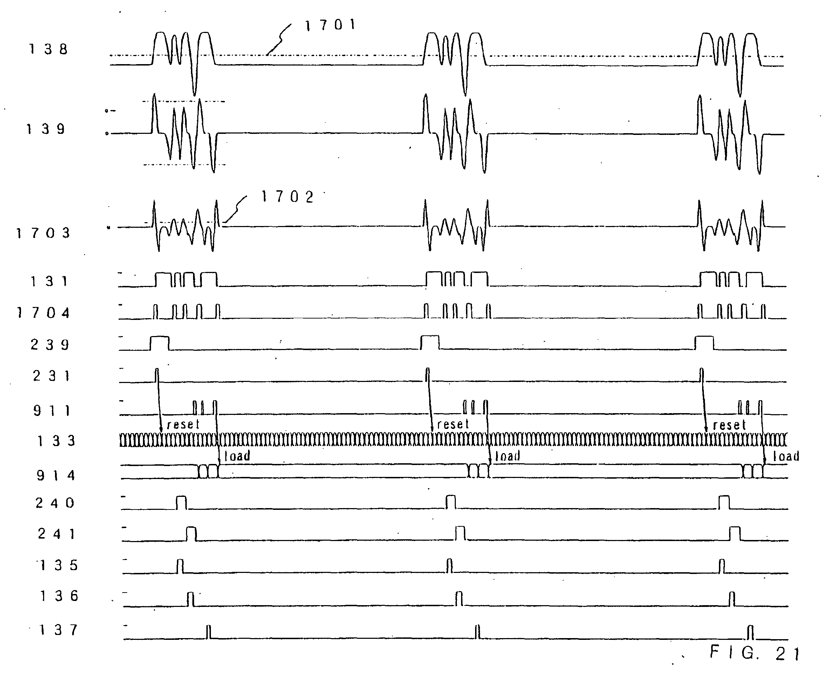

FIG. 21 is a view showing waveforms in various portions of the optical disc tracking error signal generating apparatus in accordance with Embodiment 4;

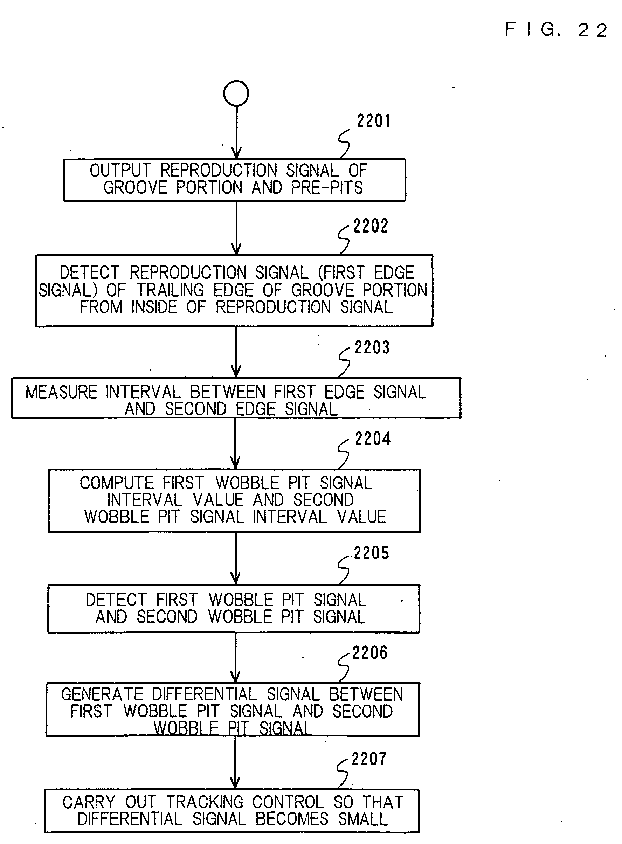

FIG. 22 is a flowchart showing an optical disc tracking error signal generating method in accordance with Embodiment 4;

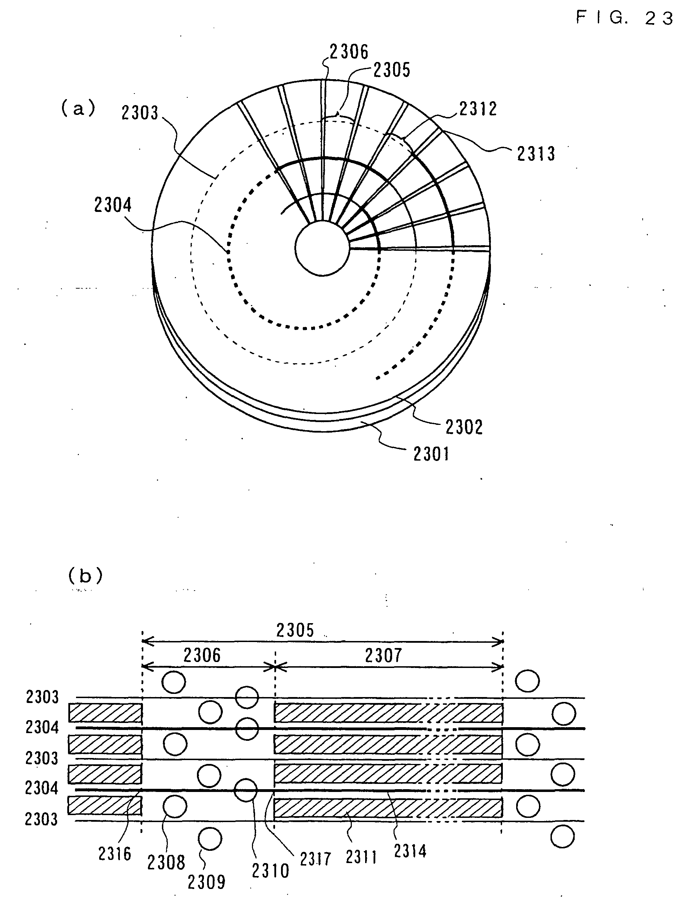

The portion (a) of FIG. 23 is a view showing the schematic overall configuration of an optical disc in accordance with Embodiment 5, and the portion (b) of FIG. 23 is a schematic magnified view showing one segment thereof;

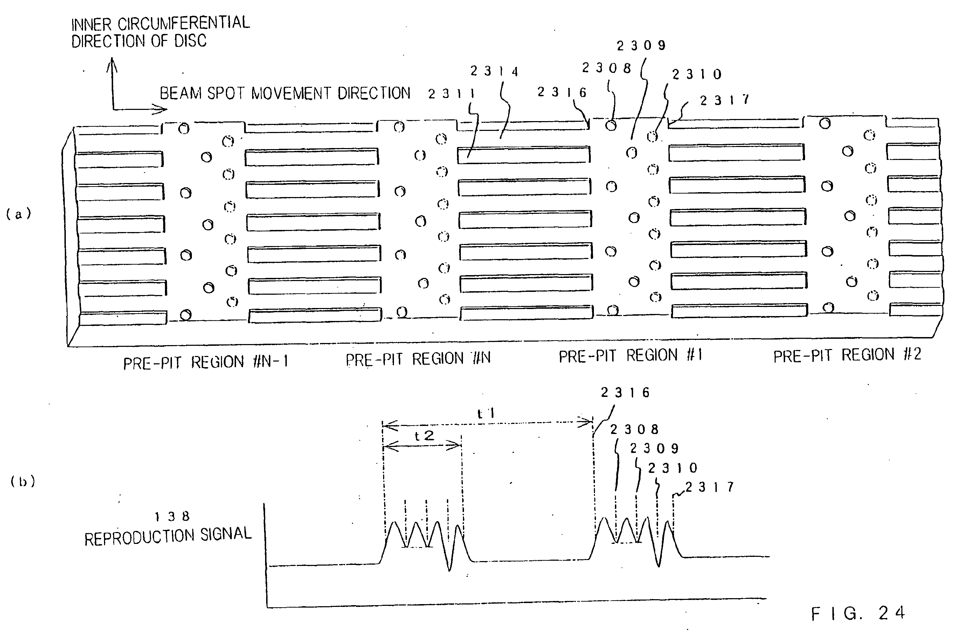

The portion (a) of FIG. 24 is a view showing the structure of the optical disc in accordance with Embodiment 5, and the portion (b) of FIG. 24 is a view showing the waveform of a reproduction signal corresponding to the structure of the optical disc;

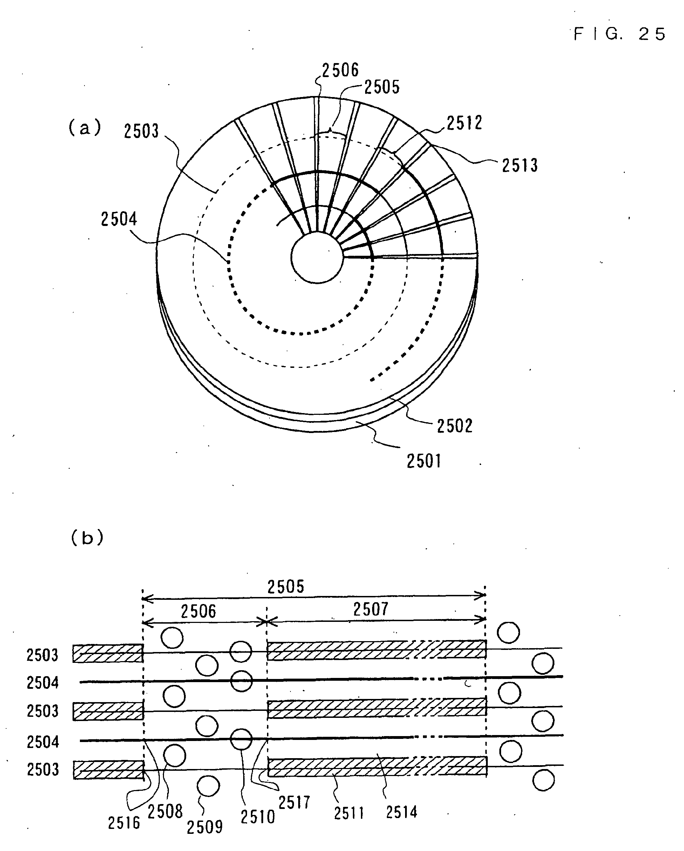

The portion (a) of FIG. 25 is a view showing the schematic overall configuration of an optical disc in accordance with Embodiment 6, and the portion (b) of FIG. 25 is a schematic magnified view showing one segment thereof;

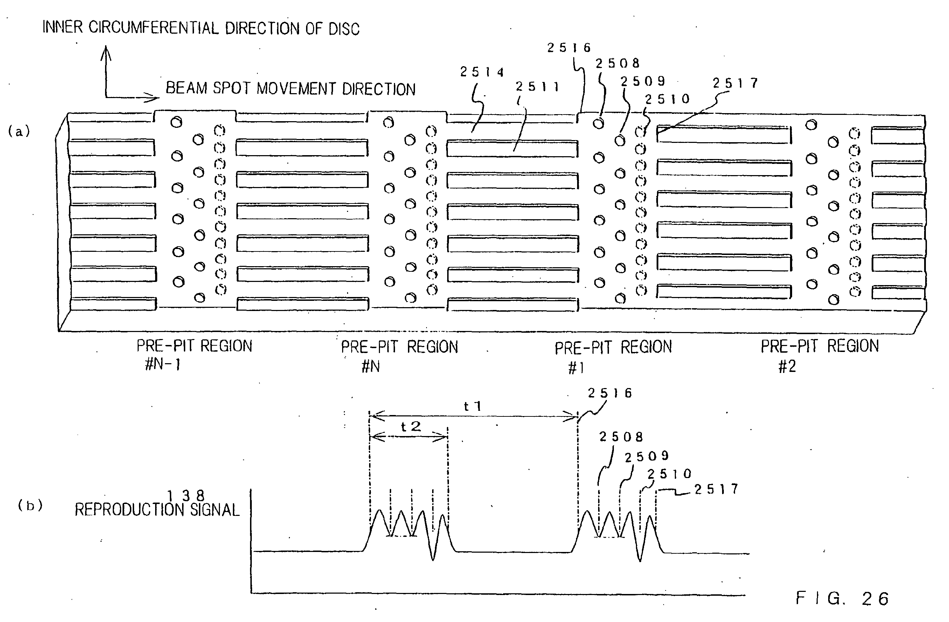

The portion (a) of FIG. 26 is a view showing the structure of the optical disc in accordance with Embodiment 6, and the portion (b) of FIG. 26 is a view showing the waveform of a reproduction signal corresponding to the structure of the optical disc;

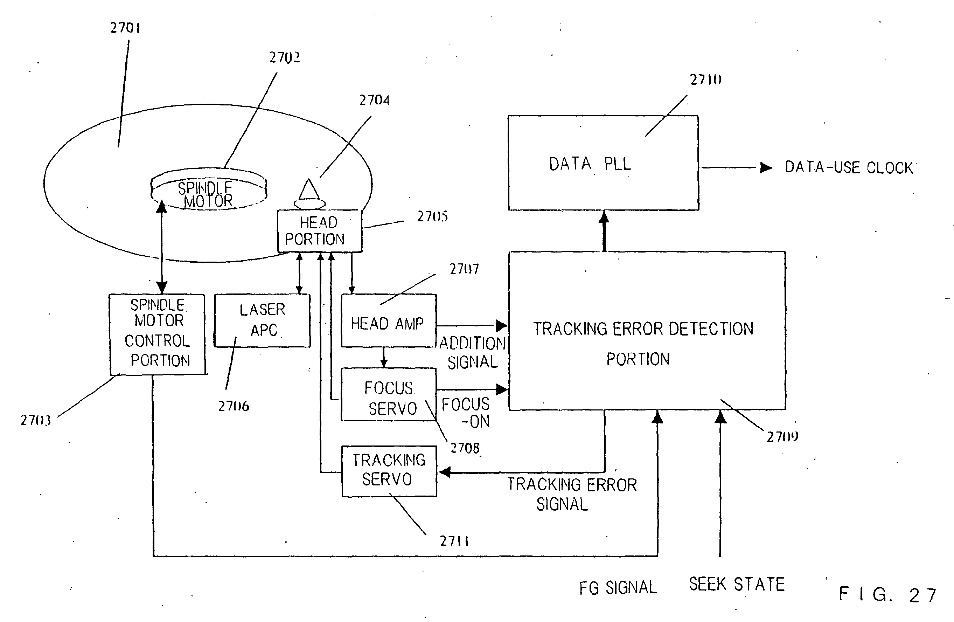

FIG. 27 is a view showing the configuration of an optical disc control apparatus (including a tracking error signal generating apparatus) in accordance with Embodiment 7;

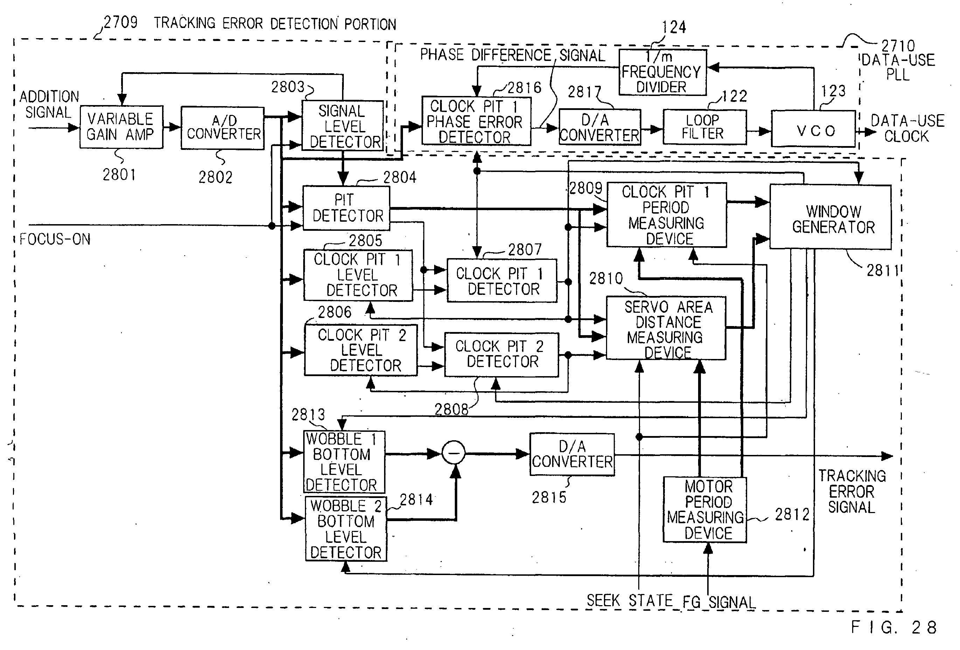

FIG. 28 is an internal block diagram showing a data-use PLL and a tracking error detection portion in accordance with Embodiment 7;

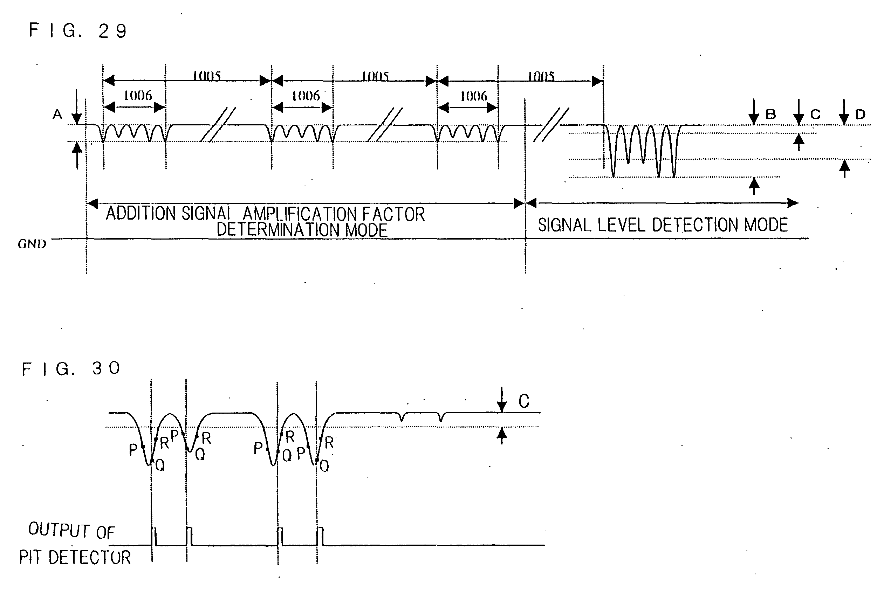

FIG. 29 is a timing chart for explaining the operation of the tracking error detection portion in accordance with Embodiment 7;

FIG. 30 is a view showing the sampling of the A/D converter of the tracking error detection portion in accordance with Embodiment 7;

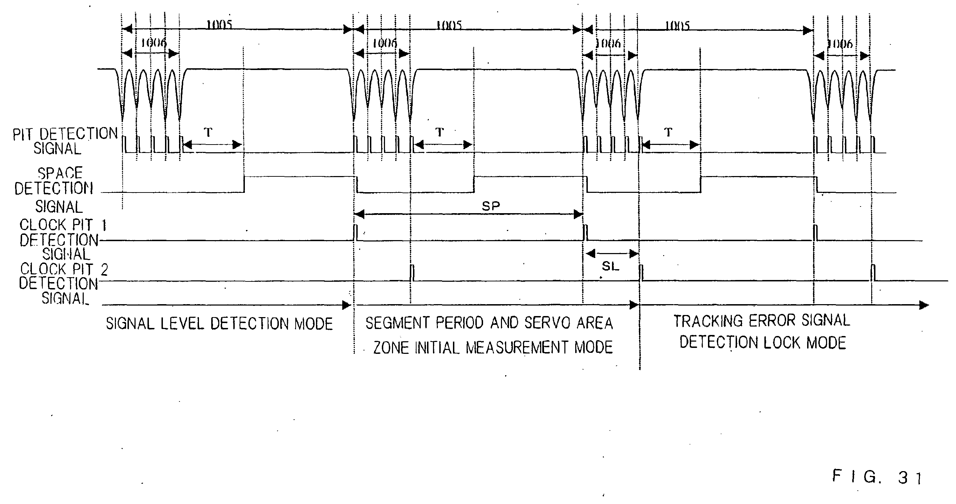

FIG. 31 is another timing chart for explaining the operation of the tracking error detection portion in accordance with Embodiment 7;

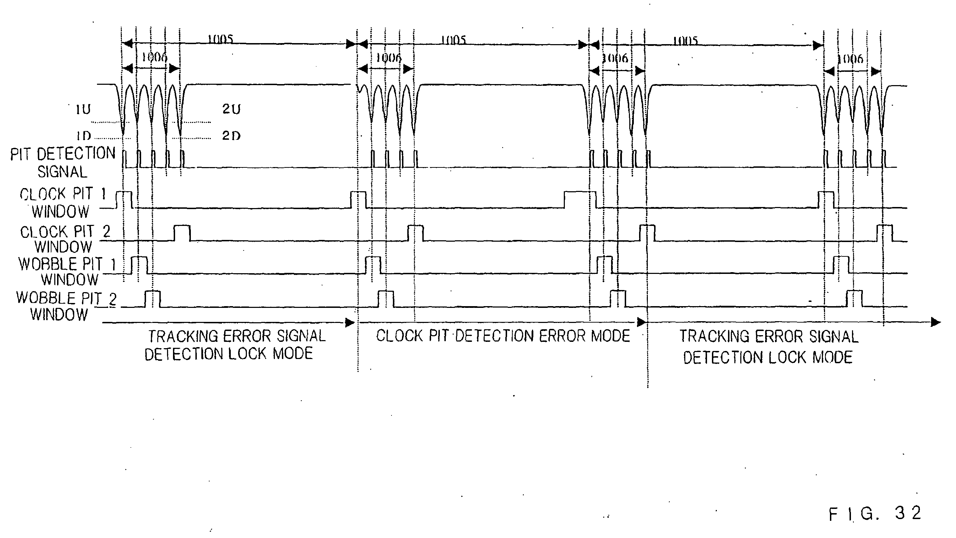

FIG. 32 is still another timing chart for explaining the operation of the tracking error detection portion in accordance with Embodiment 7;

FIG. 33 is a view showing the configuration of a conventional optical disc control apparatus (including a tracking error signal generating apparatus);

FIG. 34 is a view showing the configuration of the timing generating circuit of the conventional tracking error signal generating apparatus;

FIG. 35 is a view showing waveforms in various portions of the conventional optical disc tracking error signal generating apparatus;

The portion (a) of FIG. 36 is a view showing the relationship among the pre-pits, recording data pits, servo-use clock signal and data-use clock signal of the conventional optical disc driven in conformity with the CAV system in the inner circumference portion thereof, and the portion (b) of FIG. 36 is a view showing the relationship in the outer circumference-portion thereof, wherein the horizontal axis is used as the time axis; and

The portion (a) of FIG. 37 is a view showing the schematic overall configuration of the conventional optical disc, and the portion (b) of FIG. 37 is a schematic magnified view showing one segment thereof.

It will be recognized that some or all of the drawings are schematic representations for purposes of illustration and do not necessarily depict the actual relative sizes or locations of the elements shown.

THE BEST MODE FOR CARRYING OUT THE INVENTION

Embodiments specifically indicating the best modes for embodying the present invention will be described below together with drawings.

<Embodiment 1>

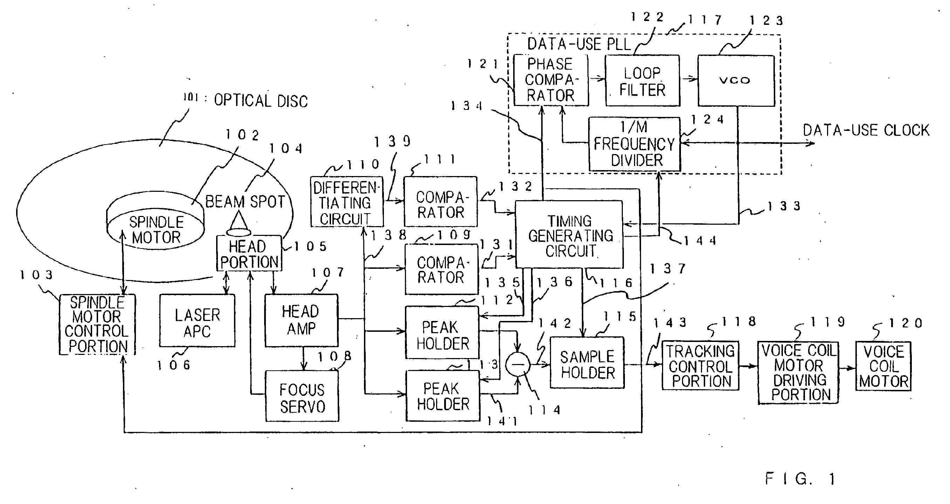

A disc-shaped information recording medium control apparatus (including a tracking error signal generating apparatus) in accordance with Embodiment 1 of the present invention will be described by using FIG. 1 to FIG. 8.

FIG. 3 shows the structure of an optical disc of a flat plate type (having no groove portions or inter-groove portions) in accordance with Embodiment 1.

The portion (a) of FIG. 3 shows the schematic overall configuration of a magneto-optical disc in accordance with Embodiment 1.

In the portion (a) of FIG. 3, numeral 301 designates an optical disc substrate, numeral 302 designates a recording film, numeral 303 designates a first recording track, numeral 304 designates a second recording track adjacent to the first recording track, numeral 305 designates a segment obtained by dividing the first recording track 303 and the second recording track 304 into 1280 pieces, and numerals 306 and 313 designate pre-pit regions (pre-format regions).

The pre-pit regions 306 and 313 have a first clock pit 316, a first wobble pit 308, a second wobble pit 309, an address pit 310 and a second clock pit 317.

As shown in the figure, each of the first recording track 303 and the second recording track 304 is a spiral region wherein the pre-pit region 313 is used as a starting point and an ending point; in the case when the spiral recording track is traced from the inner circumference to the outer circumference of the magneto-optical disc, the second recording track 304 ends in the pre-pit region 313, and the first recording track 303 starts in the position (the pre-pit region 313) wherein the second recording track 304 ends.

In the portion (a) of FIG. 3 for explaining the format configuration of the magneto-optical disc, the first recording track 303 and the second recording track 304 adjacent to each other are shown so as to be significantly magnified in comparison with the overall size of the magneto-optical disc.

The portion (b) of FIG. 3 is a schematic magnified view showing one segment 305.

In the portion (b) of FIG. 3, the segment 305 has the pre-pit region (pre-format region) 306 and a data recording region (recording track) 315 having a length of 307.

The pre-pit region 306 has the first clock pit 316 used as a positional reference in the direction of the recording track of the optical disc, the first wobble pit 308 for detecting a tracking signal, the second wobble pit 309, the address pit 310 having address information and the clock pit 317 used as another positional reference.

In Embodiment 1, the second clock pit 317 may be eliminated.

One of the first wobble pit 308 and the second wobble pit 309 is disposed so as to be displaced from the center line of the recording track by a 1/2 track pitch in the inner circumferential direction of the disc, and the other is disposed so as to be displaced from the center line of the recording track by a 1/2 track pitch in the outer circumferential direction of the disc.

The first clock pit 316, the first wobble pit 308, the second wobble pit 309, the address pit 310 and the second clock pit 317 have a depth of about 1/8 of the wavelength $\lambda$ of laser light.

The address pit 310 represents one bit of address data depending on its presence or absence. This corresponds to a distributed address format (Japanese Patent Application No. Hei 11-021885 and Japanese Patent Application No. Hei 11-329265) invented by the inventors of the present application (some inventors are the same).

Address data (80 bits) formed of 80 segment address pits includes information, such as track numbers and segment management numbers (indicating positions in the circumferential direction).

One recording track (having the length of one circuit) including 1280 segments has 16 pieces of address data.

Data is recorded in the data recording region 315.

In the magneto-optical disc in accordance with Embodiment 1, the first wobble pit 308 and the second wobble pit 309 for tracking control in conformity with the sample servo system are shared by adjacent recording tracks.

The first recording track 303 and the second recording track 304 being different in tracking polarity (the wobble pits 308 and 309 are positioned at the left and right of the extension line of the recording track or positioned conversely at the right and left thereof) are formed alternately in every other circuit.

The magneto-optical disc in accordance with Embodiment 1 has the recording tracks 303, 304, etc. formed spirally, and each of the recording tracks 303, 304, etc. is divided into 1280 segments 305 by the pre-pit regions 306 provided radially (in the radial direction of the magneto-optical disc).

The pre-pit regions 306 of the respective segments are provided at equiangular intervals, have equiangular regions and are aligned in the radial direction of the magneto-optical disc.

All the pre-pit regions 306 have similar shapes, and the respective pre-pits are disposed at relatively identical positions in the pre-pit regions.

Hence, in the case when represented by angular coordinates having an origin at the center of the magneto-optical disc, the pre-pit regions are provided at every 360 degrees/1280 pieces = 0.28125 degrees on the magneto-optical disc, regardless of the distance of the position of the recording track from the origin.

FIG. 1 is a view showing the configuration of an optical disc control apparatus in accordance with Embodiment 1 of the present invention.

In the view showing the configuration of FIG. 1, the portions up to a sample holder 115 constitute a tracking error signal generating apparatus.

In the figure, the same blocks as those shown in FIG. 33 are designated by the same numerals.

The major differences between the control apparatus (or the tracking error signal generating apparatus which is a part thereof) in accordance with Embodiment 1 and the conventional control apparatus are that the configuration of a timing generating circuit 116 is different and that in the case when a disc-shaped information recording medium is rotated in conformity with the CLV system for example, the frequency of the clock signal in the control apparatus of the present invention is nearly constant, although the frequency of the clock signal 133 changed greatly in the conventional control apparatus.

In FIG. 1, numeral 101 designates an optical disc (magneto-optical disc) wherein data is recorded, numeral 102 designates a spindle motor for rotating the optical disc 101, numeral 103 designates a spindle motor control portion for driving the spindle motor 102, numeral 104 designates a beam spot wherein light is gathered at the magnetic recording layer on the optical disc 101, numeral 105 designates a head portion including a laser, an optical pickup, a photoreceptor, etc., numeral 106 designates a laser APC (Auto Power Control) circuit, numeral 107 designates a head amp, numeral 108 designates a focus servo circuit, numerals 109 and 111 designate comparators, numeral 110 designates a differentiating circuit, numerals 112 and 113 designate peak holders, numeral 114 designates a subtracter, numeral 115 designates a sample holder, numeral 118 designates a tracking control portion, numeral 119 designates a voice coil motor driving portion, numeral 120 designates a voice coil motor, numeral 116 designates a timing generating circuit, and numeral 117 designates a data-use PLL (Phase Lock Loop) circuit.

FIG. 6 shows a timing chart for main signals.

In accordance with command signals of a CPU (not shown), the spindle motor control portion 103 rotates the optical disc 101 at a constant rotation speed for example, by using an FG signal (a detection signal output in proportion to the rotation speed of the spindle motor 102) obtained from the spindle motor 102 or a clock pit pulse signal 134 generated by the timing generating circuit 116 or other signals as a feedback signal.

The head portion 5 applies laser light to the optical disc, receives the reflected light thereof, converts the received reflected light into an electrical signal, and outputs a reflected light amount signal (electrical signal) being proportional to the amount of the reflected light.

A front-light monitor (not shown) included in the head portion 5 receives an amount of laser light being proportional to the amount of the laser light applied onto the optical disc 101. The laser APC circuit 106 receives the output value of the above-mentioned front-light monitor and maintains the amount of the laser light applied onto the optical disc 101 constant in accordance with a command of the CPU, regardless of temperature and other factors.

The head amp 107 receives the reflected light amount signal output from the head portion, amplifies the signal and outputs a reproduction signal (an amplified reflected light amount signal) 138.

The focus servo circuit 108 drives the objective lens of the optical pickup included in the head portion 5 in the direction of the optical axis on the basis of the reproduction signal 138. The focus servo circuit 108 carries out control so that the beam spot on the optical disc 101 becomes the minimum diameter by driving the objective lens toward or away from the optical disc 101.

FIG. 4 is a view showing the relationship between the pre-pits and the reproduction signal. The portion (a) of FIG. 4 shows a state wherein the pre-pits, such as the first clock pit 316, are disposed on the optical disc 101, and the portion (b) of FIG. 4 shows the reproduction signal (the amplified reflected light amount signal) that is output when the beam spot moves along the chain-dotted line of the portion (a) of FIG. 4.

Furthermore, the portion (a) of FIG. 4 shows switching from the first recording track 303 to the second recording track 304 and switching from the second recording track 304 to the first recording track 303.

The beam spot passes through each segment obtained by dividing one circuit of the magneto-optical disc into 1280 pieces. When the beam spot passes through the last pre-pit region (#1280) and enters the first pre-pit region 313 (#1), the left and right positions of the first pre-pit pit 308 and the second pre-pit 309 are reversed.

The beam spot passes through the last pre-pit region (#1280) of the first recording track 303 and enters the first pre-pit region 313 (#1) of the second recording track 304.

When the left and right positions of the pre-pits are reversed, the relationship between the differential signal and the driving direction of the voice coil motor is reversed; hence, the tracking error polarity signal is reversed as shown in the portion (b) of FIG. 4.

The reproduction signal 138 is input to the comparator 109, the differentiating circuit 110 and the peak holders 112 and 113.

The comparator 109 receives the reproduction signal 138 and compares the reproduction signal 138 with a predetermined threshold value 601 (FIG. 6) in terms of magnitude and outputs an output signal 131 (binarized reproduction signal) which is the result of the comparison. The output signal, which is the result of the comparison, includes pre-pit signals corresponding to the pre-pits formed on the optical disc and other signals.

The differentiating circuit 110 differentiates the above-mentioned reproduction signal 138 and outputs a differentiated reproduction signal 139.

The comparator 111 receives the differentiated reproduction signal 139, compares the differentiated reproduction signal 139 with a predetermined threshold value in terms of magnitude and outputs an output signal (binarized differentiated reproduction signal) 132 which is the result of the comparison.

The timing generating circuit 116 receives the clock signal 133 output from a voltage controlled oscillator (VCO) 123, the binarized reproduction signal 131, which is the output signal of the comparator 109, and the binarized differentiated reproduction signal 132, which is the output signal of the comparator 111, and outputs a clock pit pulse signal 134, a first wobble pit signal detection signal 135, a second wobble pit signal detection signal 136 and a differential signal latch signal 137.

The peak holder 112 samples and holds the above-mentioned reproduction signal 138 by using the first wobble pit signal detection signal 135 (output at the position of the first wobble pit 308) and detects, holds and outputs the peak value (the first wobble pit signal) 140 of the reproduction signal 138.

The peak holder 113 samples and holds the above-mentioned reproduction signal 138 by using the second wobble pit signal detection signal 136 (output at the position of the second wobble pit 309) and detects, holds and outputs the peak value (the second wobble pit signal) 141 of the reproduction signal 138.

The subtraction circuit 114 carries out subtraction between the first wobble pit signal 140 and the second wobble pit signal 141, and outputs a differential signal 142 which is the result of the subtraction.

The subtraction circuit 114 carries out subtraction while switching the polarity (the tracking error polarity signal shown in the portion (b) of FIG. 4) as necessary in accordance with a command of the CPU or an address decoder (both are not shown). In accordance with the tracking error polarity signal, one of the following equations (1) and (2) is selected, and calculation is carried out by using the selected equation.

In the embodiment, the calculation for the first recording track 303 is carried out by using the equation (1), and the calculation for the second recording track 304 is carried out by using the equation (2).

The differential signal 142 = (the first wobble pit signal 140) - (the second wobble pit signal 141) (1)

The differential signal 142 = (the second wobble pit signal 141 - (the first wobble pit signal 140) (2)

The sample holder 115 holds the differential signal 142 by using the latch signal 137, and outputs a tracking error signal 143 which is the held signal.

The tracking control portion 118 receives the tracking error signal 143, generates a control output signal for making the tracking error signal smaller, and outputs the control output signal.

The tracking control portion 118 has the configuration of a PID control circuit in a typical case.

The voice coil motor driving portion 119 receives the control output signal and applies a voltage to the voice coil motor 120, thereby driving the voice coil motor 120.

Since the optical pickup (the optical pickup is included in the head portion 105) is secured to the mechanism portion driven by the voice coil motor, the relative position of the optical pickup with respect to the recording track changes. Usually, the optical pickup moves to a position wherein the tracking error signal 143 becomes minimal.

In FIG. 4, if the beam spot of the optical pickup is not shifted to the first pre-pit pit 308 or the second pre-pit 309, the level of the first wobble pit signal and the level of the second wobble pit signal are almost the same.

If the beam spot of the optical pickup approaches the first wobble pit 308, the first wobble pit signal becomes larger (the downward peak becomes deeper at the first wobble pit), and the second wobble pit signal becomes smaller (the downward peak becomes shallower at the second wobble pit).

If the beam spot of the optical pickup approaches the second wobble pit 309, the first wobble pit signal becomes smaller (the downward peak becomes shallower at the first wobble pit), and the second wobble pit signal becomes larger (the downward peak becomes deeper at the second wobble pit).

The data-use PLL circuit 117 generates a data-use clock signal.

The data-use PLL circuit 117 has a phase comparator 121, a loop filter 122, a VCO (Voltage Controlled Oscillator) 123 and a 1/m frequency divider 124.

The VCO 123 is a voltage controlled oscillator having a variable range of about ±10%. The data-use clock signal 133, which is the output signal of the VCO 123, is input to the l/m frequency divider 124, and used as a clock signal for data recording to the data recording region 315, a clock signal for data reproduction from the data recording region 315 and the clock signal of the timing generating circuit 116 and the like.

The output signal of the VCO 123 is a clock signal having a nearly constant frequency.

The clock signal input to the timing generating circuit 116 and the like should only be a signal having a nearly constant frequency and may not be the output signal of the VCO 123 of the data-use PLL circuit 117.

In another embodiment, for example, instead of the output signal of the VCO 123, the output signal of an oscillator having a fixed frequency is used as a clock signal.

The l/m frequency divider 124 receives the data-use clock signal 133, divides its frequency to obtain its l/m frequency, and outputs the l/m frequency division signal of the data-use clock signal.

The phase comparator 121 receives the l/m frequency division signal of the data-use clock signal and the clock pit pulse signal 134 (a pulse signal having a rising edge at the position of the clock pit), and outputs a phase difference signal having the phase difference between both signals as a pulse width.

The loop filter 122, serving as a low frequency filter, receives the phase difference signal which is the output signal of the phase comparator 121, and changes the signal to a low frequency signal.

The VCO 123 receives the phase difference signal having been changed to the low frequency signal and shifts its oscillation frequency depending on the signal.

By the above-mentioned configuration, the 1/m frequency division signal of the data-use clock signal 133 is phase-locked to the clock pit pulse signal 134.

<Explanation of the timing generating circuit>

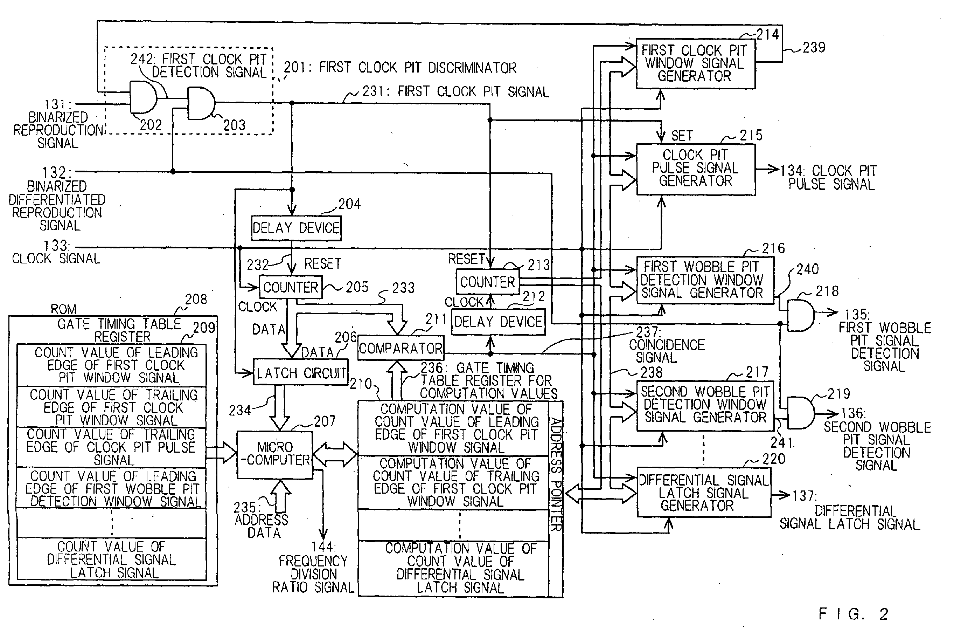

FIG. 2 is a schematic block diagram of the timing generating circuit 116.

The timing generating circuit 116 generates control signals for the peak holder 112 and other circuits.

Unlike the conventional timing generating circuit 3316, the timing generating circuit 116 in accordance with Embodiment 1 has a latch circuit 206 for latching the peak value of a counter 205; a microcomputer 207 carries out computation by using various count values stored in a gate timing register 209 and the count value latched in the latch circuit 206, and generates various timing signals by using a computed gate timing table register 210 which is a table of computed count values.

In FIG. 2, numeral 201 designates a first clock pit discriminator, numerals 204 and 212 designate delay devices, numerals 205 and 213 designate counters, numeral 206 designates a latch circuit, numeral 207 designates a microcomputer, numeral 209 designates a gate timing table register (stored in a ROM 208), numeral 210 designates a gate timing table register (stored in a RAM) for computation values, numeral 211 designates a comparator, numeral 214 designates a first clock pit window signal generator, numeral 215 designates a clock pit pulse signal generator, numeral 216 designates a first wobble pit detection window signal generator, numeral 217 designates a second wobble pit detection window signal generator, numeral 218 and 219 designate AND gates, and numeral 220 designates a differential signal latch signal generator.

The first clock pit discriminator 201 includes AND gates 202 and 203.

The AND gate 202 receives the binarized reproduction signal 131 (the binarized reflected light amount signal) and a first clock pit window signal 239, and outputs a first clock pit detection signal 242 which is the AND of both signals.

The AND gate 203 receives the first clock pit detection signal 242 and the binarized differentiated reproduction signal (the differentiated signal of the binarized reflected light amount signal) 132, and outputs a first clock pit signal 231 which is the AND of both signals.

As shown in FIG. 6, the position of the peak (the minimal value of FIG. 6) of the reproduction signal by the first clock pit 316 coincides with the position of the rising edge of the binarized differentiated reproduction signal 132.

The delay device 204 receives the first clock pit signal 231 and outputs a first clock pit signal 232 that is delayed by a very short time.

The binary counter 205 receives the first clock pit signal 232 that is delayed by the very short time at its reset terminal and is reset, receives the servo-use clock signal 133 at its clock terminal, and carries out counting up. Hence, the binary counter 205 outputs a count value 233 whose length is proportional to the length of a time starting from the first clock pit signal 231 (which is output when the optical pickup passes over the clock pit 316).

The latch circuit 206 latches the peak value (the number of the clock signals 133 received in a period from the first clock pit signal 231 to the next first clock pit signal 231) of the counter 205 and transmits the latched peak count value 234 (the first clock pit signal interval value) to the microcomputer 207.

The delay device 204 delays the input timing of the reset signal 232 of the counter 205 by the very short time so that the latch circuit 206 latches the peak value of the counter 205 by using the first clock pit signal 231 and so that the counter 205 is reset thereafter.

The gate timing table register 209 is stored in the ROM 208, and count values for generating various timing signals at respective addresses designated by the address pointer are stored therein.

The microcomputer 207 reads the peak count value 234 (the first clock pit signal interval value) output from the latch circuit 206 and various count values included in the gate timing table register 209, generates the computation values of the various count values by carrying out computations described later, writes the generated computation values in the RAM, and generates the gate timing table register 210 for the computation values.

In the gate timing table register 210 for the computation values, the computation value of the minimum count value for generating various timing signals is stored at address 0, and the computation values of the count values for generating various timing signals are stored so that the computation values of the count values increase in order (in ascending order) as the address value increases.

The various count values exemplified in the gate timing table register 210 of FIG. 2 are indicated so as to be classified in terms of items; the count values are not indicated in ascending order.

The comparator 211 receives the count value 236 stored in the gate timing table register 210 for the computation values and the count value 233 of the binary counter 205, compares both, and outputs a coincidence signal 237 that indicates as to whether both are coincident with each other or not. The coincidence signal 237 is 1 when both are coincident and 1 when not coincident.

The counter 213 receives the first clock pit signal 231 at its reset terminal and is reset, receives the coincidence signal 237 that is delayed by the delay device 212 by a very short time at its clock terminal, and carries out counting up each time the coincidence signal 237 changes from 0 to 1.

The delay device 212 is intended to operate so that the binary counter 213 carries out counting up slightly after the various timing signal generators, such as the first clock pit window generator 214, receive the coincidence signal 237.

The count value 238 of the counter 213 is input to the address pointer (a register for designating an address) of the gate timing table register 210 for the computation values.

The gate timing table register 210 for the computation values, whose address is designated by the count value 238 of the binary counter 213 (the count value is set at the address pointer), outputs count values for sequentially generating various timing signals by using the first clock pit signal 231 as the starting point (the count value is 0 at the starting point).

The first clock pit window generator 214, the clock pit pulse signal generator 215, the first wobble pit detection window signal generator 216, the second wobble pit detection window signal generator 217, the differential signal latch signal generator 220, etc. generate various timing signals. These signal generators are taken as examples; the timing generating circuit 116 includes other similar signal generators not shown in the figure.

The first clock pit window generator 214 includes count values N10 and N11 (N10 < N11).

The first clock pit window generator 214 receives the count value 238, the coincidence signal 237 and the clock signal 133, and outputs a first clock pit window signal 239. The clock signal 133 may not be input.

When the count value 238 is coincident with the count value N10 and when the coincidence signal 237 having a value of 1 (the count value 233 is coincident with the count value 236 of the gate timing table register 210 for the computation values) is input, the first clock pit window signal 239 changes from 0 to 1.

When the count value 238 is coincident with the count value N11 and when the coincidence signal 237 having a value of 1 (the count value 233 is coincident with the count value 236 of the gate timing table register 210 for the computation values) is input, the first clock pit window signal 239 changes from 1 to 0.

The first clock pit window signal 239 generated as described above has a value of 1 during a constant time width including the generation time of the next first clock pit signal estimated on the basis of one first clock pit signal. The first clock pit window signal 239 is input to the AND gate 202, whereby the binarized reproduction signal 131 generating at times other than the time width of the window signal is eliminated, and the first clock pit signal 231 being proper is discriminated.

The clock pit pulse signal generator 215 includes a count value N12.

The clock pit pulse signal generator 215 receives the first clock pit signal 231, the count value 238, the coincidence signal 237 and the clock signal 133, and outputs the clock pit pulse signal 134. The clock signal 133 may not be input.

When the first clock pit signal 231 is input (at the time when the optical pickup passes over the clock pit), the clock pit pulse signal 134 changes from 0 to 1.

When the count value 238 is coincident with the count value N12 and when the coincidence signal 237 having a value of 1 (the count value 233 is coincident with the count value 236 of the gate timing table register 210 for the computation values) is input, the clock pit pulse signal 134 changes from 1 to 0.

The clock pit pulse signal generated as described above comprises pulses each rising when the first clock pit signal 231 is input and having a constant time width.

The clock pit pulse signal 134 is the reference signal of the phase lock of the data-use PLL circuit 117 and is input to the phase comparator 121.

generator 216 includes count values N13 and N14 (N13 < N14).

The first wobble pit detection window signal generator 216 receives the count value 238, the coincidence signal 237 and the clock signal 133, and outputs a first wobble pit detection window signal 240. The clock signal 133 may not be input.

When the count value 238 is coincident with the count value N13 and when the coincidence signal 237 having a value of 1 (the count value 233 is coincident with the count value 236 of the gate timing table register 210 for the computation values) is input, the first wobble pit detection window signal 240 changes from 0 to 1.

When the count value 238 is coincident with the count value N14 and when the coincidence signal 237 having a value of 1 is input, the first wobble pit detection window signal 240 changes from 1 to 0.

The first wobble pit detection window signal 240 generated as described above comprises pulses that rise and have a constant time width including the time required when the optical pickup passes over the first wobble pit 308.

The AND gate 218 receives the first wobble pit detection window signal 240 and the binarized differentiated reproduction signal 132, and outputs the first wobble pit signal detection signal 135 which is the AND of both.

As shown in FIG. 6, the position of the peak (the minimal value of FIG. 6) of the reproduction signal by the first wobble pit 308 coincides with the position of the rising edge of the binarized differentiated reproduction signal 132.

Hence, the first wobble pit signal detection signal 135, which is the AND of the first wobble pit detection window signal 240 and the binarized differentiated reproduction signal 132, includes the peak of the reproduction signal (the reproduction signal of the first wobble pit) in the detection window in the vicinity of the rising edge thereof.

The peak holder 112 receives the first wobble pit signal detection signal 135 and the reproduction signal 138, and holds the peak of the reproduction signal 138 at the timing of the first wobble pit signal detection signal 135. The reproduction signal whose peak is held is the reproduction signal of the first wobble pit 308.

The second wobble pit detection window signal generator 217 includes count values N15 and N16 (N15 < N16).

The second wobble pit detection window signal generator 217 receives the count value 238, the coincidence signal 237 and the clock signal 133, and outputs a second wobble pit detection window signal 241. The clock signal 133 may not be input.

When the count value 238 is coincident with the count value N15 and when the coincidence signal 237 having a value of 1 (the count value 233 is coincident with the count value 236 of the gate timing table register 210 for the computation values) is input, the second wobble pit detection window signal 241 changes from 0 to 1.

When the count value 238 is coincident with the count value N16 and when the coincidence signal 237 having a value of 1 is input, the second wobble pit detection window signal 241 changes from 1 to 0.

The second wobble pit detection window signal 241 generated as described above comprises pulses that rise and have a constant time width including the time required when the optical pickup passes over the second wobble pit 309.

The AND gate 219 receives the second wobble pit detection window signal 241 and the binarized differentiated reproduction signal 132, and outputs the second wobble pit signal detection signal 136 which is the AND of both.

As shown in FIG. 6, the position of the peak (the minimal value of FIG. 6) of the reproduction signal by the second wobble pit 309 coincides with the position of the rising edge of the binarized differentiated reproduction signal 132.

Hence, the second wobble pit signal detection signal 136, which is the AND of the second wobble pit detection window signal 241 and the binarized differentiated reproduction signal 132, includes the peak of the reproduction signal (the reproduction signal of the second wobble pit 309) in the detection window in the vicinity of the rising edge thereof.

The peak holder 113 receives the second wobble pit signal detection signal 136 and the reproduction signal 138, and holds the peak of the reproduction signal 138 at the timing of the second wobble pit signal detection signal 136. The reproduction signal whose peak is held is the reproduction signal of the second wobble pit 309.

The differential signal latch signal generator 220 includes count values N17 and N18 (N17 < N18).

The differential signal latch signal generator 220 receives the count value 238, the coincidence signal 237 and the clock signal 133, and outputs the differential signal latch signal generator 220. The clock signal 133 may not be input.

When the count value 238 is coincident with the count value N17 and when the coincidence signal 237 having a value of 1 (the count value 233 is coincident with the count value 236 of the gate timing table register 210 for the computation values) is input, the differential signal latch signal changes from 0 to 1.

When the count value 238 is coincident with the count value N18 and when the coincidence signal 237 having a value of 1 is input, the differential signal latch signal changes from 1 to 0.

The differential signal latch signal generated as described above is input to the sample holder 115. When the differential signal latch signal is input, the sample holder 115 samples and holds the differential signal 142.

In order to attain a disc medium having a high recording density, it is generally desired that the shortest recording mark length (the length of the data recording region of one bit of data) is maintained constant in all the regions from the inner circumference to the outer circumference of the disc medium.

In the case when a magneto-optical disc is rotated by the control apparatus in accordance with Embodiment 1 in conformity with the CLV system, the interval of the clock pulse signals 215 becomes longer as the optical pickup moves from the inner circumference to the outer circumference of the optical disc; hence, the microcomputer 207 sequentially rewrites the frequency division ratio m of the frequency divider 124.

Therefore, the shortest recording mark length is maintained nearly constant in all the regions of the optical disc, and the frequency of the clock signal 133 is maintained nearly constant.

<Explanation of a computation method>

The microcomputer 207 calculates the computation value of the count value of each timing signal.

The portion (a) of FIG. 5 shows the pre-pit region 306 and the data recording region 315 in the inner circumference portion in the case when the magneto-optical disc in accordance with Embodiment 1 is rotated in conformity with the CLV system (similarly even in the case of the ZCLV system), wherein the horizontal axis is used as the time axis. The inner circumference portion rotates at a first angular velocity $\omega 1$.

The portion (b) of FIG. 5 shows the pre-pit region 306 and the data recording region 315 in the outer circumference portion in the case when the magneto-optical disc in accordance with Embodiment 1 is rotated in conformity with the CLV system, wherein the horizontal axis is used as the time axis. The outer circumference portion rotates at a second angular velocity $\omega 2$ ($\omega 2 < \omega 1$).

In the portion (a) of FIG. 5, $\theta 1w$ designates the . angle from the first clock pit 316 to the first wobble pit 308, T1w designates the time required when the beam spot passes through the angle $\theta 1w$, $\theta 2w$ designates the angle from the first clock pit 316 to the second wobble pit 309, T2w designates the time required when the beam spot passes through the angle $\theta 2w$, $\theta 1c$ designates the angle from the first clock pit 316 to the first clock pit 316 of the next pre-pit region, T1c designates the time required when the beam spot passes through the angle $\theta 1c$, $\theta 2c$ designates the angle from the first clock pit 316 to the second clock pit 317, and T2c designates the time required when the beam spot passes through the angle $\theta 2c$.

Furthermore, in the portion (b) of FIG. 5, $\theta 1w$ designates the angle from the first clock pit 316 to the first wobble pit 308, T1w' designates the time required when the beam spot passes through the $\theta 1w$, $\theta 2w$ designates the angle from the first clock pit 316 to the second wobble pit 309, T2w' designates the time required when the beam spot passes through the $\theta 2w$, $\theta 1c$ designates the angle from the first clock pit 316 to the first clock pit 316 in the next pre-pit region, T1c' designates the time required when the beam spot passes through the $\theta 1c$, $\theta 2c$ designates the angle from the first clock pit 316 to the second clock pit 317, and T2c' designates the time required-when the beam spot passes through the $\theta 2c$.

Since the rotation speed changes depending on the inner circumference and outer circumference of the disc, even if the angle $\theta$ between pits is constant, the time for passing through each pit becomes different.

In the case of the configuration in accordance with this embodiment, the "time" between pits is a count value counted by using a clock signal (the clock signal 133 in this embodiment) during the time.

Although the above-mentioned pit passing time changes depending on the rotation speed, the following relational equations are established at a give angular velocity $\omega$.

$$T1w/T1c = T1w'/T1c' = \theta 1w/\theta 1c = k1 \qquad (3)$$

$$T2w/T1c = T2w'/T1c' = \theta 2w/\theta 2c = k2 \qquad (4)$$

$\theta 1w$, $\theta 2w$, $\theta 1c$ and $\theta 2c$ are fixed values determined when a master disc is formed; they are generally determined by the standards of magneto-optical discs.

Hence, k1 and k2 are constant values.

In the gate timing table register 209, count values for generating respective window signals from the first clock pit at the time when an optical disc is rotated at a certain angular velocity $\omega$, in other words, when time T1c is measured by using N1c, are stored. With respect to the window of the first wobble pit, the leading edge position of the window of the first wobble pit (the midpoint between the first clock pit and the first wobble pit) Nw1f and the trailing edge position of the window of the first wobble pit (the midpoint between the first wobble pit and the second wobble pit) Nw1r are stored. Similarly, also with respect to the second wobble pit, the leading edge position of the window of the second wobble pit (the midpoint between the first wobble pit and the second wobble pit) Nw2f and the trailing edge position of the window of the second wobble pit (the midpoint between the second wobble pit and the second clock pit) Nw2r are stored.

In the tracking error detection apparatus in accordance with the present invention, it is necessary to detect the first and second wobble pits at a given rotation speed. Hence, it is necessary to compute the count value Nw1f' of the leading edges and the count value Nw1r' of the trailing edges of the windows of the first wobble pits, and the count value Nw2f' of the leading edges and the count value Nw2r' of the trailing edges of the windows of the second wobble pits at a given rotation speed. Since the equations (3) and (4) have been established at a given rotation speed, if a count value N1c' corresponding to T1c' at a given rotation speed can be detected, Nw1r', Nw1f', Nw2r' and Nw2f' can be computed simply as described below.

$$Nw1r' = N1c' \times (Nw1r/N1c) \quad (5)$$

$$Nw1f' = N1c' \times (Nw1f/N1c) \quad (6)$$

$$Nw2r' = N1c' \times (Nw2r/N1c) \quad (7)$$

$$Nw2f' = N1c' \times (Nw2f/N1c) \quad (8)$$

The microcomputer 207 calculates Nw1r', Nw1f', Nw2r' and Nw2f' in accordance with the equations (5) to (8) and writes the calculated values in the gate timing table register 210 for the computation values.

The various timing signal generators, such as the first clock pit window signal generator 214, generate various timing signals on the basis of the computation values of the count values written in the gate timing table register 210 for the computation values.

With respect to other count values (for example, the count value of the differential signal latch signal), the computation values of the count values are obtained by a similar computation method and stored in the gate timing table register 210 for the computation values.

Since the above-mentioned relational equations (5) to (8) are established at a given rotation speed as described above, if N1c' (corresponding to the time interval of the first clock) at a given rotation speed is detected, the positions of the first and second wobble pits based on the position of the first clock pit can be determined, and a tracking error signal can be detected. As a result, the tracking error detection apparatus in accordance with the present invention can attain tracking error detection in conformity with the CLV or ZCLV system, which was unable to be attained by the conventional sample servo system.

<Explanation of a tracking error signal generating method and a control method (FIG. 8)>

A tracking error signal generating method and a control method will be explained by using FIG. 8.

First, the reproduction signal of the pre-pits formed on an optical disc is output (step 801).

Next, a first clock pit signal is detected from the inside of the reproduction signal (step 802).

Next, the interval time of two adjacent first clock pit signals (the first clock pit signal interval value) is measured (step 803).

Next, on the basis of the above-mentioned interval time measured and the count values of the various timing signals stored in the built-in gate timing table register, the first wobble pit signal interval value (the leading edge value and the trailing edge value) and the second wobble pit signals interval value (the leading edge value and the trailing edge value) are computed in accordance with the above-mentioned computation method (step 804).

Next, the peak (the first wobble pit signal) of the reproduction signal at the time (the window between the leading edge value and the trailing edge value) delayed by the first wobble pit signal interval value from the first clock pit signal is detected, and the peak (the second wobble pit signal) of the reproduction signal at the time (the window between the leading edge value and the trailing edge value) delayed by the second wobble pit signal interval value from the first clock pit signal is detected (step 805).

Next, the differential signal (the tracking error signal) between the first wobble pit signal and the second wobble pit signal is generated (step 806).

Next, tracking control is carried out so that the next differential signal (the tracking error signal) becomes small (the voice coil motor is driven and controlled) (step 807).

Furthermore, instead of the count values of the edges of respective timing signals at the time when the optical disc is rotated at a certain angular velocity ω0, various proportionality constants obtained by the following equations, for example, have been stored in the gate timing table register 209.

$$k1f = N1wf0/N1c0 \quad (9)$$

$$k1r = N1wr0/N1c0 \quad (10)$$

$$k2f = N2wf0/N1c0 \quad (11)$$

$$k2r = N2wr0/N1c0 \quad (12)$$

When it is assumed that the peak count value 234 latched by the latch circuit 206 is N1c, the count value N1wf of the leading edges and the count value N1wr of the trailing edges of the first wobble pit detection window signals and the count value N2wf of the leading edges and the count value N2wr of the trailing edges of the second wobble pit detection window signals are represented by the following equations by using these proportionality constants. This embodiment, i.e., another embodiment, has an effect of reducing the number of calculation times.

$$N1wf = N1c \times k1f \quad (13)$$

$$N1wr = N1c \times k1r \quad (14)$$

$$N2wf = N1c \times k2f \quad (15)$$

$$N2wr = N1c \times k2r \quad (16)$$

Still another embodiment has the first clock pit signal discriminator 201 (FIG. 2) having a configuration different from that of the above-mentioned Embodiment 1 (a similar configuration is also applicable to a second clock pit signal discriminator 901 (FIG. 9) in accordance with Embodiment 2).

The portion (a) of FIG. 7 shows the waveform of a true reproduction signal of the first clock pit 316, and the portion (b) of FIG. 7 shows the waveform of a false reproduction signal of the first clock pit 316.

In yet still another embodiment, the first clock pit signal discriminator 201 can discriminate between the true reproduction signal of the first clock pit 316 shown in the portion (a) of FIG. 7 and the false reproduction signal of the first clock pit 316 shown in the portion (b) of FIG. 7.

The first clock pit signal discriminator obtains the reproduction signal 138 at five continuous sampling points in a window determined by the first clock pit detection signal 242 generated by the AND gate 202.

Next, a judgment is made as to whether the center sampling point (the third sampling point) among the continuous sampling points is a single minimal point (or a maximal point in the case of a reproduction signal having a polarity opposite to that of the reproduction signal 138 shown in FIG. 6) or not.

If the center sampling point is not a single minimal point, the minimal point is not the true reproduction signal of the first clock pit 316.

Next, if the center sampling point is a single minimal point, a judgment is made as to whether the level of the reproduction signal at the center sampling point is in a first constant range (V11 to V12) or not and whether the levels of the reproduction signal at the first and fifth sampling points are in a second constant range (Vh1 to Vh2) or hot.

If the level of the reproduction signal at the center sampling point is in the first constant range and the levels of the reproduction signal at the first and fifth sampling points are in the second constant range, the minimal point is the true reproduction signal of the first clock pit 316, whereby the first clock pit signal 231 having the minimal point as the rising edge thereof is generated. If one of the conditions is not satisfied, the minimal point is a false reproduction signal of the first clock pit 316.

The first constant range is a constant range having constant widths in the upper and lower directions centered from the peak level of the first clock pit 316 in the preceding pre-pit region.

Similarly, the second constant range is a constant range having constant widths in the upper and lower directions centered from the signal level of a point other than the pre-pits in the preceding pre-pit region.

With the above-mentioned configuration, the first clock pit signal discriminator 201 (and the second clock pit signal discriminator 901) can detect the peak of the true clock pit.

<Embodiment 2>

A disc-shaped information recording medium control apparatus (including a tracking error signal generating apparatus) in accordance with Embodiment 2 of the present invention will be described by using FIG. 9 to FIG. 14.

FIG. 10 shows the structure of an optical disc of a flat plate type (having no groove portions or inter-groove portions) in accordance with Embodiment 2.

The optical disc in accordance with Embodiment 1 has the equiangular (radial) pre-pit regions 306 in the range from the inner circumference to the outer circumference; however, the optical disc in accordance with Embodiment 2 has equal-length (nearly rectangular) pre-pit regions 1006 in the range from the inner circumference to the outer circumference.

The portion (a) of FIG. 10 shows the schematic overall configuration of a magneto-optical disc in accordance with Embodiment 2. In the portion (a) of FIG. 10, numeral 1001 designates an optical disc substrate, numeral 1002 designates a recording film, numeral 1003 designates a first recording track, numeral 1004 designates a second recording track adjacent to the first recording track, numeral 1005 designates a segment obtained by dividing the first recording track 1003 and the second recording track 1004 into 1280 pieces, and numerals 1006 and 1013 designate pre-pit regions (pre-format regions).

The pre-pit regions 1006 and 1013 have a first clock pit 1016, a first wobble pit 1008, a second wobble pit 1009, an address pit 1010 and a second clock pit 1017.

As shown in the figure, each of the first recording track 1003 and the second recording track 1004 is a spiral region wherein the pre-pit region 1013 is used as a starting point and an ending point; in the case when the spiral recording track is traced from the inner circumference to the outer circumference of the magneto-optical disc, the second recording track 1004 ends in the pre-pit region 1013, and the first recording track 1003 starts in the position (the pre-pit region 1013) wherein the second recording track 1004 ends.

In the portion (a) of FIG. 10 for explaining the format configuration of the magneto-optical disc, the first recording track 1003 and the second recording track 1004 adjacent to each other are shown so as to be significantly magnified in comparison with the overall size of the magneto-optical disc.

The portion (b) of FIG. 10 is a schematic magnified view showing one segment 1005.

In the portion (b) of FIG. 10, the segment 1005 has the pre-pit region (pre-format region) 1006 and a data recording region (recording track) 1015 having a length of 1007.

The pre-pit region 1006 has the first clock pit 1016 used as a positional reference in the direction of the recording track of the optical disc, the first wobble pit 1008 for detecting a tracking signal, the second wobble pit 1009, an address pit 1010 having address information and the clock pit 1017 used as another positional reference.

One of the first wobble pit 1008 and the second wobble pit 1009 is disposed so as to be displaced from the center line of the recording track by a 1/2 track pitch in the inner circumferential direction of the disc, and the other is disposed so as to be displaced from the center line of the recording track by a 1/2 track pitch in the outer circumferential direction of the disc.

The first clock pit 1016, the first wobble pit 1008, the second wobble pit 1009, the address pit 1010 and the second clock pit 1017 have a depth of about 1/8 of the wavelength $\lambda$ of laser light.

The address pit 1010 is similar to the address pit 310 in accordance with Embodiment 1.

Data is recorded in the data recording region 1015.

In the magneto-optical disc in accordance with Embodiment 1, the first wobble pit 1008 and the second wobble pit 1009 for tracking control in conformity with the sample servo system are shared with adjacent recording tracks.

The first recording track 1003 and the second recording track 1004 being different in tracking polarity (the wobble pits 1008 and 1009 are positioned at the left and right of the extension line of the recording track or positioned conversely at the right and left thereof) are formed alternately in every other circuit.

The magneto-optical disc in accordance with Embodiment 1 has the recording tracks 1003, 1004, etc. formed spirally, and each of the recording tracks 1003, 1004, etc. is divided into 1280 segments 1005 by the pre-pit regions 1006 each provided in a nearly rectangular shape (in the radial direction of the magneto-optical disc).

The pre-pit regions 1006 of the respective segments are provided at equiangular intervals, have regions of an equal length (the length of the pre-pit region 1006 measured in the longitudinal direction of the recording track), and at least the first clock pits are aligned in the radial direction of the magneto-optical disc.

Hence, in the case when represented by angular coordinates having an origin at the center of the magneto-optical disc, the first clock pits are provided at every 360 degrees/1280 pieces = 0.28125 degrees on the magneto-optical disc, regardless of the distance of the position of the recording track from the origin. The other pits (the first wobble pits, the second wobble pits and the second clock pits) become parallel to the first clock pits. All the pre-pit regions 1006 have a nearly identical shape, and each pre-pit is disposed at the same position in the pre-pit region. Conventionally, the pre-pits in the pre-pit region were disposed at equal angles, and the pre-pit region expanded radially from the inner circumference to the outer circumference of the disc. This was used because it was necessary to dispose the pits radially at equal angles in the conventional configuration wherein a tracking error signal was detected while a PLL clock was locked to wobble pits. However, since the pre-pit region became wider at the outer circumference, the format efficiency of the disc was lowered, and the capacity thereof was reduced. On the other hand, by making the pre-pit regions so as to have the same length inside the disc, the format efficiency is improved, and the capacity is increased. The tracking error signal detection apparatus in accordance with the present invention can carry out tracking error signal detection even when the pre-pit regions have the same length inside the disc as described above. This will be described below in more detail by using drawings.

The configuration drawing of the optical disc control apparatus in accordance with Embodiment 2 of the present invention is similar to that in accordance with Embodiment 1 (FIG. 1). Overlapping descriptions are not given to Embodiment 2. Embodiment 1 and Embodiment 2 are different from each other in the configuration of the timing generating circuit 116, and this will be clarified in the explanation of the timing generating circuit in accordance with Embodiment 2 (FIG. 9).

FIG. 12 shows a timing chart for main signals.

The relationship between the pre-pits and the reproduction signal (Embodiment 1) is similarly applicable to Embodiment 2.

<Explanation of the timing generating circuit>

FIG. 9 is a schematic block diagram of the timing generating circuit 116 in accordance with Embodiment 2. The same blocks as those used in the timing generating circuit in accordance with Embodiment 1 (FIG. 2) are designated by the same numerals.

The timing generating circuit in accordance with Embodiment 2 will be described by emphasizing portions different from the timing generating circuit in accordance with Embodiment 1 (FIG. 2). Regarding the blocks and the like not described in the explanation of the timing generating circuit in accordance with Embodiment 2, the present invention can be understood by referring to the explanation of the blocks and the like in accordance with Embodiment 1, having the same numerals.

In the timing generating circuit in accordance with Embodiment 1, the computation values of the count values of various timing signals are calculated on the basis of the interval of two adjacent first clock signals having a constant angle, and the computation values are stored in the gate timing table register 210 for the computation values.

In the timing generating circuit in accordance with Embodiment 2, the computation values of the count values of various timing signals are calculated on the basis of the interval of the first clock signal and the second clock signal (the peak of the second clock pit) having the same length, and the computation values are stored in the gate timing table register 210 for the computation values. This is based on the fact that the pre-pit regions of the optical disc in accordance with Embodiment 2 are constant inside the disc and that a constant relationship is established between the position of each wobble pit and the length of the first clock pit and the second clock pit. This will be described later in detail. In the other portions, the timing generating circuit in accordance with Embodiment 1 and the timing generating circuit in accordance with Embodiment 2 have almost the same configuration.

In FIG. 2, numeral 201 designates a first clock pit discriminator, numeral 901 designates a second clock pit discriminator, numerals 204 and 212 designate delay devices, numerals 205 and 213 designate counters, numerals 904 and 906 designates latch circuits, numeral 207 designates a microcomputer, numeral 209 designates a gate timing table register (stored in a ROM 208), numeral 210 designates a gate timing table register (stored in a RAM) for computation values, numeral 211 designates a comparator, numeral 214 designates a first clock pit window signal generator, numeral 905 designates a second clock pit window signal generator, numeral 215 designates a clock pit pulse signal generator, numeral 216 designates a first wobble pit detection window signal generator, numeral 217 designates a second wobble pit detection window signal generator, numeral 218 and 219 designate AND gates, and numeral 220 designates a differential signal latch signal generator.

The first clock pit discriminator 201 includes AND gates 202 and 203, and the second clock pit discriminator 901 includes AND gates 902 and 903.

The AND gate 202 receives the binarized reproduction signal 131 (the binarized reflected light amount signal) and the first clock pit window signal 239, and outputs the first clock pit detection signal 242 which is the AND of both signals.

The AND gate 203 receives the first clock pit detection signal 242 and the binarized differentiated reproduction signal (the differentiated signal of the binarized reflected light amount signal) 132, and outputs the first clock pit signal 231 which is the AND of both signals.

The delay device 204 receives the first clock pit signal 231 and outputs the first clock pit signal 232 that is delayed by a very short time.

The AND gate 902 receives the binarized reproduction signal 131 (the binarized reflected light amount signal) and a second clock pit window signal 912, and outputs a second clock pit detection signal 915 which is the AND of both signals.

The AND gate 203 receives the second clock pit detection signal 915 and the binarized differentiated reproduction signal (the differentiated signal of the binarized reflected light amount signal) 132, and outputs a second clock pit signal 911 which is the AND of both signals.

The binary counter 205 receives the first clock pit signal 232 that is delayed by the very short time at its reset terminal and is reset, receives the servo-use clock signal 133 at its clock terminal and carries out counting up. Hence, the binary counter 205 outputs the count value 233 whose length is proportional to the length of a time starting from the first clock pit signal 231 (which is output when the optical pickup passes over the clock pit 1016).

The latch circuit 904 latches the peak value (the number of the clock signals 133 received in a period from the first clock pit signal 231 to the next first clock pit signal 231) of the counter 205 and outputs the latched peak count value 916.

Rotation control in conformity with the CAV system can be attained by transmitting the peak count value 916 to the rotation control circuit of the magneto-optical disc, for example, and by controlling the rotation of the magneto-optical disc so that the peak count value 916 becomes constant.

The latch circuit 906 latches the count value (the number of the clock signals 133 received in a period from the first clock pit signal 231 to the second clock pit signal 911) of the counter 205 at the rising edges of the second clock pit signals 911, and transmits a latched count value 914 (the second clock pit signal interval value) to the microcomputer 207.

The delay device 204 delays the input timing of the reset signal of the counter 205 by the very short time so that the latch circuit 904 latches the peak value of the counter 205 by using the first clock pit signal 231 and so that the counter 205 is reset thereafter.

The gate timing table register 209 is stored in the ROM 208, and count values for generating various timing signals at respective addresses designated by the address pointer are stored therein.

The microcomputer 207 reads the count value 914 (the second clock pit signal interval value) output from the latch circuit 906 and various count values included in the gate timing table register 209, generates the computation values of the various count values by carrying out computations described later, writes the generated computation values in the RAM and generates the gate timing table register 210 for the computation values.

In the gate timing table register 210 for the computation values, the computation value of the minimum count value for generating various timing signals is stored at address 0, and the computation values of the count values for generating various timing signals are stored so that the computation values of the count values increases in order (in ascending order) as the address value increases.

The comparator 211 receives the count value 236 stored in the gate timing table register 210 for the computation values and the count value 233 of the binary counter 205, compares both, and outputs the coincidence signal 237 that indicates as to whether both are coincident with each other or not. The coincidence signal 237 is 1 when both are coincident and 1 when not coincident.

The counter 213 receives the first clock pit signal 231 at its reset terminal and is reset, receives the coincidence signal 237 that is delayed by the delay device 212 by the very short time at its clock terminal and carries out counting up each time the coincidence signal 237 changes from 0 to 1.

The delay device 212 is intended to operate so that the binary counter 213 carries out counting up slightly after the various timing signal generators, such as the first clock pit window signal generator 214, receive the coincidence signal 237.

The count value 238 of the counter 213 is input to the address pointer of the gate timing table register 210 for the computation values.

The gate timing table register 210 for the computation values, whose address is designated by the count value of the binary counter 213 (the count value is set at the address pointer), outputs count values for sequentially generating various timing signals by using the first clock pit signal 231 as a starting point (the count value is 0 at the starting point).

The first clock pit window generator 214, the second clock pit window signal generator 905, the clock pit pulse signal generator 215, the first wobble pit detection window signal generator 216, the second wobble pit detection window signal generator 217, the differential signal latch signal generator 220, etc. generate various timing signals. These signal generators are taken as examples; the timing generating circuit 116 further includes other similar signal generators not shown in the figure.

The first clock pit window generator 214, the clock pit pulse signal generator 215, the first wobble pit detection window signal generator 216, the second wobble pit detection window signal generator 217, the differential signal latch signal generator 220, etc. have the same functions as the blocks having the same numerals and names.

The second clock pit window generator 905 includes count values N19 and N20 (N19 < N20).

The second clock pit window generator 905 receives the count value 238, the coincidence signal 237 and the clock signal 133, and outputs a second clock pit window signal 912. The clock signal 133 may not be input.

When the count value 238 is coincident with the count value N19 and when the coincidence signal 237 having a value of 1 (the count value 233 is coincident with the count value 236 of the gate timing table register 210 for the computation values) is input, the second clock pit window signal 912 changes from 0 to 1.

When the count value 238 is coincident with the count value N20 and when the coincidence signal 237 having a value of 1 (the count value 233 is coincident with the count value 236 of the gate timing table register 210 for the computation values) is input, the second clock pit window signal 912 changes from 1 to 0.

The second clock pit window signal 912 generated as described above has a value of 1 during a constant time width including the generation time of the second clock pit signal estimated on the basis of the first clock pit signal 231. The second clock pit window signal 912 is input to the AND gate 902, whereby the binarized reproduction signal 131 generating during times other than the time width is eliminated, and the second clock pit signal 911 being proper is discriminated.

In order to attain a disc medium having a high recording density, it is generally desired that the shortest recording mark length (the length of the data recording region of one bit of data) is maintained constant in all the regions from the inner circumference to the outer circumference of the disc medium.

In the case when a magneto-optical disc is rotated by the control apparatus in accordance with Embodiment 2 in conformity with the CLV system, the interval of the clock pulse signals 215 becomes longer as the optical pickup moves from the inner circumference to the outer circumference of the optical disc; hence, the microcomputer 207 sequentially rewrites the frequency division ratio m of the frequency divider 124. Furthermore, in order to carry out rotation in conformity with the ZCLV system, recording and reproduction are carried out by using a rotation speed preset in each zone divided depending on the radial position of the disc and by using the frequency division ratio m preset at a linear density corresponding to the radial position. Therefore, the shortest recording mark length is maintained nearly constant in all the regions of the optical disc, and the frequency of the clock signal 133 is maintained nearly constant.

<Explanation of a computation method>

The microcomputer 207 calculates the computation value of the count value of each timing signal. The most of this part is similar to that of Embodiment 1. The difference is that the modulus for the computation of the count value was the time interval of the first clock pits in Embodiment 1, but in Embodiment 2 the modulus is the time interval between the first clock pit and the second clock pit. This will be described below in more detail.

The portion (a) of FIG. 11 shows the pre-pit region 1006 and the data recording region 1007 in the inner circumference portion in the case when the magneto-optical disc in accordance with Embodiment 2 is rotated in conformity with the CLV system, wherein the horizontal axis is used as the time axis. The inner circumference portion rotates at a first angular velocity ω1.

In addition, the portion (b) of FIG. 11 shows the pre-pit region 1006 and the data recording region 1007 in the outer circumference portion in the case when the magneto-optical disc in accordance with Embodiment 2 is rotated in conformity with the ZCLV system, wherein the horizontal axis is used as the time axis. The outer circumference portion rotates at a second angular velocity ω2 (ω2 < ω1).

In the portion (a) of FIG. 11, T1w designates the time (length L1w) required when the beam spot passes through from the first clock pit 1016 to the first wobble pit 1008, T2w designates the time (length L2w) required when the beam spot passes through from the first clock pit 1016 to the second wobble pit 1009, T1c designates the time (length L1c) required when the beam spot passes through from the first clock pit 1016 to the first clock pit 1016 in the next pre-pit region, and T2c designates the time (length L2c) required when the beam spot passes through from the first clock pit 1016 to the second clock pit 1017.

In the portion (b) of FIG. 11, T1w' designates the time required when the beam spot passes through from the first clock pit 1016 to the first wobble pit 1008, T2w' designates the time required when the beam spot passes through from the first clock pit 1016 to the second wobble pit 1009, T1c' designates the time required when the beam spot passes through from the first clock pit 1016 to the first clock pit 1016 in the next pre-pit region, and T2c' designates the time required when the beam spot passes through from the first clock pit 1016 to the second clock pit 1017. Since the rotation speed changes depending on the inner circumference and outer circumference of the disc, the time for passing through each pit becomes different.

In the case of the configuration in accordance with this embodiment, the "time" between pits is a count value counted by using a clock signal (the clock signal 133 in this embodiment) during the time.

Although the ratio to T1c and T1c' was constant in Embodiment 1, the ratio to T2c and T2c' becomes constant in Embodiment 2, since the length of the pre-pit region is constant. Hence, the following relational equations are established at a give rotation speed.

$$T1w/T2c = T1w'/T2c' = L1w/L2c = k1 \quad (17)$$

$$T2w/T2c = T2w'/T2c' = L2w/L2c = k2 \quad (18)$$

L1w, L2w and L2c are fixed values determined when a master disc is formed; they are generally determined by the standards of magneto-optical discs.

Hence, k1 and k2 are constant values.

In the gate timing table register 209, count values for generating respective window signals from the first clock pit at the time when an optical disc is rotated at a certain angular velocity $\omega$, in other words, when time T2c is measured by using N2c, are stored. With respect to the window of the first wobble pit, the leading edge position of the window of the first wobble pit (the midpoint between the first clock pit and the first wobble pit) Nw1f and the trailing edge position of the window of the first wobble pit (the midpoint between the first wobble pit and the second wobble pit) Nw1r are stored. Similarly, also with respect to the second wobble pit, the leading edge position of the window of the second wobble pit (the midpoint between the first wobble pit and the second wobble pit) Nw2f and the trailing edge position of the window of the second wobble pit (the midpoint between the second wobble pit and the second clock pit) Nw2r are stored.

In the tracking error detection apparatus in accordance with the present invention, it is necessary to detect the first and second wobble pits at a given rotation speed. Hence, it is necessary to compute the count value Nw1f' of the leading edges and the count value Nw1r' of the trailing edges of the windows of the first wobble pits, and the count value Nw2f' of the leading edges and the count value Nw2r' of the trailing edges of the windows of the second wobble pits at a given rotation speed. Since the equations (17) and (18) have been established at a given rotation speed, if a count value N2c' corresponding to T2c' at a given rotation speed can be detected, Nw1r', Nw1f', Nw2r' and Nw2f' can be computed simply as described below.

$$Nw1r' = N2c' \times (Nw1r/N2c) \quad (19)$$

$$Nw1f' = N2c' \times (Nw1f/N2c) \quad (20)$$

$$Nw2r' = N2c' \times (Nw2r/N2c) \quad (21)$$

$$Nw2f' = N2c' \times (Nw2f/N2c) \quad (22)$$

The microcomputer 207 proportionally calculates N1wf, N1wr, N2wf and N2wr in accordance with the equations (19) to (22) and writes the calculated values in the gate timing table register 210 for the computation values.

The various timing signal generators, such as the first clock pit window signal generator 214, generate various timing signals on the basis of the computation values of the count values written in the gate timing table register 210 for the computation values.

With respect to other count values (for example, the count value of the differential signal latch signal), the computation values of the count values are obtained by a similar computation method and stored in the gate timing table register 210 for the calculation values.

Since the above-mentioned relational equations (19) to (22) are established at a given rotation speed just as in the case of Embodiment 1, if N2c' (corresponding to the time interval between the first clock pit and the second clock pit) at a given rotation speed is detected, the positions of the first and second wobble pits based on the position of the first clock pit can be determined, and a tracking error signal can be detected. As a result, the tracking error detection apparatus in accordance with the present invention can attain tracking error detection in conformity with the CLV or ZCLV system, even in the case of an optical disc wherein the servo regions inside the disc have a constant length.

Furthermore, tracking error detection was unable to be carried out in the conventional tracking error detection system even during control in conformity with the CAV and ZCAV systems; however, in the disc in accordance with Embodiment 2, tracking error detection can be carried out stably by using the tracking error detection apparatus in accordance with the present invention even during control in conformity with the CAV and ZCAV systems. By using the tracking error detection system in accordance with the present invention as described above, an optical disc apparatus conforming to the sample servo system and having high format efficiency can be attained, and the capacity of the optical disc can be increased.

In addition, although the first clock pit 1016 and the second clock pit 1017 are used as the references for detecting the servo area 1006 in Embodiment 2, if projections and depressions (for example, the edges of grooves) on a disc, which generates minimal value signals just as in the case of the first and second clock pits, are used, an effect similar to that of Embodiment 2 can be obtained. Therefore, the references are not limited to those depending on signals from pits.

<Explanation of a tracking error signal generating method and a control method (FIG. 13)>

A tracking error signal generating method and a control method will be explained by using FIG. 13.

First, the reproduction signal of the pre-pits formed on an optical disc is output (step 1301).

Next, a first clock pit signal is detected from the inside of the reproduction signal (step 1302).

Next, a second clock pit signal is detected, and the interval time between the first clock pit signal and the second clock pit signal (the second clock pit signal interval value) is measured (step 1303).

Next, on the basis of the above-mentioned measured interval time measured and the count values of the various timing signals stored in the built-in gate timing table register, the first wobble pit signal interval value (the leading edge value and the trailing edge value) and the second wobble pit signal interval value (the leading edge value and the trailing edge value) are calculated in accordance with the above-mentioned calculation method (step 1304).

Next, the peak (the first wobble pit signal) of the reproduction signal at the time (the window between the leading edge value and the trailing edge value) delayed by the first wobble pit signal interval value from the first clock pit signal is detected, and the peak (the second wobble pit signal) of the reproduction signal at the time (the window between the leading edge value and the trailing edge value) delayed by the second wobble pit signal interval value from the first clock pit signal is detected (step 1305).

Next, the differential signal (the tracking error signal) between the first wobble pit signal and the second wobble pit signal is generated (step 1306).

Next, tracking control is carried out so that the next differential signal (the tracking error signal) becomes small (the voice coil motor is driven and controlled) (step 1306).

In another embodiment, instead of the count value of the edges of each timing signal at the time when the optical disc is rotated at a constant linear velocity v0, various proportionality constants obtained by the following equations, for example, have been stored in the gate timing table register 209.

$$k3f = T1wf0/T2c0 \quad (23)$$

$$k3r = T1wr0/T2c0 \quad (24)$$

$$k4f = T2wf0/T2c0 \quad (25)$$

$$k4r = T2wr0/T2c0 \quad (26)$$

When it is assumed that the count value 914 of the second clock pits latched by the latch circuit 906 is T2c, the count value T1wf of the leading edges and the count value T1wr of the trailing edges of the first wobble pit detection window signals and the count value T2wf of the leading edges and the count value T2wr of the trailing edges of the second wobble pit detection window signals are represented by the following equations by using these proportionality constants. This embodiment, i.e., another embodiment, has an effect of reducing the number of calculation times.

$$T1wf = T2c \times k3f \quad (27)$$

$$T1wr = T2c \times k3r \quad (28)$$

$$T2wf = T2c \times k4f \quad (29)$$

$$T2wr = T2c \times k4r \quad (30)$$

<Explanation of an optical disc control apparatus in conformity with the CLV system)>

FIG. 14 is a block diagram (a detailed block diagram showing the spindle motor control portion 103 of FIG. 1) showing a control apparatus for rotating the optical disc in accordance with Embodiment 2 in conformity with the CLV system.

The control apparatus of FIG. 14 drives the optical disc in accordance with Embodiment 2 in conformity with the CLV system by using the fact that the distance between the first clock pit and the second clock pit in the optical disc in accordance with Embodiment 2 is constant in the range from the inner circumference to the outer circumference.

The output signal 914 of the latch circuit 906 (FIG. 9) (a count value indicating the interval between the first clock pit and the second clock pit. the second clock pit signal interval value) is used.

In FIG. 14, numeral 1401 designates a target value of the interval time (the count value of the clock signals) between the first clock pit and the second clock pit, numeral 1403 designates a subtracter, numeral 1404 designates a current converter, numeral 1405 designates a voltage converter, numeral 1406 designates a spindle motor driving portion, and 1407 designates an optical disc in accordance with Embodiment 2. Numeral 906 designates the latch circuit shown in FIG. 9. Numeral 102 designates a spindle motor, and numeral 105 designates a head portion.

The subtracter 1403 receives the count value 914 (referred to as a "measured value" in the explanation of FIG. 14) indicating the interval between the first clock pit and the second clock pit from the latch circuit 906, receives its target value 1401, carries out the calculation of a differential signal E = the target value - the measured value, and outputs the differential signal E.

The current converter 1404 receives the differential signal E, carries out the calculation of a target current value $I = Kc \times E$ (Kc is a proportionality constant) and outputs the target current value I. The voltage converter 1405 receives the target current value I and generates an output voltage V. The voltage converter 1405 includes a proportional voltage generator 1411, an integrated voltage generator 1412 and an adder 1413.

The proportional voltage generator 1411 receives the target current I, carries out the calculation of a proportional voltage $Vp = Kp \times I$ (Kp is a proportionality constant) and outputs the proportional voltage Vp.

The integrated voltage generator 1412 receives the target current I, carries out the calculation of an integrated voltage $Vi = Ki \times (\Sigma I)$ (Ki is a proportionality constant) and outputs the integrated voltage Vi.

When it is assumed that the present $\Sigma I$ is $\Sigma I(n)$ and that a new target current value $I(n + 1)$ is input, $\Sigma I(n + 1)$, a new $\Sigma I$, is calculated, for example, by the following equation (31) ($\Sigma I$ becomes a discrete value, since the output signal of the latch circuit is a discrete value). $\alpha$ is a given constant; the smaller the value of $\alpha$, the more significant the effect of the integration.

$$\Sigma I(n + 1) = (1 - \alpha) \cdot \Sigma I(n) + \alpha \cdot I(n + 1) \quad (31)$$

The adder 1413 receives the proportional voltage Vp and the integrated voltage Vi, carries out the calculation of an added signal V = Vp + Vi and outputs the added signal V.

The spindle motor driving portion 1406 controls the rotation of the spindle motor 102 by using the added signal V.

The length between the first clock pit and the second clock pit in the optical disc in accordance with Embodiment 2 is constant, and the control apparatus of FIG. 14 controls the spindle motor 102 so that the differential signal E becomes small, whereby the driving of the optical disc 1407 in conformity with the CLV system is attained.

<Embodiment 3>

A disc-shaped information recording medium control apparatus (including a tracking error signal generating apparatus) in accordance with Embodiment 3 of the present invention will be described by using FIG. 15 to FIG. 19.

FIG. 15 shows the structure of an optical disc of a groove type in accordance with Embodiment 3. The optical disc in accordance with Embodiment 3 has data recording regions in the grooves (groove portions), but has no first clock pit and no second clock pit. Although the optical disc in accordance with Embodiment 3 differs from the optical disc in accordance with Embodiment 1 in this point, its structure is the same as that of the optical disc in accordance with Embodiment 1 in the other points.

The portion (a) of FIG. 15 shows the schematic overall configuration of a magneto-optical disc in accordance with Embodiment 3. In the portion (a) of FIG. 15, numeral 1501 designates an optical disc substrate, numeral 1502 designates a recording film, numeral 1503 designates a first recording track, numeral 1504 designates a second recording track adjacent to the first recording track, numeral 1505 designates a segment obtained by dividing the first recording track 1503 and the second recording track 1504 into 1280 pieces, and numerals 1506 and 1513 designate pre-pit regions (pre-format regions).

The pre-pit regions 1506 and 1513 have a pre-pit region (pre-format region) having a first wobble pit 1508, a second wobble pit 1509 and an address pit 1510.

As shown in the figure, each of the first recording track 1503 and the second recording track 1504 is a spiral region wherein the pre-pit region 1513 is used as a starting point and an ending point; in the case when the spiral recording track is traced from the inner circumference to the outer circumference of the magneto-optical disc, the second recording track 1504 ends in the pre-pit region 1513, and the first recording track 1503 starts in the position (the pre-pit region 1513) wherein the second recording track 1504 ends.

In the portion (a) of FIG. 15 for explaining the format configuration of the magneto-optical disc, the first recording track 1503 and the second recording track 1504 adjacent to each other are shown so as to be significantly magnified in comparison with the overall size of the magneto-optical disc.

The portion (b) of FIG. 15 is a schematic magnified view showing one segment 1505.

In the portion (b) of FIG. 15, the segment 1505 has the pre-pit region (pre-format region) 1506 and a data recording region (recording track) 1515 having a length of 1507.

The pre-pit region 1506 has the first wobble pit 1508 for detecting a tracking signal, the second wobble pit 1509 and the address pit 1510 having address information.

The optical disc in accordance with Embodiment 3 has no first clock pit and no second clock pit; the boundaries (the leading edge and the trailing edge) between the groove portion 1511 and the pre-pit region 1506 can be used as the positional references in the recording track direction of the optical disc.

One of the first wobble pit 1508 and the second wobble pit 1509 is disposed so as to be displaced from the center line of the recording track by a 1/2 track pitch in the inner circumferential direction of the disc, and the other is disposed so as to be displaced from the center line of the recording track by a 1/2 track pitch in the outer circumferential direction of the disc.

The first wobble pit 1508, the second wobble pit 1509 and the address pit 1510 have a depth of about 1/8 of the wavelength $\lambda$ of laser light, and the groove portion 1511 (a data recording region) have a depth of about 1/4 of the wavelength $\lambda$.

The address pit 1510 is similar to the address pit 310 in accordance with Embodiment 1.

The groove portions 1511 adjacent to each other are separated by inter-groove portions 1514, and data recording regions are provided in the groove portions 1511. Data is recorded in the data recording regions.

In the magneto-optical disc in accordance with Embodiment 3, the first wobble pit 1508 and the second wobble pit 1509 for tracking control in conformity with the sample servo system are shared by the adjacent recording tracks.

The first recording track 1503 and the second recording track 1504 being different in tracking polarity (the wobble pits 1508 and 1509 are positioned at the left and right of the extension line of the recording track or positioned conversely at the right and left thereof) are formed alternately in every other circuit.

The magneto-optical disc in accordance with Embodiment 3 has the recording tracks 1503, 1504, etc. formed spirally, and each of the recording tracks 1503, 1504, etc. is divided into 1280 segments 1505 by the pre-pit regions 1506 provided radially (in the radial direction of the magneto-optical disc).

The pre-pit regions 1506 of the respective segments are provided at equiangular intervals, have equiangular regions and are aligned in the radial direction of the magneto-optical disc.

All the pre-pit regions 1506 have similar shapes, and the respective pre-pits are disposed at relatively identical positions in the pre-pit regions.

Hence, in the case when represented by angular coordinates having an origin at the center of the magneto-optical disc, the pre-pit regions are provided at every 360 degrees/1280 pieces = 0.28125 degrees on the magneto-optical disc, regardless of the distance of the position of the recording track from the origin.

An optical disc control apparatus in accordance with Embodiment 3 has a configuration nearly identical to that of the optical disc control apparatus in accordance with Embodiment 1 (FIG. 1).

In the optical disc control apparatus in accordance with Embodiment 1, the differentiating circuit 110 outputs the differentiated signal (the primary differentiated signal. the differentiated reproduction signal) 139 of the reproduction signal 138, and the comparator 111 receives the differentiated reproduction signal 139 and outputs the binarized differentiated reproduction signal 132.

In the optical disc control apparatus in accordance with Embodiment 3, the differentiating circuit 110 outputs the differentiated signal (the primary differentiated signal. the differentiated reproduction signal) 139 and the secondary differentiated signal (the secondary differentiated reproduction signal) 1703 of the reproduction signal 138. The comparator 111 receives the differentiated reproduction signal 139 and the secondary differentiated reproduction signal 1703, carries out binarization depending on constant threshold values (FIG. 17) and outputs the binarized differentiated reproduction signal 132 and a binarized differentiated reproduction signal 1704. In FIG. 17, numeral 1702 designates the threshold value of the secondary differentiated signal 1703.

In these points, the two embodiments are different from each other.

FIG. 16 is a view showing the relationship among the pre-pits, the groove portions and the reproduction signal (the amplified reflected light amount signal). In response to the pre-pit regions 1506 and the groove portions 1511 shown in the portion (a) of FIG. 16, the reproduction signal 138 shown in the portion (b) of FIG. 16 is obtained.

FIG. 17 shows a timing chart for main signals.

At the groove portion 1511, the reflected light amount of the laser beam is smaller than that at the flat portion (the portion having the highest reproduction signal level in the portion (b) of FIG. 16) of the pre-pit region.

By binarizing the reproduction signal 138 depending on the threshold value 1701 as shown in FIG. 17, the binarized reproduction signal 131 that has a rising edge and a falling edge at the boundaries between the groove portion 1511 and the pre-pit region 1506 is obtained.

In the optical disc control apparatus in accordance with Embodiment 3, instead of the first clock pit signal 231 (FIG. 2), an edge signal (a first edge signal) corresponding to the groove trailing edge position of the groove portion 1511 is used.

The edge signal (the boundary from the groove portion 1511 to the pre-pit region 1506) corresponding to the groove trailing edge position 1516 of the groove portion 1511 is referred to as the "first edge signal," and a signal (the boundary from the pre-pit region 1506 to the groove portion 1511) corresponding to the leading edge position 1517 of the groove portion 1511 is referred to as a "second edge signal."

<Explanation of the timing generating circuit>

The timing generating circuit in accordance with Embodiment 3 has a configuration nearly identical to that of the timing generating circuit 116 in accordance with Embodiment 1. In the timing generating circuit 116 in accordance with Embodiment 3, instead of the first clock pit signal 231, a first edge signal 231 is used (the same numeral as that of the first clock pit signal is used).

In the timing generating circuit in accordance with Embodiment 1, the AND gate 203 of a first edge signal discriminator 201 (corresponding to the first clock pit signal discriminator 201 in accordance with Embodiment 1) received the binarized differentiated reproduction signal 132; however, in the timing generating circuit in accordance with Embodiment 3, the AND gate 203 receives the binarized differentiated reproduction signal 1704 instead.

The rising edge of the binarized differentiated reproduction signal 1704 corresponds to the groove trailing edge position of the groove portion 1516.

In addition, the AND gates 218 and 219 receive the binarized differentiated reproduction signal 132, just as in the case of Embodiment 1.

The microcomputer 207 stores, in the gate timing table register 210 for the computation values, the count value 234 (the first edge signal interval value) output from the latch circuit 206 and the computation values of the count values of the timing signals generated on the basis of the count values stored in the gate timing table register 209.

The count values of the timing signals to be stored in the gate timing table register 209 and the gate timing table register 210 for the computation values in Embodiment 1 differ from those in Embodiment 3.

Except for the above-mentioned points, the configuration of the timing generating circuit in accordance with Embodiment 3 is the same as that in accordance with Embodiment 1.

<Explanation of a computation method>

The microcomputer 207 calculates the computation value of the count value of each timing signal.

A computation method in accordance with Embodiment 3 is obtained by replacing $\theta 1w$ in the portions (a) and (b) of FIG. 5 in accordance with Embodiment 1 with the angle from the first edge 1516 to the first wobble pit 1508, by replacing T1w and T1w' with the times required when the beam spot passes through the angle θ1w, by replacing θ2w with the angle from the first edge 1516 to the second wobble pit 1509, by replacing T2w and T2w' with the times required when the beam spot passes through the angle θ2w, by replacing θ1c with the angle from the first edge 1516 to the first edge 1516 of the next pre-pit region, by replacing T1c and T1c' with the times required when the beam spot passes through the angle θ1c, by replacing θ2c with the angle from the first edge 1516 to the second clock pit 1517, and by replacing T2c and T2c' with the times required when the beam spot passes through the angle θ2c.

By using the above-mentioned replaced values, the microcomputer 207 calculates the computation values of various count values by the method described in Embodiment 1 and generates the gate timing table register 210 for the computation values.

The microcomputer 207 calculates the count values N1wr', N1wf' N2wr' and N2wf' in accordance with the equations (5) to (8) or the equations (13) to (16) and writes the calculated values in the gate timing table register 210 for the computation values.

The various timing signal generators, such as a first edge window signal generator 214 (corresponding to the first clock pit window generator 214 in accordance with Embodiment 1), generate various timing signals on the basis of the computation values of the count values written in the gate timing table register 210 for the computation values.

With respect to other count values (for example, the count value of the differential signal latch signal). the computation values of the count values are obtained by a similar computation method and stored in the gate timing table register 210 for the computation values.

By the optical disc control apparatus (including a tracking error signal generating apparatus) in accordance with Embodiment 3, an effect similar to that of the optical disc control apparatus (including a tracking error signal generating apparatus) in accordance with Embodiment 1 can be obtained.

<Explanation of a tracking error signal generating method and a control method (FIG. 19)>

A tracking error signal generating method and a control method in accordance with Embodiment 3 will be explained by using FIG. 19.

First, the reproduction signal of the groove portion, the pre-pits, etc. formed on an optical disc is output (step 1901).

Next, a first edge signal is detected from the inside of the reproduction signal (step 1902).

Next, the interval time between two adjacent first edge signals (the first edge signal interval value) is measured (step 1903).

Next, on the basis of the above-mentioned interval time measured and the count values of the various timing signals stored in the built-in gate timing table register, the first wobble pit signal interval value (the first wobble pit window starting and ending values) and the second wobble pit signal interval value (the second wobble pit window starting and ending values) are computed in accordance with the above-mentioned computation method (step 1904).

The peak (the first wobble pit signal) of the first wobble pit reproduction signal is detected from the window of the above-mentioned first wobble pit, and the peak (the second wobble pit signal) of the second wobble pit reproduction signal is detected from the window of the above-mentioned second wobble pit (step 1905).

Next, the differential signal (the tracking error signal) between the first wobble pit signal and the second wobble pit signal is generated (step 1906).

Next, tracking control is carried out so that the next differential signal (the tracking error signal) becomes small (the voice coil motor is driven and controlled) (step 1907).

Another embodiment has the first edge signal discriminator 201 (FIG. 2) having a configuration different from that of the above-mentioned Embodiment 3 (a similar configuration is also applicable to a second edge signal discriminator 901 (FIG. 9) in accordance with Embodiment 4).

The portion (a) of FIG. 18 shows the waveform of a true reproduction signal of the first edge 1516, and the portion (b) of FIG. 18 shows the waveform of a false reproduction signal of the first edge 1516.

In another embodiment, the first edge signal discriminator 201 can discriminate between the true reproduction signal of the first edge 1516 shown in the portion (a) of FIG. 18 and the false reproduction signal of the first edge 1516 shown in the portion (b) of FIG. 18.

The first edge signal discriminator obtains the reproduction signal 138 at five continuous sampling points in a window determined by the first edge detection signal 242 generated by the AND gate 202 (FIG. 2).

Next, a judgment is made as to whether the five continuous sampling points form a monotone increasing signal or not.

If the five continuous sampling points do not form a monotone increasing signal, the edge is not the true reproduction signal of the first edge 1516.

Next, if the five continuous sampling points form a monotone increasing signal, the level of the reproduction signal at the first sampling point is in a third constant range (V13 to V14) or not and whether the level of the reproduction signal at the fifth sampling point is in a fourth constant range (Vh3 to Vh4) or not.

If the level of the reproduction signal at the first sampling point is in the third constant range and the level of the reproduction signal at the fifth sampling point is in the fourth constant range, the five continuous sampling points form the true reproduction signal of the first edge 1516, whereby the first clock pit signal 231 having the central sampling point of the five continuous sampling points as an edge is generated. If one of the conditions is not satisfied, the five continuous sampling points form a false reproduction signal of the first edge 1516.

With the above-mentioned configuration, the first edge signal discriminator 201 (and the second edge signal discriminator 901) can detect the true edge.

<Embodiment 4>

A disc-shaped information recording medium control apparatus (including a tracking error signal generating apparatus) in accordance with Embodiment 4 of the present invention will be described by using FIG. 20 to FIG. 22.

FIG. 20 shows the structure of an optical disc of a groove type in accordance with Embodiment 4.

The optical disc in accordance with Embodiment 4 has data recording regions in the grooves (groove portions), but has no first clock pit and no second clock pit. Although the optical disc in accordance with Embodiment 4 differs from the optical disc in accordance with Embodiment 2 in this point, its structure is the same as that of the optical disc in accordance with Embodiment 2 in the other points (the pre-pit regions from the inner circumference to the outer circumference have the same length).

The portion (a) of FIG. 20 shows the schematic overall configuration of a magneto-optical disc in accordance with Embodiment 4.

In the portion (a) of FIG. 20, numeral 2001 designates an optical disc substrate, numeral 2002 designates a recording film, numeral 2003 designates a first recording track, numeral 2004 designates a second recording track adjacent to the first recording track, numeral 2005 designates a segment obtained by dividing the first recording track 2003 and the second recording track 2004 into 1280 pieces, and numerals 2006 and 2013 designate pre-pit regions (pre-format regions).

The pre-pit regions 2006 and 2013 have a first wobble pit 2008, a second wobble pit 2009 and an address pit 2010.

As shown in the figure, each of the first recording track 2003 and the second recording track 2004 is a spiral region wherein the pre-pit region 2013 is used as a starting point and an ending point; in the case when the spiral recording track is traced from the inner circumference to the outer circumference of the magneto-optical disc, the second recording track 2004 ends in the pre-pit region 2013, and the first recording track 2003 starts in the position (the pre-pit region 2013) wherein the second recording track 2004 ends.

In the portion (a) of FIG. 20 for explaining the format configuration of the magneto-optical disc, the first recording track 2003 and the second recording track 2004 adjacent to each other are shown so as to be significantly magnified in comparison with the overall size of the magneto-optical disc.

The portion (b) of FIG. 20 is a schematic magnified view showing one segment 2005.

In the portion (b) of FIG. 20, the segment 2005 has the pre-pit region (pre-format region) 2006 and a data recording region (recording track) 2015 having a length of 2007.

The pre-pit region 2006 has the first wobble pit 2008 for detecting a tracking signal, the second wobble pit 2009 and an address pit 2010 having address information.

The optical disc in accordance with Embodiment 4 has no first clock pit and no second clock pit; the boundaries (the leading edge and the trailing edge) between a groove portion 2011 and the pre-pit region 2006 can be used as the positional references in the recording track direction of the optical disc.

One of the first wobble pit 2008 and the second wobble pit 2009 is disposed so as to be displaced from the center line of the recording track by a 1/2 track pitch in the inner circumferential direction of the disc, and the other is disposed so as to be displaced from the center line of the recording track by a 1/2 track pitch in the outer circumferential direction of the disc.

The first wobble pit 2008, the second wobble pit 2009 and the address pit 2010 have a depth of about 1/8 of the wavelength $\lambda$ of laser light, and the groove portion 2011 (a data recording region) have a depth of about 1/4 of the wavelength $\lambda$.

The address pit 2010 is similar to the address pit 310 in accordance with Embodiment 1.

The adjacent groove portions 2011 are separated by inter-groove portions 2014, and data recording regions are provided in the groove portions 2011. Data is recorded in the data recording regions.

In the magneto-optical disc in accordance with Embodiment 4, the first wobble pit 2008 and the second wobble pit 2009 for tracking control in conformity with the sample servo system are shared with adjacent recording tracks.

The first recording track 2003 and the second recording track 2004 being different in tracking polarity (the wobble pits 2008 and 2009 are positioned at the left and right of the extension line of the recording track or positioned conversely at the right and left thereof) are formed alternately in every other circuit.

The magneto-optical disc in accordance with Embodiment 4 has the recording tracks 2003, 2004, etc. formed spirally, and each of the recording tracks 2003, 2004, etc. is divided into 1280 segments 2005 by the pre-pit regions 2006 each provided radially (in the radial direction of the magneto-optical disc).

The pre-pit regions 2006 of the respective segments are provided at equiangular intervals and have regions of an equal length, and the leading edges 2016 of the pre-pit regions are aligned in the radial direction of the magneto-optical disc.

All the pre-pit regions 2006 have similar shapes, and the respective pre-pits are disposed at identical positions in the pre-pit regions.

Hence, in the case when represented by angular coordinates having an origin at the center of the magneto-optical disc, the first wobble pits 2008 are provided radially at every 360 degrees/1280 pieces = 0.28125 degrees on the magneto-optical disc, regardless of the distance of the position of the track position from the origin. The other pits (the second wobble pit 2009 and the address pit 2010) become parallel to the first wobble pit 2008 in the radial direction. All the pre-pit regions 2006 have a nearly identical shape, and each pre-pit is disposed at the same position in the pre-pit region. Just as in the case of Embodiment 2, in the case of this embodiment, the pre-pit region is not expanded radially; hence, tracking error detection cannot be carried out by using the conventional tracking error detection apparatus.

An optical disc control apparatus in accordance with Embodiment 4 has a configuration nearly identical to that of the optical disc control apparatus in accordance with Embodiment 2 (FIG. 1).

In the optical disc control apparatus in accordance with Embodiment 2, the differentiating circuit 110 outputs the differentiated signal (the primary differentiated signal, i.e., the differentiated reproduction signal) 139 of the reproduction signal 138, and the comparator 111 receives the differentiated reproduction signal 139 and outputs the binarized differentiated reproduction signal 132; however, in the optical disc control apparatus in accordance with Embodiment 4, the differentiating circuit 110 outputs the differentiated signal (the primary differentiated signal. the differentiated reproduction signal) 139 and the secondary differentiated reproduction signal (secondary differentiated reproduction signal) 1703 of the reproduction signal 138, and the comparator 111 receives the differentiated reproduction signal 139 and the secondary differentiated reproduction signal 1703, carries out binarization depending on certain threshold values (FIG. 17) and outputs the binarized differentiated reproduction signal 132 and the binarized secondary differentiated reproduction signal 1704.

In these points, the two embodiments are different.

By replacing the numerals on the order of 1500s in FIG. 16 (the figure used in Embodiment 3) with the numerals on the order of 2000s (for example, by replacing 1516 with 2016), FIG. 16 having the replaced numerals shows the relationship among the pre-pits, the groove portions and reproduction signal (the amplified reflected light amount signal) in accordance with Embodiment 4.

In response to the pre-pit regions 2006 and the groove portions 2011 shown in the portion (a) of FIG. 16, the reproduction signal 138 shown in the portion (b) of FIG. 16 is obtained.

FIG. 21 shows a timing chart for main signals.

At the groove portion 2011, the reflected light amount of the laser beam is smaller than that at the flat portion (the portion having the highest reproduction signal level in the portion (b) of FIG. 16) of the pre-pit region.

By binarizing the reproduction signal 138 depending on the threshold value 1701 as shown in FIG. 17, the binarized reproduction signal 131 that has a rising edge and a falling edge at the boundaries between the groove portion 2011 and the pre-pit region 2006 is obtained.

In the optical disc control apparatus in accordance with Embodiment 4, instead of the first clock pit signal 231 (FIG. 2), the edge signal (a first edge signal) of the trailing edge position 2016 (the boundary from the groove portion 2011 to the pre-pit region 2006) of the groove portion 2011 is used, and instead of the second clock pit signal 911 (FIG. 9), the edge signal (a second edge signal) of the leading edge position 2017 (the boundary from the pre-pit region 2006 to the groove portion 2011) of the groove portion 2011 is used.

<Explanation of the timing generating circuit>

The timing generating circuit in accordance with Embodiment 4 has a configuration nearly identical to that of the timing generating circuit 116 in accordance with Embodiment 2 (FIG. 9). In the timing generating circuit in accordance with Embodiment 4, instead of the first clock pit signal 231, a first edge signal 231 is used, and instead of the second clock pit signal 911, a second edge signal 911 is used.

The first edge signal 231 and the second edge signal 911 are designated by the same numerals as those of the first edge signal 231 and the second clock pit signal 911.

In the timing generating circuit in accordance with Embodiment 2, the AND gates 203 and 903 received the binarized differentiated reproduction signal 132; however, in the timing generating circuit in accordance with Embodiment 4, the AND gate 203 of the first edge signal discriminator 201 (corresponding to the first clock pit signal discriminator 201 in accordance with Embodiment 2) and the AND gate 903 of the second edge signal discriminator 901 (corresponding to the second clock pit signal discriminator 901 in accordance with Embodiment 2) receive the binarized secondary differentiated reproduction signal 1704.

The rising edge of the binarized secondary differentiated reproduction signal 1704 becomes nearly the center of the reproduction signal between the trailing edge and the leading edge of the groove portion 1516.

In addition, the AND gates 218 and 219 receive the binarized differentiated reproduction signal 132, just as in the case of Embodiment 2.

The microcomputer 207 stores, in the gate timing table register 210 for the computation values, the count value 914 (the second edge signal interval value) output from the latch circuit 206 and the computation values of the count values of the timing signals generated on the basis of the count values stored in the gate timing table register 209.

The count values of the timing signals to be stored in the gate timing table register 209 and the gate timing table register 210 for the computation values in Embodiment 2 differ from those in Embodiment 4.

Except for the above-mentioned points, the configuration of the timing generating circuit in accordance with Embodiment 4 is the same as that in accordance with Embodiment 2.

<Explanation of a computation method>

The microcomputer 207 calculates the computation value of the count value of each timing signal.

A computation method in accordance with Embodiment 4 is obtained by replacing L1w in the portions (a) and (b) of FIG. 11 in accordance with Embodiment 2 with the length from the first edge 2016 to the first wobble pit 2008, by replacing T1w and T1w' with the times required when the beam spot passes through the length L1w, by replacing L2w with the length from the first edge 2016 to the second wobble pit 2009, by replacing T2w and T2w' with the times required when the beam spot passes through the length L2w, by replacing L1c with the length from the first edge 2016 to the first edge 2016 of the next pre-pit region, by replacing T1c and T1c' with the times required when the beam spot passes through the length L1c, by replacing L2c with the length from the first edge 2016 to the second clock pit 2017, and by replacing T2c and T2c' with the times required when the beam spot passes through the length L2c.

By using the above-mentioned replaced values, the microcomputer 207 calculates the computation values of various count values by the method described in Embodiment 2 and generates the gate timing table register 210 for the computation values.

The microcomputer 207 calculates the count values N1wr', N1wf', N2wr' and N2wf' in accordance with the equations (19) to (22) or the equations (27) to (30) and writes the calculated values in the gate timing table register 210 for the computation values.

The various timing signal generators, such as a first edge window signal generator 214 (corresponding to the first clock pit window generator 214 in accordance with Embodiment 2) and a second edge window signal generator 905 (corresponding to the second clock pit window generator 905 in accordance with Embodiment 2), generate various timing signals on the basis of the computation values of the count values written in the gate timing table register 210 for the computation values.

With respect to other count values (for example, the count value of the differential signal latch signal), the computation values of the count values are obtained by a similar computation method and stored in the gate timing table register 210 for the computation values.

By the optical disc control apparatus (including a tracking error signal generating apparatus) in accordance with Embodiment 4, an effect similar to that of the optical disc control apparatus (including a tracking error signal generating apparatus) in accordance with Embodiment 2 can be obtained.

<Explanation of a tracking error signal generating method and a control method (FIG. 22)>

A tracking error signal generating method and a control method in accordance with Embodiment 4 will be explained by using FIG. 22.

First, the reproduction signal of the groove portion, the pre-pits, etc. formed on an optical disc is output (step 2201).

Next, a first edge signal is detected from the inside of the reproduction signal (step 2202).

Next, a second edge signal is detected, and the interval time between the first edge signal and the second edge signal (the second edge signal interval value) is measured (step 2203).

Next, on the basis of the above-mentioned interval time measured and the count values of the various timing signals stored in the built-in gate timing table register, the first wobble pit signal interval value and the second wobble pit signal interval value (the second wobble pit window starting and ending values) are computed in accordance with the above-mentioned computation method (step 1904).

The peak (the first wobble pit signal) of the first wobble pit reproduction signal is detected from the window of the above-mentioned first wobble pit, and the peak (the second wobble pit signal) of the second wobble pit reproduction signal is detected from the window of the above-mentioned second wobble pit (step 1905).

Next, on the basis of the above-mentioned interval time measured and the count values of the various timing signals stored in the built-in gate timing table register, the first wobble pit signal interval value (the first wobble pit window starting and ending values) and the second wobble pit signal interval value (the second wobble pit window starting and ending values) are computed in accordance with the above-mentioned calculation method (step 2204).

Next, the peak (the first wobble pit signal) of the first wobble pit reproduction signal is detected from the window of the above-mentioned first wobble pit, and the peak (the second wobble pit signal) of the second wobble pit reproduction signal is detected from the window of the above-mentioned second wobble pit (step 2205).

Next, the differential signal (the tracking error signal) between the first wobble pit signal and the second wobble pit signal is generated (step 2206).

Next, tracking control is carried out so that the next differential signal (the tracking error signal) becomes small (the voice coil motor is driven and controlled) (step 2207).

<Explanation of the optical disc control apparatus in conformity with the CLV system>

By using a configuration similar to that of the optical disc control apparatus in accordance with Embodiment 2 (FIG. 14), and by controlling the interval time between the first edge signal and the second edge signal (the second edge signal interval value) at a constant value, the optical disc control apparatus in accordance with Embodiment 4 can attain the driving of a magneto-optical disc in conformity with the CLV system.

<Embodiment 5>

A disc-shaped information recording medium control apparatus (including a tracking error signal generating apparatus) in accordance with Embodiment 5 of the present invention will be described by using FIG. 23 and FIG. 24.

FIG. 23 shows the structure of an optical disc of a land type in accordance with Embodiment 5.

The optical disc in accordance with Embodiment 5 has data recording regions in lands (inter-groove portions), and thus differs from the optical disc in accordance with Embodiment 3 having data recording regions in the grooves (groove portions). Although the optical disc in accordance with Embodiment 5 differs from the optical disc in accordance with Embodiment 3 in this point, its structure is the same as that of the optical disc in accordance with Embodiment 3 in the other points.

The portion (a) of FIG. 23 shows the schematic overall configuration of a magneto-optical disc in accordance with Embodiment 5.

In the portion (a) of FIG. 23, numeral 2301 designates an optical disc substrate, numeral 2302 designates a recording film, numeral 2303 designates a first recording track, numeral 2304 designates a second recording track adjacent to the first recording track, numeral 2305 designates a segment obtained by dividing the first recording track 2303 and the second recording track 2304 into 1280 pieces, and numerals 2306 and 2313 designate pre-pit regions (pre-format regions).

The pre-pit regions 2306 and 2313 each have a first wobble pit 2308, a second wobble pit 2309 and an address pit 2310.

As shown in the figure, each of the first recording track 2303 and the second recording track 2304 is a spiral region wherein the pre-pit region 2313 is used as a starting point and an ending point; in the case when the spiral recording track is traced from the inner circumference to the outer circumference of the magneto-optical disc, the second recording track 2304 ends in the pre-pit region 2313, and the first recording track 2303 starts in the position (the pre-pit region 2313) wherein the second recording track 2304 ends.

In the portion (a) of FIG. 23 for explaining the format configuration of the magneto-optical disc, the first recording track 2303 and the second recording track 2304 adjacent to each other are shown so as to be significantly magnified in comparison with the overall size of the magneto-optical disc.

The portion (b) of FIG. 23 is a schematic magnified view showing one segment 2305.

In the portion (b) of FIG. 23, the segment 2305 has the pre-pit region (pre-format region) 2306 and a data recording region (recording track) 2315 having a length of 2307.

The pre-pit region 2306 has the first wobble pit 2308 for detecting a tracking signal, the second wobble pit 2309 and the address pit 2310 having address information.

In the optical disc in accordance with Embodiment 5, just as in the case of the optical disc in accordance with Embodiment 3, the boundaries (the leading edge and the trailing edge) between a groove portion 2311 and the pre-pit region 2306 can be used as the positional references in the recording track direction of the optical disc.

One of the first wobble pit 2308 and the second wobble pit 2309 is disposed so as to be displaced from the center line of the recording track by a 1/2 track pitch in the inner circumferential direction of the disc, and the other is disposed so as to be displaced from the center line of the recording track by a 1/2 track pitch in the outer circumferential direction of the disc.

The first wobble pit 2308, the second wobble pit 2309 and the address pit 2310 have a depth of about 1/8 of the wavelength λ of laser light, and the groove portion 2311 have a depth of about 1/4 of the wavelength λ.

The address pit 2310 is similar to the address pit 310 in accordance with Embodiment 1.

The inter-groove portions 2314 are separated by the groove portions 2311, and data recording regions are provided in the inter-groove portions 2314. Data is recorded in the data recording regions.

In the magneto-optical disc in accordance with Embodiment 5, the first wobble pit 2308 and the second wobble pit 2309 for tracking control in conformity with the sample servo system are shared by the adjacent recording tracks.

The first recording track 2303 and the second recording track 2304 being different in tracking polarity (the wobble pits 2308 and 2309 are positioned at the left and right of the extension line of the recording track or positioned conversely at the right and left thereof) are formed alternately in every other circuit.

The magneto-optical disc in accordance with Embodiment 5 has the recording tracks 2303, 2304, etc. formed spirally, and each of the recording tracks 2303, 2304, etc. is divided into 1280 segments 2305 by the pre-pit regions 2306 provided radially (in the radial direction of the magneto-optical disc).

The pre-pit regions 2306 of the respective segments are provided at equiangular intervals, have equiangular regions and are aligned in the radial direction of the magneto-optical disc.

All the pre-pit regions 2306 have similar shapes, and the respective pre-pits are disposed at relatively identical positions in the pre-pit regions.

Hence, in the case when represented by angular coordinates having an origin at the center of the magneto-optical disc, the pre-pit regions are provided at every 360 degrees/1280 pieces = 0.28125 degrees on the magneto-optical disc, regardless of the distance of the position of the recording track from the origin.

An optical disc control apparatus in accordance with Embodiment 5 has a configuration nearly identical to that of the optical disc control apparatus in accordance with Embodiment 3 (FIG. 1).

FIG. 24 is a view showing the relationship among the pre-pits, the groove portions and the reproduction signal (the amplified reflected light amount signal). In response to the pre-pit regions 2306 and the inter-groove portions 2314 shown in the portion (a) of FIG. 24, the reproduction signal 138 shown in the portion (b) of FIG. 24 is obtained.

At the inter-groove portion 2314, just as in the case of the groove portion 2011 in accordance with Embodiment 3 shown in FIG. 16, the reflected light amount of the laser beam is smaller than that at the flat portion (the portion having the highest reproduction signal level in the portion (b) of FIG. 24) of the pre-pit region.

In Embodiment 5, signals similar to the signals shown in FIG. 17 (the figure of Embodiment 3) are obtained.

By binarizing the reproduction signal 138 depending on the threshold value 1701 as shown in FIG. 17, the binarized reproduction signal 131 that has a rising edge and a falling edge at the boundaries between the inter-groove portion 2314 and the pre-pit region 2306 is obtained in Embodiment 5.

In the optical disc control apparatus in accordance with Embodiment 3, the edge signal at the trailing end position 2016 of the groove portion 2011 is used; however, in the optical disc control apparatus in accordance with Embodiment 5, the edge signal (a first edge signal) at the trailing end position 2316 (the boundary from the inter-groove portion 2314 to the pre-pit region 2306) of the inter-groove portion 2314 is used.

The trailing end position 2316 (the boundary from the inter-groove portion 2314 to the pre-pit region 2306) of the inter-groove portion 2314 is referred to as a "first edge," and the leading end position 2317 (the boundary from the pre-pit region 2306 to the inter-groove portion 2314) of the inter-groove portion 2314 is referred to as a "second edge."

The reproduction signal of the first edge is referred to as a first edge signal, and the reproduction signal of the second edge is referred to as a second edge signal.

<Explanation of the timing generating circuit>

The configuration of the timing generating circuit and the computation method by the microcomputer in accordance with Embodiment 5 are the same as the configuration of the timing generating circuit and the computation method by the microcomputer in accordance with Embodiment 3.

By the optical disc control apparatus (including a tracking error signal generating apparatus) in accordance with Embodiment 5, an effect similar to that of the optical disc control apparatus (including a tracking error signal generating apparatus) in accordance with Embodiment 3 can be obtained.

Also in the case when the pre-pit regions of the optical disc in accordance with Embodiment 5 are formed to have a shape having the same length just as in the case of Embodiment 4, an optical disc control apparatus (including a tracking error signal generating apparatus and a control apparatus in conformity with the CLV system) similar to the optical disc control apparatus (including a tracking error signal generating apparatus and a control apparatus in conformity with the CLV system) in accordance with Embodiment 4 can be attained, and a similar effect is obtained.

<Embodiment 6>

A disc-shaped information recording medium control apparatus (including a tracking error signal generating apparatus) in accordance with Embodiment 6 of the present invention will be described by using FIG. 25 and FIG. 26.
FIG. 25 shows the structure of an optical disc of a land/groove type in accordance with Embodiment 6.
The optical disc in accordance with Embodiment 6 has data recording regions in grooves (groove portions) and lands (inter-groove portions), and thus differs from the optical disc in accordance with Embodiment 3 having data recording regions only in the grooves (groove portions). Although the optical disc in accordance with Embodiment 6 differs from the optical disc in accordance with Embodiment 3 in this point, its structure is the same as that of the optical disc in accordance with Embodiment 3 in the other points.
The portion (a) of FIG. 25 shows the schematic overall configuration of a magneto-optical disc in accordance with Embodiment 6.
In the portion (a) of FIG. 25, numeral 2501 designates an optical disc substrate, numeral 2502 designates a recording film, numeral 2503 designates a first recording track, numeral 2504 designates a second recording track adjacent to the first recording track, numeral 2505 designates a segment obtained by dividing the first recording track 2503 and the second recording track 2504 into 1280 pieces, and numerals 2506 and 2513 designate pre-pit regions (pre-format regions).
The pre-pit regions 2506 and 2513 have a first wobble pit 2508, a second wobble pit 2509 and an address pit 2510.
As shown in the figure; each of the first recording track 2503 and the second recording track 2504 is a spiral region wherein the pre-pit region 2513 is used as a starting point and an ending point; in the case when the spiral recording track is traced from the inner circumference to the outer circumference of the magneto-optical disc, the second recording track 2504 ends in the pre-pit region 2513, and the first recording track 2503 starts in the position (the pre-pit region 2513) wherein the second recording track 2504 ends.
In the portion (a) of FIG. 25 for explaining the format configuration of the magneto-optical disc, the first recording track 2503 and the second recording track 2504 adjacent to each other are shown so as to be significantly magnified in comparison with the overall size of the magneto-optical disc.
The portion (b) of FIG. 25 is a schematic magnified view showing one segment 2505.
In the portion (b) of FIG. 25, the segment 2505 has the pre-pit region (pre-format region) 2506 and a data recording region (recording track) 2515 having a length of 2507.
The pre-pit region 2506 has the first wobble pit 2508 for detecting a tracking signal, the second wobble pit 2509 and the address pit 2510 having address information.
In the optical disc in accordance with Embodiment 6, just as in the case of the optical disc in accordance with Embodiment 3, the boundaries (the leading edge and the trailing edge) between a groove portion 2511 and the pre-pit region 2506 and between an inter-groove portion 2514 and the pre-pit region 2506 can be used as the positional references in the recording track direction of the optical disc.
One of the first wobble pit 2508 and the second wobble pit 2509 is disposed so as to be displaced from the center line of the recording track by a 1/2 track pitch in the inner circumferential direction of the disc, and the other is disposed so as to be displaced from the center line of the recording track by a 1/2 track pitch in the outer circumferential direction of the disc.
The first wobble pit 2508, the second wobble pit 2509 and the address pit 2510 have a depth of about 1/8 of the wavelength $\lambda$ of laser light, and the groove portion 2511 have a depth of about 1/4 of the wavelength $\lambda$.
The address pit 2510 is similar to the address pit 310 in accordance with Embodiment 1.
The groove portions 2511 are separated by the inter-groove portions 2514, and data recording regions are provided in the groove portions 2511 and the inter-groove portions 2514. Data is recorded in the data recording regions.
In the magneto-optical disc in accordance with Embodiment 6, the first wobble pit 2508 and the second wobble pit 2509 for tracking control in conformity with the sample servo system are shared by the adjacent recording tracks.
The first recording track 2503 and the second recording track 2504 being different in tracking polarity (the wobble pits 2508 and 2509 are positioned at the left and right of the extension line of the recording track or positioned conversely at the right and left thereof) are formed alternately in every other circuit.
The magneto-optical disc in accordance with Embodiment 6 has the recording tracks 2503, 2504, etc. formed spirally, and each of the recording tracks 2503, 2504, etc. is divided into 1280 segments 2505 by the pre-pit regions 2506 provided radially (in the radial direction of the magneto-optical disc).
The pre-pit regions 2506 of the respective segments are provided at equiangular intervals, have equiangular regions and are aligned in the radial direction of the magneto-optical disc.
All the pre-pit regions 2506 have similar shapes, and the respective pre-pits are disposed at relatively identical positions in the pre-pit regions.
Hence, in the case when represented by angular coordinates having an origin at the center of the magneto-optical disc, the pre-pit regions are provided at every 360 degrees/1280 pieces = 0.28125 degrees on the magneto-optical disc, regardless of the distance of the position of the recording track from the origin.

An optical disc control apparatus in accordance with Embodiment 6 has a configuration nearly identical to that of the optical disc control apparatus in accordance with Embodiment 3 (FIG. 1).

FIG. 26 is a view showing the relationship among the pre-pits, the groove portions and the reproduction signal (the amplified reflected light amount signal). In response to the pre-pit regions 2506 and the groove portions 2511 or the inter-groove portions 2514 shown in the portion (a) of FIG. 26, the reproduction signal 138 shown in the portion (b) of FIG. 26 is obtained. A similar waveform is also obtained in the case when the beam spot moves from the groove portion 2511 to the pre-pit region 2506 and further from the pre-pit region 2506 to the groove portion 2511 and in the case when the beam spot moves from the inter-groove portion 2514 to the pre-pit region 2506 and further from the pre-pit region 2506 to the inter-groove portion 2514.

At the groove portion 2511 and the inter-groove portion 2514, just as in the case of the groove portion 2011 in accordance with Embodiment 3, the reflected light amount of the laser beam is smaller than that at the flat portion (the portion having the highest reproduction signal level in the portion (b) of FIG. 26) of the pre-pit region.

In Embodiment 6, signals similar to the signals shown in FIG. 17 (the figure of Embodiment 3) are obtained.

By binarizing the reproduction signal 138 depending on the threshold value 1701 as shown in FIG. 17, the binarized reproduction signal 131 that has a rising edge and a falling edge at the boundaries between the groove portion 2511 and the pre-pit region 2506 is obtained in Embodiment 6.

In the optical disc control apparatus in accordance with Embodiment 3, the edge signal at the trailing end 2016 of the groove portion 2011 is used; however, in the optical disc control apparatus in accordance with Embodiment 6, the edge signal (a first edge signal) at the trailing end position 2516 (the boundary from the groove portion 2511 or the inter-groove portion 2514 to the pre-pit region 2506) of the groove portion 2511 and the inter-groove portion 2514 is used.

The trailing end position 2516 (the boundary from the groove portion 2511 or the inter-groove portion 2514 to the pre-pit region 2506) of the groove portion 2511 and the inter-groove portion 2514 is referred to as a "first edge," and the leading end 2517 (the boundary from the pre-pit region 2506 to the groove portion 2511 or the inter-groove portion 2514) of the groove portion 2511 and the inter-groove portion 2514 is referred to as a "second edge."

The reproduction signal of the first edge is referred to as a first edge signal, and the reproduction signal of the second edge is referred to as a second edge signal.

<Explanation of the timing generating circuit>

The configuration of the timing generating circuit and the computation method by the microcomputer in accordance with Embodiment 6 are the same as the configuration of the timing generating circuit and the computation method by the microcomputer in accordance with Embodiment 3.

By the optical disc control apparatus (including a tracking error signal generating apparatus) in accordance with Embodiment 6, an effect similar to that of the optical disc control apparatus (including a tracking error signal generating apparatus) in accordance with Embodiment 3 can be obtained.

Also in the case when the pre-pit regions of the optical disc in accordance with Embodiment 6 are formed to have a shape having the same length just as in the case of Embodiment 4, an optical disc control apparatus (including a tracking error signal generating apparatus and a control apparatus in conformity with the CLV system) similar to the optical disc control apparatus (including a tracking error signal generating apparatus and a control apparatus in conformity with the CLV system) in accordance with Embodiment 4 can be attained, and a similar effect is obtained.

<Embodiment 7>

A disc-shaped information recording medium control apparatus (including a tracking error signal generating apparatus) in accordance with Embodiment 7 of the present invention will be described by using FIG. 27 to FIG. 32. The optical disc for use in the disc-shaped information recording medium control apparatus in accordance with this embodiment is the same as that in accordance with Embodiment 2. The explanation of the optical disc is omitted. FIG. 27 is a view showing the configuration of the optical disc control apparatus in accordance with Embodiment 7. In FIG. 27, numeral 2701 designates an optical disc (magneto-optical disc) wherein data is recorded, numeral 2702 designates a spindle motor for rotating the optical disc 2701, numeral 2703 designates a spindle motor control portion for driving the spindle motor 2702, numeral 2704 designates a beam spot wherein light is gathered at the magnetic recording layer on the optical disc 2701, numeral 2705 designates a head portion including a laser, an optical pickup, a photoreceptor, etc., numeral 2706 designates a laser APC (Auto Power Control) circuit, numeral 2707 designates a head amp, numeral 2708 designates a focus servo circuit, numeral 2709 designates a tracking error detection portion, numeral 2710 designates a data-use PLL, and numeral 2711 designates a tracking servo circuit. The data-use PLL 2710 and the tracking error detection portion 2709 differ from those of Embodiment 2.

<Explanation of the tracking error detection portion>

The tracking error detection portion 2709 will be described in detail by using a block diagram of the tracking error detection portion shown in FIG. 28 and a timing chart shown in FIG. 29. First, the block diagram of the tracking error detection portion shown in FIG. 28 will be described. FIG. 28 is an internal block diagram showing the data-use PLL 2710 and the tracking error detection portion 2709. In FIG. 28, numeral 2801 designates a variable gain amp for adjusting the amplitude of an addition signal (the output signal of the head amp 2707 and the addition signal of two polarization signals) depending on the input range of an A/D converter 2802, numeral 2802 designates the A/D converter for converting the addition signal from an analog signal to a digital signal, numeral 2803 designates a signal level detector for detecting a pit signal level from the addition signal, numeral 2804 designates a pit detector for detecting a pit position on the basis of the change (the output signal of the A/D converter 2802) of the amplitude of the addition signal and the output (a signal for designating a slice level C shown in FIG. 30) from the signal level detector 2803, numeral 2805 designates a clock pit 1 level detector for detecting the average level of a clock pit 1, numeral 2806 designates a clock pit 2 level detector for detecting the average level of a clock pit 2, numeral 2807 designates a clock pit 1 detector for detecting the clock pit 1 on the basis of a time-related window and a signal level condition, numeral 2808 designates a clock pit 2 detector for detecting the clock pit 2 on the basis of a time-related window and a signal level condition, numeral 2809 designates a clock pit 1 period measuring device for measuring the period of the clock pits on the basis of the detection timing of the clock pit 1 detector 2807 and the position information of the pit detector 2804, numeral 2811 designates a servo area distance measuring device for measuring the length of a pre-pit region on the basis of the detection timing of the clock pit 1 detector 2807, the detection timing of the clock pit 2 detector 2808 and the position information of the pit detector 2804, numeral 2811 designates a window generator for generating windows for detecting the clock pits 1 and 2 and wobble pits 1 and 2 on the basis of the period information of the clock pit 1 period measuring device and the servo area length information of the servo area distance measuring device, numeral 2812 designates a motor period measuring device for transmitting present rotation period information to the clock pit 1 period measuring device 2809 and the servo area distance measuring device 2810 and for measuring a period and a rotation period for improving the detection accuracy of the servo area distance measuring device 2810, numeral 2813 designates a wobble 1 bottom level detector for detecting the level of the wobble pit 1, numeral 2813 designates a wobble 2 bottom level detector for detecting the level of the wobble pit 2, and numeral 2915 designates a D/A converter for converting a tracking error signal into an analog amount. The operation of the tracking error signal detector configured as described above will be divided depending on operation mode and explained.

The tracking error signal detector in accordance with this embodiment operates in the following four modes when divided broadly.

(1) Addition signal amplification factor determination mode
(2) Signal level detection mode
(3) Segment period and servo area zone initial measurement mode
(4) Tracking error signal detection lock mode
(5) Clock pit detection error mode

Each of these modes will be described by using FIG. 29. These modes are started by a focus-on signal. The signal level detector 2803 and the pit detector 2804 start operation by receiving the focus-on signal. By stopping operation when the state is not the focus-on state, malfunction of the tracking error signal detector caused by improper input during a focus-off time can be prevented.

(1) Addition signal amplification factor determination mode (FIG. 29)

Since the level of the signal to be input to the A/D converter 2802 changes significantly owing to the reflectivity of the disc and the modulation factor of pits, it is necessary to adjust the level of the signal to be input to the A/D converter 2802 to a considerably constant level. This adjustment zone is the addition signal amplification factor determination mode. FIG. 29 shows the operation in this mode. In a time during which one segment passes definitely, the maximum value and the minimum value in the zone are obtained, and this measurement is repeated a plurality of times and averaged, whereby the maximum value and the minimum value of the signal from the disc are obtained. The difference therebetween becomes the modulation factor A of the pit portions. On the basis of this modulation factor A, the gain of the variable gain amp 2801 is adjusted so that the level of the signal to the A/D converter 2802 becomes an optimal level B. This gain adjustment signal is output as a PWM signal in the case of this embodiment.

When the gain adjustment signal is obtained, the addition signal amplification factor determination mode is finished and shifts to the signal level detection mode.

(2) Signal level detection mode

As the next mode, the detection level of the pits and the detection level of the clock pits are set. First, C is determined as the detection slice level of the pits simultaneously with the gain adjustment. This detection slice level C is 1/16 of the pit amplitude level B after the gain adjustment. By using this pit detection slice level C, only the signal having an amplitude higher than this level is detected as a pit signal by the pit detector 2804, whereby the signal of the pit portions can be detected securely. In the case when the levels P, Q and R of the signal, sampled sequentially and asynchronously with the reproduction signal of the pits, satisfy P > Q or R > Q and have a bottom value B not higher than the slice level C at the A/D converter 2802 as shown in FIG. 30, the pit detector 2804 outputs the signal as a pit detection signal. If the setting of this detection level C is not carried out, there is a possibility of detecting the change of the reproduction signal in portions other than the pit portions as pits. By using this level condition, the pit signal can be detected securely.

(3) Segment period and servo area zone initial measurement mode (FIG. 31)

FIG. 31 shows the segment period and servo area zone initial measurement mode. In the signal level detection mode, since all pits are detected, it is necessary to extract the clock pit 1 and the clock pit 2 from the pits, to detect the period SP of the segment 1005 and the length SL of the servo area and to detect the wobble pits by opening windows by using SP and SL just as in the case of Embodiment 2. The mode for detecting the clock pit 1 and the clock pit 2 in this initial stage is the segment period and servo area zone initial measurement mode. As shown in FIG. 31, when a pit detection signal is not detected in a constant zone T, a space detection signal changes from a Low level to a High level. When this space detection signal is in the High level state, in other words, when a constant space is detected, the first pit detection signal becomes the clock pit 1. In the segment period and servo area zone initial measurement mode, the clock pit 1 detector 2807 detects the clock pit 1 from the space signal. The clock pit 1 detection signal detected on the basis of this space detection signal is input to the clock pit 1 period measuring device 2809. The clock pit 1 period measuring device 2809 measures the period SP of the segment 1005 on the basis of the bottom position information obtained by the interpolation process of sample points by the pit detector 2804 and the clock pit detection information from the clock pit 1 detector 2807.

Furthermore, as shown in FIG. 31, the last pit detection signal detected in the Low level period of the space detection signal becomes the clock pit 2. The clock pit 2 detector 2808 detects the clock pit 2 from the space signal in the segment period and servo area zone initial measurement mode. The clock pit 2 detection signal detected on the basis of this space detection signal is input to the servo area distance measuring device 2810. Just as in the case of the clock pit 1 period measurement, the segment length measuring device 2810 measures the period SL of the segments 1005 on the basis of the pit bottom position information obtained by the interpolation process of sample points by the pit detector 2804, the clock pit 1 detection information from the clock pit 1 detector 2807 and the clock pit 2 detection information from the clock pit 2 detector 2808. By detecting the bottom of the pit signal by the interpolation process of sample points, accurate period measurement can be made possible even in a rough clock period, whereby the reduction of the power consumption of the detection circuit can be attained.

The clock pit 1 period measuring device 2809 and the servo area distance measuring device (segment length measuring device) 2810 can approximately judge the segment period SP and the servo area length SL from the motor period measured by the motor period measuring device 2812; hence, in the case when SP and SL are not within ±20% of the segment period calculated from the motor period, these are judged as errors and not adopted as period information. Malfunctions in which the segment period measurement is carried out at periods two or more times as high as the segment period by mistake are prevented by this protection.

After the measurement of SP and SL, the segment period and servo area zone initial measurement mode is finished and shifts to the tracking error signal detection lock mode.

(4) Tracking error signal detection lock mode

By using the period SP and SL measured as described above, a detection window for detecting the clock pit 1 and the clock pit 2 on the time axis is generated by the window generator 2811. By using this detection window, the next clock pit 1 signal, clock pit 2 signal, period SP and SL can be measured. In addition, similarly, from the level information of the clock pit 1 signal detected by the clock pit 1 level detector 2805 and the level information of the clock pit 2 signal detected by the clock pit 2 level detector 2806, the window generator 2811 generates detection windows U1, D1, U2 and D2 for detecting the levels of the clock pit 1 and 2 and protects the detection of the clock pits 1 and 2. With this configuration, the reliability of the measurement of SP and SL can be improved. FIG. 32 shows a state wherein the window generator 2811 detects the clock pit 1 signal and the clock pit 2 signal on the basis of time axis windows and level windows. The window generator 2811 generates a clock pit 1 window, a clock pit 2 window, a wobble pit 1 window and a wobble pit 2 window, and transmits them to the clock pit 1 detector 2807 and a clock pit 1 phase error detector (data PLL) 2816, the clock pit 2 detector 2808, the wobble 1 bottom level detector 2813, and the wobble 2 bottom level detector 2814, respectively.

Furthermore, SP and SL are averaged in a plurality of times; the number of the times is a small number of 8 in a seek state wherein the rotation speed of the motor changes; in a steady state, averaging is carried out 64 times. This improves the reliability of the measurement of SP and SL. As described above, depending on SP and SL, the window generator 2811 generates windows and detects the clock pits 1 and 2. The detection method is basically similar to that of Embodiment 2 but has the following different points.

The A/D converter 2802 is an A/D converter of a low power consumption type having a low sampling rate. Hence, this causes a problem of being unable to detect a true bottom signal by using its sampling signal itself. In FIG. 30, it is assumed that the pit signals are the wobble pit 1 signal and the wobble pit 2 signal, and that sampling is carried out at the three points of P, Q and R. The bottom signal (the point Q) (a downward peak signal) obtained by the sampling of the wobble pits 1 and 2 differs from the true bottom level. The Q level (the level at the point Q) changes depending on the timing of the sampling. The true bottom levels of the wobble pits 1 and 2 are thus obtained by interpolating the scarce sampling information by using an expression of nth order (n is a given even number; n = 2 in this embodiment). In this embodiment, an interpolation equation of $y(t) = -a \cdot t^2 + b \cdot t + c$ is assumed, and coefficients a, b and c, which satisfy $y(t_1)$ = the P level, $y(t_2)$ = the Q level and $y(t_3)$ = the R level, are obtained for each of the wobble pit 1 signal and the wobble pit 2 signal. By using the interpolation equation, the true bottom level $(4c \cdot a + b^2)/(4a)$ at $t = b/(2a)$ is obtained for each. In Embodiment 7, by using the wobble pit 1 signal and wobble pit 2 signal interpolated, a differential signal (a tracking error signal) is obtained from the above-mentioned equation (1) or (2).

(5) Clock pit detection error mode

The clock pits 1 and 2 may drop owing to flaws on a disc or deficiencies and defects during the production thereof. Even if the clock pits subsequent to these are normal, window displacements may occur, and the clock pits 1 and 2 may not be detected; the clock pit detection error mode is thus provided to perform a process of widening the next window when no clock pit 1 can be detected. This improves the reliability of the detection of the clock pits 1.

<Explanation of the data-use PLL>

Next, the data-use PLL 2710 will be described. FIG. 28 includes the block diagram of the data PLL 2710. In FIG. 28, the data PLL 2710 comprises a VCO 123, a 1/m frequency divider 124 for dividing the frequency of the output signal of the VCO 123 to obtain its l/m frequency, a clock pit 1 phase error detector 2816 and a D/A converter 2817.

The data PLL 2710 generates a highly accurate data-use clock on the basis of the output signal of the A/D converter 2816. The data PLL 2710 in accordance with Embodiment 7 has the clock pit 1 phase error detector 2816 and the D/A converter 2817; in this point, it differs from the data-use PLL 117 in accordance with Embodiment 1 having the phase comparator 121. In the other points, both are the same.

The clock pit 1 phase error detector 2816 is characterized in that it receives the output signal of the frequency divider 124 and the clock pit 1 signal converted into a digital signal at a low sampling rate and generates a highly accurate phase difference signal.

In FIG. 30, it is assumed that the pit signal is the clock pit 1 signal and that sampling is carried out at the three points P, Q and R. The bottom timing (the point Q) obtained by sampling the clock pit 1 differs from the true bottom timing. If the phase of the clock pit 1 signal changes depending on the sampling timing of the A/D converter 2816, the data PLL 2710 cannot generate any accurate data-use clock. Hence, the clock pit 1 phase error detector 2816 interpolates the scarce sampling information by using an expression of nth order (n is a given even number; n = 2 in this embodiment), thereby obtaining the true bottom timing. In this embodiment, the interpolation equation of $y(t) = -a \cdot t^2 + b \cdot t + c$ is assumed, and coefficients a, b and c, which satisfy $y(t_1)$ = the P level, $y(t_2)$ = the Q level and $y(t_3)$ = the R level, are obtained. By using the interpolation equation, the true bottom timing $t = b/(2a)$ is obtained. The clock pit 1 phase error detector 2816 converts the error time between the rising timing of the output signal of the frequency divider 124 and the true bottom timing $t = b/(2a)$ into a phase difference signal serving as level information and output the signal. The A/D converter 2817 converts the phase difference signal, a digital signal, into an analog signal. The loop filter 122, serving as a low-frequency filter, receives the phase difference signal, which is the output signal of the D/A converter 2817, and converts it into a low-frequency signal.

The VCO 123 receives the phase difference signal converted into the low-frequency signal and shifts its oscillation frequency depending on the signal.

With the above-mentioned configuration, the l/m frequency division signal of the data-use clock signal is phase-locked to the true clock pit 1 signal.

As a disc-shaped information recording medium is made smaller in size and higher in density, the reproduction signal in the groove portions or the inter-groove portions becomes weaker; hence, complicated processes are necessary to eliminate false signals and to carry out other measures. It is difficult to carry out all such complicated processes by using hardware; it is thus preferable that at least some of them should be processed by using software (complicated processes can be carried out relatively easily). In order to carry out the processes by using software, the reproduction signal of the pits and the like is required to be digitalized. If the reproduction signal is digitalized at a low sampling rate, the true peak (including the true bottom) of the reproduction signal cannot be obtained. Hence, by interpolating the reproduction signal digitalized as described above by using the expression of nth order (n is a given even number), the true peak can be obtained.

By setting a recording medium on which software programs for the method of generating the tracking error signal of a disc-shaped information recording medium or for the method of controlling the disc-shaped information recording medium in accordance with the present invention on the tracking error signal generating apparatus for the disc-shaped information recording medium or the disc-shaped information recording medium control apparatus (a computer provided with appropriate hardware circuits may also be used), by loading the software programs into the tracking error signal generating apparatus or the control apparatus and by executing the loaded programs, the method of generating the tracking error signal of the disc-shaped information recording medium or the method of controlling the disc-shaped information recording medium in accordance with the present invention can be carried out.

The above-mentioned embodiments relate to the tracking error signal generating apparatus and the control apparatus for magneto-optical discs but not limited to these; the embodiments are applicable to the tracking error signal generating apparatuses and the control apparatuses for any given disc-shaped information recording media satisfying necessary requirements.

With the present invention, an advantageous effect capable of attaining a tracking error signal generating apparatus having an inexpensive and simple configuration for a disc-shaped information recording medium driven in conformity with a given system, such as the CAV system, CLV system or ZCLV system is obtained.

With the present invention, an advantageous effect capable of attaining an inexpensive and reliable tracking error signal generating apparatus that does not require any special-purpose PLL having a high frequency band and high accuracy is obtained.

With the present invention, an advantageous effect capable of attaining a tracking error signal generating apparatus outputting a proper tracking error signal and hardly malfunctioning even during a seek operation time, a transient time, etc. is obtained.

With the present invention, an advantageous effect capable of attaining a tracking error signal generating apparatus outputting a proper tracking error signal and hardly malfunctioning is obtained in an optical disc apparatus that uses a swing arm type optical pickup is obtained.

Furthermore, with the present invention, an advantageous effect capable of attaining a control apparatus having an inexpensive and simple configuration for driving a disc-shaped information recording medium in conformity with the CLV system is obtained.

With the first invention and the like, an advantageous effect capable of attaining a tracking error signal generating apparatus suited for a control apparatus for a disc-shaped information recording medium driven in conformity with the CAV system and ZCLV system, in particular, is obtained.

With the second invention and the like, an advantageous effect capable of attaining a tracking error signal generating apparatus suited for a control apparatus for a disc-shaped information recording medium driven in conformity with the CLV system, in particular, is obtained.

Furthermore, with the present invention, an advantageous effect capable of attaining a tracking error signal generating apparatus suited for a disc-shaped information recording medium control apparatus having a plurality of rotation modes (for example, two kinds of linear velocity CLV system modes) is obtained.

Although the present invention has been described with respect to its preferred embodiments in some detail, the disclosed contents of the preferred embodiments may change in the details of the structure thereof, and any changes in the combination and sequence of the components may be attained without departing from the scope and spirit of the claimed invention.

## FIELD OF INDUSTRIAL APPLICATION

The tracking error signal generating apparatus and the control apparatus in accordance with the present invention are useful as the tracking error signal generating apparatus and the control apparatus for disc-shaped information recording media. The tracking error signal generating method and the control method in accordance with the present invention are useful as the tracking error signal generating method and the control method for disc-shaped information recording media.

## Claims

**1.** A tracking error signal generating apparatus for a disc-shaped information recording medium, comprising:

a reproduction portion of outputting a reproduction signal including information of a first clock pit, a first wobble pit and a second wobble pit formed on said disc-shaped information recording medium;
a clock pit signal detection portion of detecting a first clock pit signal which is the reproduction signal of said first clock pit from said reproduction signal;
a first clock pit signal interval measurement portion of measuring the time interval between two adjacent signals of said first clock pit signals and of outputting a first clock pit signal interval value which is the measured value;
a computation portion of receiving said first clock pit signal interval value, and of calculating and outputting a first wobble pit signal interval value and a second wobble pit signal interval value which are values nearly proportional to said first clock pit signal interval value;
a first wobble pit signal detection portion of detecting said reproduction signal at first timing derived on the basis of at least said first clock pit signal and said first wobble pit signal interval value and of outputting a first wobble pit signal which is the detected reproduction signal;
a second wobble pit signal detection portion of detecting said reproduction signal at second timing derived on the basis of at least said first clock pit signal and said second wobble pit signal interval value and of outputting a second wobble pit signal which is the detected reproduction signal; and
a differential signal generation portion of carrying out a subtraction between said first wobble pit signal and said second wobble pit signal and of generating a differential signal.

**2.** A tracking error signal generating apparatus for a disc-shaped information recording medium, comprising:

a reproduction portion of outputting a reproduction signal including information of a first clock pit, a second clock pit, a first wobble pit and a second wobble pit formed on said disc-shaped information recording medium;
a clock pit signal detection portion of detecting a first clock pit signal, which is the reproduction signal of said first clock pit, and a second clock pit signal which is the reproduction signal of said second clock pit from said reproduction signal;
a clock pit signal interval measurement portion of measuring the time interval between said first clock pit signal and said second clock pit signal and of outputting a second clock pit signal interval value which is the measured value;
a computation portion of receiving said second clock pit signal interval value, and of calculating and outputting a first wobble pit signal interval value and a second wobble pit signal interval value which are values nearly proportional to said second clock pit signal interval value;
a first wobble pit signal detection portion of detecting said reproduction signal at first timing derived on the basis of at least said first clock pit signal or said second clock pit signal and said first wobble pit signal interval value and of outputting a first wobble pit signal which is the detected reproduction signal;
a second wobble pit signal detection portion of detecting said reproduction signal at second timing derived on the basis of at least said first clock pit signal or said second clock pit signal and said second wobble pit signal interval value and of outputting a second wobble pit signal which is the detected reproduction signal; and
a differential signal generation portion of carrying out a subtraction between said first wobble pit signal and said second wobble pit signal and of generating a differential signal.

**3.** A tracking error signal generating apparatus for a disc-shaped information recording medium in accordance with claim 1 or 2, wherein said clock pit signal detection portion comprises:

a window signal generation portion of generating a window signal in which a first time measured from said first clock pit signal or said second clock pit signal is used as a starting point and a second time delayed further from said first time is used as an ending point;
a peak detection portion of detecting the peak portion of said reproduction signal included in said window signal;
a peak level judgment portion of making a judgment as to whether the level of said peak portion is in a constant range including the level of said first clock pit signal or said second clock pit signal; and
an output portion of outputting said peak portion as the next said first clock pit signal or the next said second clock pit signal in the case when the level of said peak portion is in the constant range including the level of said first clock pit signal or said second clock pit signal.

**4.** A tracking error signal generating apparatus for a disc-shaped information recording medium in accordance with claim 3, wherein

said peak detection portion detects said reproduction signal at five or more clock timing points sequentially arranged on a time axis, and if the level of said reproduction signal at each clock timing point has a single maximal or minimal value on the time axis, said peak detection portion outputs said first clock pit signal or said second clock pit signal having an edge at the clock timing point in which said single maximal or minimal value is detected.

**5.** A tracking error signal generating apparatus for a disc-shaped information recording medium, comprising:

a reproduction portion of outputting a reproduction signal including information of a groove portion or an inter-groove portion or both a groove portion and an inter-groove portion and information of a first wobble pit and a second wobble pit, which are formed on said disc-shaped information recording medium;
an edge signal detection portion of detecting, from said reproduction signal, a first edge signal which is the reproduction signal at the groove trailing edge position or the groove leading edge position of said groove portion or said inter-groove portion or both said groove portion and said inter-groove portion;
a first edge signal interval measurement portion of measuring the time interval between two adjacent signals of said first edge signals and of outputting a first edge signal interval value which is the measured value;
a computation portion of receiving said first edge signal interval value, and of calculating and outputting a first wobble pit signal interval value and a second wobble pit signal interval value which are values nearly proportional to said first edge signal interval value;
a first wobble pit signal detection portion of detecting said reproduction signal at first timing derived on the basis of at least said first edge signal and said first wobble pit signal interval value and of outputting a first wobble pit signal which is the detected reproduction signal;
a second wobble pit signal detection portion of detecting said reproduction signal at second timing derived on the basis of at least said first edge signal and said second wobble pit signal interval value and of outputting a second wobble pit signal which is the detected reproduction signal; and
a differential signal generation portion of carrying out a subtraction between said first wobble pit signal and said second wobble pit signal and of generating a differential signal.

**6.** A tracking error signal generating apparatus for a disc-shaped information recording medium, comprising:

a reproduction portion of outputting a reproduction signal including information of a groove portion or an inter-groove portion or both a groove portion and an inter-groove portion and information of a first wobble pit and a second wobble pit, which are formed on said disc-shaped information recording medium;
an edge signal detection portion of detecting, from said reproduction signal, a first edge signal which is the reproduction signal at the groove trailing edge position of said groove portion or said inter-groove portion or both said groove portion and said inter-groove portion, and a second edge signal which is the reproduction signal at the groove leading edge position of said groove portion or said inter-groove portion or both said groove portion and said inter-groove portion;
an edge signal interval measurement portion of measuring the time interval between said first edge signal and said second edge signal and of outputting a second edge signal interval value which is the measured value;
a computation portion of receiving said second edge signal interval value, and of calculating and outputting a first wobble pit signal interval value and a second wobble pit signal interval value which are values nearly proportional to said second edge signal interval value;
a first wobble pit signal detection portion of detecting said reproduction signal at first timing derived on the basis of at least said first edge signal or said second edge signal and said first wobble pit signal interval value and of outputting a first wobble pit signal which is the detected reproduction signal;
a second wobble pit signal detection portion of detecting said reproduction signal at second timing derived on the basis of at least said first edge signal or said second edge signal and said second wobble pit signal interval value and of outputting a second wobble pit signal which is the detected reproduction signal; and
a differential signal generation portion of carrying out a subtraction between said first wobble pit signal and said second wobble pit signal and of generating a differential signal.

**7.** A tracking error signal generating apparatus for a disc-shaped information recording medium in accordance with claim 5 or 6, wherein

said edge signal detection portion detects said reproduction signal at five or more clock timing points sequentially arranged on a time axis, and if the level of said reproduction signal at each clock timing point increases or decreases monotonously on the time axis, said edge signal detection portion generates said first edge signal or said second edge signal having an edge at a given timing point among said five or more clock timing points.

**8.** A tracking error signal generating apparatus for a disc-shaped information recording medium in accordance with claim 7, wherein

if the level of said reproduction signal at the start clock timing point among said five or more clock timing points is in a first level range and if the level of said reproduction signal at the end clock timing point among said five or more clock timing points is in a second level range, said edge signal detection portion generates said first edge signal or said second edge signal having an edge at a given timing point among said five or more clock timing points.

**9.** A disc-shaped information recording medium control apparatus having an optical pickup, wherein

the position of a head portion is controlled so that said differential signal output from said tracking error signal generating apparatus in accordance with any one of claims 1 to 8 becomes smaller after the light beam applied from said optical pickup is focused on said disc-shaped information recording medium.

**10.** A disc-shaped information recording medium control apparatus comprising:

a reproduction portion of outputting a reproduction signal including information of a first clock pit and a second clock pit formed on a disc-shaped information recording medium;
a clock pit signal detection portion of detecting a first clock pit signal, which is the reproduction signal of said first clock pit, and a second clock pit signal which is the reproduction signal of said second clock pit from said pre-pits reproduction signal; and
a clock pit signal interval measurement portion of measuring the time interval between said first clock pit signal and said second clock pit signal and of outputting a second clock pit signal interval value which is the measured value, wherein
said disc-shaped information recording medium is rotated so that said second clock pit signal interval value becomes a constant value.

**11.** A disc-shaped information recording medium control apparatus comprising:

a reproduction portion of outputting the reproduction signal of a groove portion or an inter-groove portion or both a groove portion and an inter-groove portion formed on a disc-shaped information recording medium;
an edge signal detection portion of detecting, from said reproduction signal, a first edge signal, which is the reproduction signal at the groove trailing edge position of said groove portion or said inter-groove portion or both said groove portion and said inter-groove portion, and a second edge signal which is the reproduction signal at the groove leading edge position of said groove portion or said inter-groove portion or both said groove portion and said inter-groove portion; and
an edge signal interval measurement portion of measuring the time interval between said first edge signal and said second edge signal and of outputting a second edge signal interval value which is the measured value, wherein
said disc-shaped information recording medium is rotated so that said second edge signal interval value becomes a constant value.

**12.** A tracking error signal generating method for a disc-shaped information recording medium, comprising:

a reproduction step of outputting a reproduction signal including information of a first clock pit, a first wobble pit and a second wobble pit formed on said disc-shaped information recording medium;
a clock pit signal detection step of detecting a first clock pit signal which is the reproduction signal of said first clock pit from said reproduction signal;
a first clock pit signal interval measurement step of measuring the time interval between two adjacent signals of said first clock pit signals and of outputting a first clock pit signal interval value which is the measured value;
a computation step of receiving said first clock pit signal interval value, and of calculating and outputting a first wobble pit signal interval value and a second wobble pit signal interval value which are values nearly proportional to said first clock pit signal interval value;
a first wobble pit signal detection step of detecting said reproduction signal at first timing derived on the basis of at least said first clock pit signal and said first wobble pit signal interval value and of outputting a first wobble pit signal which is the detected reproduction signal;
a second wobble pit signal detection step of detecting said reproduction signal at second timing derived on the basis of at least said first clock pit signal and said second wobble pit signal interval value and of outputting a second wobble pit signal which is the detected reproduction signal; and

a differential signal generation step of carrying out a subtraction between said first wobble pit signal and said second wobble pit signal and of generating a differential signal.

**13.** A tracking error signal generating method for a disc-shaped information recording medium, comprising:

a reproduction step of outputting a reproduction signal including information of a first clock pit, a second clock pit, a first wobble pit and a second wobble pit formed on said disc-shaped information recording medium;
a clock pit signal detection step of detecting a first clock pit signal, which is the reproduction signal of said first clock pit, and a second clock pit signal which is the reproduction signal of said second clock pit from said reproduction signal;
a clock pit signal interval measurement step of measuring the time interval between said first clock pit signal and said second clock pit signal and of outputting a second clock pit signal interval value which is the measured value;
a computation step of receiving said second clock pit signal interval value, and of calculating and outputting a first wobble pit signal interval value and a second wobble pit signal interval value which are values nearly proportional to said second clock pit signal interval value;
a first wobble pit signal detection step of detecting said reproduction signal at first timing derived on the basis of at least said first clock pit signal or said second clock pit signal and said first wobble pit signal interval value and of outputting a first wobble pit signal which is the detected reproduction signal;
a second wobble pit signal detection step of detecting said reproduction signal at second timing derived on the basis of at least said first clock pit signal or said second clock pit signal and said second wobble pit. signal interval value and of outputting a second wobble pit signal which is the detected reproduction signal; and
a differential signal generation step of carrying out a subtraction between said first wobble pit signal and said second wobble pit signal and of generating a differential signal.

**14.** A tracking error signal generating method for a disc-shaped information recording medium in accordance with claim 12 or 13, wherein said clock pit signal detection step comprises:

a window signal generation step of generating a window signal in which a first time measured from said first clock pit signal or said second clock pit signal is used as a starting point and a second time delayed further from said first time is used as an ending point;
a peak detection step of detecting the peak portion of said reproduction signal included in said window signal;
a peak level judgment step of making a judgment as to whether the level of said peak portion is in a constant range including the level of said first clock pit signal or said second clock pit signal; and
an output step of outputting said peak portion as the next said first clock pit signal or the next said second clock pit signal in the case when the level of said peak portion is in the constant range including the level of said first clock pit signal or said second clock pit signal.

**15.** A tracking error signal generating method for a disc-shaped information recording medium in accordance with claim 14, wherein

said peak detection step detects said reproduction signal at five or more clock timing points sequentially arranged on a time axis, and if the level of said reproduction signal at each clock timing point has a single maximal or minimal value on the time axis, said peak detection step outputs said first clock pit signal or said second clock pit signal having an edge at the clock timing point in which said single maximal or minimal value is detected.

**16.** A tracking error signal generating method for a disc-shaped information recording medium, comprising:

a reproduction step of outputting a reproduction signal including information of a groove portion or an inter-groove portion or both a groove portion and an inter-groove portion and information of a first wobble pit and a second wobble pit, which are formed on said disc-shaped information recording medium;
an edge signal detection step of detecting, from said reproduction signal, a first edge signal which is the reproduction signal at the groove trailing edge position or the groove leading edge position of said groove portion or said inter-groove portion or both said groove portion and said inter-groove portion;
a first edge signal interval measurement step of measuring the time interval between two adjacent signals of said first edge signals and of outputting a first edge signal interval value which is the measured value;
a computation step of receiving said first edge signal interval value, and of calculating and outputting a first wobble pit signal interval value and a second wobble pit signal interval value which are values nearly proportional to said first edge signal interval value;

a first wobble pit signal detection step of detecting said reproduction signal at first timing derived on the basis of at least said first edge signal and said first wobble pit signal interval value and of outputting a first wobble pit signal which is the detected reproduction signal;
a second wobble pit signal detection step of detecting said reproduction signal at second timing derived on the basis of at least said first edge signal and said second wobble pit signal interval value and of outputting a second wobble pit signal which is the detected reproduction signal; and
a differential signal generation step of carrying out a subtraction between said first wobble pit signal and said second wobble pit signal and of generating a differential signal.

**17.** A tracking error signal generating method for a disc-shaped information recording medium, comprising:

a reproduction step of outputting a reproduction signal including information of a groove portion or an inter-groove portion or both a groove portion and an inter-groove portion and information of a first wobble pit and a second wobble pit, which are formed on said disc-shaped information recording medium;
an edge signal detection step of detecting, from said reproduction signal, a first edge signal, which is the reproduction signal at the groove trailing edge position of said groove portion or said inter-groove portion or both said groove portion and said inter-groove portion, and a second edge signal which is the reproduction signal at the groove leading edge position of said groove portion or said inter-groove portion or both said groove portion and said inter-groove portion;
an edge signal interval measurement step of measuring the time interval between said first edge signal and said second edge signal and of outputting a second edge signal interval value which is the measured value;
a computation step of receiving said second edge signal interval value, and of calculating and outputting a first wobble pit signal interval value and a second wobble pit signal interval value which are values nearly proportional to said second edge signal interval value;
a first wobble pit signal detection step of detecting said reproduction signal at first timing derived on the basis of at least said first edge signal or said second edge signal and said first wobble pit signal interval value and of outputting a first wobble pit signal which is the detected reproduction signal;
a second wobble pit signal detection step of detecting said reproduction signal at second timing derived on the basis of at least said first edge signal or said second edge signal and said second wobble pit signal interval value and of outputting a second wobble pit signal which is the detected reproduction signal; and
a differential signal generation step of carrying out a subtraction between said first wobble pit signal and said second wobble pit signal and of generating a differential signal.

**18.** A tracking error signal generating method for a disc-shaped information recording medium in accordance with claim 16 or 17, wherein
said edge signal detection step detects said reproduction signal at five or more clock timing points sequentially arranged on a time axis, and if the level of said reproduction signal at each clock timing point increases or decreases monotonously on the time axis, said edge signal detection step generates said first edge signal or said second edge signal having an edge at a given timing point among said five or more clock timing points.

**19.** A tracking error signal generating method for a disc-shaped information recording medium in accordance with claim 18, wherein
if the level of said reproduction signal at the start clock timing point among said five or more clock timing points is in a first level range and if the level of said reproduction signal at the end clock timing point among said five or more clock timing points is in a second level range, said edge signal detection step generates said first edge signal or said second edge signal having an edge at a given timing point among said five or more clock timing points.

**20.** A disc-shaped information recording medium control method for controlling the position of a head portion so that said differential signal generated by said tracking error signal generating method in accordance with any one of claims 12 to 19 becomes smaller after the light beam applied from said optical pickup is focused on said disc-shaped information recording medium.

**21.** A disc-shaped information recording medium control method comprising:

a reproduction step of outputting a reproduction signal including information of a first clock pit and a second clock pit formed on a disc-shaped information recording medium;
a clock pit signal detection step of detecting a first clock pit signal, which is the reproduction signal of said first clock pit, and a second clock pit signal which is the reproduction signal of said second clock pit from said pre-pits reproduction signal; and
a clock pit signal interval measurement step of measuring the time interval between said first clock pit signal and said second clock pit signal and of outputting a second clock pit signal interval value which is the measured value, wherein
said disc-shaped information recording medium is rotated so that said second clock pit signal interval value becomes a constant value.

**22.** A disc-shaped information recording medium control method comprising:

a reproduction step of outputting the reproduction signal of a groove portion or an inter-groove portion or both a groove portion and an inter-groove portion formed on a disc-shaped information recording medium;
an edge signal detection step of detecting, from said reproduction signal, a first edge signal, which is the reproduction signal at the groove trailing edge position of said groove portion or said inter-groove portion or both said groove portion and said inter-groove portion, and a second edge signal which is the reproduction signal at the groove leading edge position of said groove portion or said inter-groove portion or both said groove portion and said inter-groove portion; and
an edge signal interval measurement step of measuring the time interval between said first edge signal and said second edge signal and of outputting a second edge signal interval value which is the measured value, wherein
said disc-shaped information recording medium is rotated so that said second edge signal interval value becomes a constant value.

**23.** A tracking error signal generating apparatus for a disc-shaped information recording medium in accordance with claim 5 or 6, wherein said edge signal detection portion comprises:

a window signal generation portion of generating a window signal in which a first time measured from said first edge signal or said second edge signal is used as a starting point and a second time delayed further from said first time is used as an ending point;
a peak detection portion of detecting the peak portion of said reproduction signal included in said window signal;
a peak level judgment portion of making a judgment as to whether the level of said peak portion is in a constant range including the level of said first edge signal or said second edge signal; and
an output portion of outputting said peak portion as the next said first edge signal or the next said second edge signal in the case when the level of said peak portion is in the constant range including the level of said first edge signal or said second edge signal.

**24.** A tracking error signal generating apparatus for a disc-shaped information recording medium in accordance with claim 23, wherein
said peak detection portion detects said reproduction signal at five or more clock timing points sequentially arranged on a time axis, and if the level of said reproduction signal at each clock timing point has a single maximal or minimal value on the time axis, said peak detection portion outputs said first edge signal or said second edge signal having an edge at the clock timing point in which said single maximal or minimal value is detected.

**25.** A phase lock loop apparatus comprising:

a reproduction portion of outputting the reproduction signal of a pit, a grooves or an inter-groove formed on a disc-shaped information recording medium;
an A/D converter of converting said reproduction signal into a digital signal;
an oscillator, the oscillation frequency of which is controlled by a control signal; and
a phase error detector of obtaining an extreme value of an expression of nth order (n is a given even number) by interpolating said reproduction signal converted into said digital signal by using said expression of nth order and of generating said control signal corresponding to the error between the phase of said extreme value and the phase of the output signal or its frequency division signal of said oscillator.

**26.** A tracking error signal generating apparatus comprising:

a wobble pit signal detection portion of detecting a first wobble pit signal and a second wobble pit signal which are the reproduction signals of a first wobble pit and a second wobble pit;

an A/D converter of converting said first wobble pit signal and said second wobble pit signal into digital signals; and

an error signal generation portion of obtaining an extreme value of an expression of nth order (n is a given even number) by interpolating each of said first wobble pit signal and said second wobble pit signal converted into said digital signals by using said expression of nth order, and of generating the differential signal between the level of said extreme value of said first wobble pit signal and the level of said extreme value of said second wobble pit signal.

**27.** A tracking error signal generating apparatus for a disc-shaped information recording medium in accordance with claim 1, 2, 5 or 6, further comprising a period measuring device of measuring the rotation period of said disc-shaped information recording medium, wherein

said computation portion calculates said first wobble pit signal interval value and said second wobble pit signal interval value by using only said first clock pit signal interval value, said second clock pit signal interval value, said first edge signal interval value or said second edge signal interval value included in the range estimated on the basis of said rotation period.

**28.** A tracking error signal generating apparatus for a disc-shaped information recording medium in accordance with claim 1, 2, 5 or 6, wherein said computation portion calculates said first wobble pit signal interval value and said second wobble pit signal interval value on the basis of said first clock pit signal interval value, said second clock pit signal interval value, said first edge signal interval value or said second edge signal interval value obtained by averaging n (n: a given positive integer of 2 or more) measured values, and

the value of said n in the state when said disc-shaped information recording medium carries out steady rotation is larger than the value of said n in the state when said disc-shaped information recording medium accelerates or decelerates.

**Amended claims under Art. 19.1 PCT**

**1.** A tracking error signal generating apparatus for a disc-shaped information recording medium, comprising:

a reproduction portion of outputting a reproduction signal including information of a first clock pit, a first wobble pit and a second wobble pit formed on said disc-shaped information recording medium;

a clock pit signal detection portion of detecting a first clock pit signal which is the reproduction signal of said first clock pit from said reproduction signal;

a first clock pit signal interval measurement portion of measuring the time interval between two adjacent signals of said first clock pit signals and of outputting a first clock pit signal interval value which is the measured value;

a computation portion of receiving said first clock pit signal interval value, and of calculating and outputting a first wobble pit signal interval value and a second wobble pit signal interval value which are values nearly proportional to said first clock pit signal interval value;

a first wobble pit signal detection portion of detecting said reproduction signal at first timing derived on the basis of at least said first clock pit signal and said first wobble pit signal interval value and of outputting a first wobble pit signal which is the detected reproduction signal;

a second wobble pit signal detection portion of detecting said reproduction signal at second timing derived on the basis of at least said first clock pit signal and said second wobble pit signal interval value and of outputting a second wobble pit signal which is the detected reproduction signal; and

a differential signal generation portion of carrying out a subtraction between said first wobble pit signal and said second wobble pit signal and of generating a differential signal.

**2.** A tracking error signal generating apparatus for a disc-shaped information recording medium, comprising:

a reproduction portion of outputting a reproduction signal including information of a first clock pit, a second clock pit, a first wobble pit and a second wobble pit formed on said disc-shaped information recording medium;

a clock pit signal detection portion of detecting a first clock pit signal, which is the reproduction signal of said first clock pit, and a second clock pit signal which is the reproduction signal of said second clock pit from said reproduction signal;

a clock pit signal interval measurement portion of measuring the time interval between said first clock pit signal and said second clock pit signal and of outputting a second clock pit signal interval value which is the measured value;

a computation portion of receiving said second clock pit signal interval value, and of calculating and outputting a first wobble pit signal interval value and a second wobble pit signal interval value which are values nearly proportional to said second clock pit signal interval value;
a first wobble pit signal detection portion of detecting said reproduction signal at first timing derived on the basis of at least said first clock pit signal or said second clock pit signal and said first wobble pit signal interval value and of outputting a first wobble pit signal which is the detected reproduction signal;
a second wobble pit signal detection portion of detecting said reproduction signal at second timing derived on the basis of at least said first clock pit signal or said second clock pit signal and said second wobble pit signal interval value and of outputting a second wobble pit signal which is the detected reproduction signal; and
a differential signal generation portion of carrying out a subtraction between said first wobble pit signal and said second wobble pit signal and of generating a differential signal.

**3.** A tracking error signal generating apparatus for a disc-shaped information recording medium in accordance with claim 1 or 2, wherein said clock pit signal detection portion comprises:

a window signal generation portion of generating a window signal in which a first time measured from said first clock pit signal or said second clock pit signal is used as a starting point and a second time delayed further from said first time is used as an ending point;
a peak detection portion of detecting the peak portion of said reproduction signal included in said window signal;
a peak level judgment portion of making a judgment as to whether the level of said peak portion is in a constant range including the level of said first clock pit signal or said second clock pit signal; and
an output portion of outputting said peak portion as the next said first clock pit signal or the next said second clock pit signal in the case when the level of said peak portion is in the constant range including the level of said first clock pit signal or said second clock pit signal.

**4.** A tracking error signal generating apparatus for a disc-shaped information recording medium in accordance with claim 3, wherein
said peak detection portion detects said reproduction signal at five or more clock timing points sequentially arranged on a time axis, and if the level of said reproduction signal at each clock timing point has a single maximal or minimal value on the time axis, said peak detection portion outputs said first clock pit signal or said second clock pit signal having an edge at the clock timing point in which said single maximal or minimal value is detected.

**5.** A tracking error signal generating apparatus for a disc-shaped information recording medium, comprising:

a reproduction portion of outputting a reproduction signal including information of a groove portion or an inter-groove portion or both a groove portion and an inter-groove portion and information of a first wobble pit and a second wobble pit, which are formed on said disc-shaped information recording medium;
an edge signal detection portion of detecting, from said reproduction signal, a first edge signal which is the reproduction signal at the groove trailing edge position or the groove leading edge position of said groove portion or said inter-groove portion or both said groove portion and said inter-groove portion;
a first edge signal interval measurement portion of measuring the time interval between two adjacent signals of said first edge signals and of outputting a first edge signal interval value which is the measured value;
a computation portion of receiving said first edge signal interval value, and of calculating and outputting a first wobble pit signal interval value and a second wobble pit signal interval value which are values nearly proportional to said first edge signal interval value;
a first wobble pit signal detection portion of detecting said reproduction signal at first timing derived on the basis of at least said first edge signal and said first wobble pit signal interval value and of outputting a first wobble pit signal which is the detected reproduction signal;
a second wobble pit signal detection portion of detecting said reproduction signal at second timing derived on the basis of at least said first edge signal and said second wobble pit signal interval value and of outputting a second wobble pit signal which is the detected reproduction signal; and
a differential signal generation portion of carrying out a subtraction between said first wobble pit signal and said second wobble pit signal and of generating a differential signal.

**6.** A tracking error signal generating apparatus for a disc-shaped information recording medium, comprising:

a reproduction portion of outputting a reproduction signal including information of a groove portion or an inter-groove portion or both a groove portion and an inter-groove portion and information of a first wobble pit and

a second wobble pit, which are formed on said disc-shaped information recording medium;
an edge signal detection portion of detecting, from said reproduction signal, a first edge signal, which is the reproduction signal at the groove trailing edge position of said groove portion or said inter-groove portion or both said groove portion and said inter-groove portion, and a second edge signal which is the reproduction signal at the groove leading edge position of said groove portion or said inter-groove portion or both said groove portion and said inter-groove portion;
an edge signal interval measurement portion of measuring the time interval between said first edge signal and said second edge signal and of outputting a second edge signal interval value which is the measured value;
a computation portion of receiving said second edge signal interval value, and of calculating and outputting a first wobble pit signal interval value and a second wobble pit signal interval value which are values nearly proportional to said second edge signal interval value;
a first wobble pit signal detection portion of detecting said reproduction signal at first timing derived on the basis of at least said first edge signal or said second edge signal and said first wobble pit signal interval value and of outputting a first wobble pit signal which is the detected reproduction signal;
a second wobble pit signal detection portion of detecting said reproduction signal at second timing derived on the basis of at least said first edge signal or said second edge signal and said second wobble pit signal interval value and of outputting a second wobble pit signal which is the detected reproduction signal; and
a differential signal generation portion of carrying out a subtraction between said first wobble pit signal and said second wobble pit signal and of generating a differential signal.

**7.** A tracking error signal generating apparatus for a disc-shaped information recording medium in accordance with claim 5 or 6, wherein
said edge signal detection portion detects said reproduction signal at five or more clock timing points sequentially arranged on a time axis, and if the level of said reproduction signal at each clock timing point increases or decreases monotonously on the time axis, said edge signal detection portion generates said first edge signal or said second edge signal having an edge at a given timing point among said five or more clock timing points.

**8.** A tracking error signal generating apparatus for a disc-shaped information recording medium in accordance with claim 7, wherein
if the level of said reproduction signal at the start clock timing point among said five or more clock timing points is in a first level range and if the level of said reproduction signal at the end clock timing point among said five or more clock timing points is in a second level range, said edge signal detection portion generates said first edge signal or said second edge signal having an edge at a given timing point among said five or more clock timing points.

**9.** A disc-shaped information recording medium control apparatus having an optical pickup, wherein
the position of a head portion is controlled so that said differential signal output from said tracking error signal generating apparatus in accordance with any one of claims 1 to 8 becomes smaller after the light beam applied from said optical pickup is focused on said disc-shaped information recording medium.

**10.** (After amendment) A disc-shaped information recording medium control apparatus comprising:

a reproduction portion of outputting a reproduction signal including information of a first clock pit, a second clock pit and one or more pre-pits disposed in a region between said first clock pit and said second clock pit, which are formed on said disc-shaped information recording medium;
a clock pit signal detection portion of detecting a first clock pit signal, which is the reproduction signal of said first clock pit, and a second clock pit signal which is the reproduction signal of said second clock pit from said pre-pits reproduction signal; and
a clock pit signal interval measurement portion of measuring the time interval between said first clock pit signal and said second clock pit signal and of outputting a second clock pit signal interval value which is the measured value of said time interval between said first clock pit signal and said second clock pit signal, wherein
said disc-shaped information recording medium is rotated so that said second clock pit signal interval value becomes a constant value.

**11.** (After amendment) A disc-shaped information recording medium control apparatus comprising:

a reproduction portion of outputting the reproduction signal of a groove portion or an inter-groove portion or both a groove portion and an inter-groove portion, formed on a disc-shaped information recording medium and divided by a pre-pit region;
an edge signal detection portion of detecting, from said reproduction signal, a first edge signal, which is the reproduction signal at the leading edge of said pre-pit region, and a second edge signal which is the reproduction signal at the trailing edge of said pre-pit region; and
an edge signal interval measurement portion of measuring the time interval between said first edge signal and said second edge signal and of outputting a second edge signal interval value which is the measured value of said time interval between said first edge signal and said second edge signal, wherein
said disc-shaped information recording medium is rotated so that said second edge signal interval value becomes a constant value.

**12.** A tracking error signal generating method for a disc-shaped information recording medium, comprising:

a reproduction step of outputting a reproduction signal including information of a first clock pit, a first wobble pit and a second wobble pit formed on said disc-shaped information recording medium;
a clock pit signal detection step of detecting a first clock pit signal which is the reproduction signal of said first clock pit from said reproduction signal;
a first clock pit signal interval measurement step of measuring the time interval between two adjacent signals of said first clock pit signals and of outputting a first clock pit signal interval value which is the measured value;
a computation step of receiving said first clock pit signal interval value, and of calculating and outputting a first wobble pit signal interval value and a second wobble pit signal interval value which are values nearly proportional to said first clock pit signal interval value;
a first wobble pit signal detection step of detecting said reproduction signal at first timing derived on the basis of at least said first clock pit signal and said first wobble pit signal interval value and of outputting a first wobble pit signal which is the detected reproduction signal;
a second wobble pit signal detection step of detecting said reproduction signal at second timing derived on the basis of at least said first clock pit signal and said second wobble pit signal interval value and of outputting a second wobble pit signal which is the detected reproduction signal; and
a differential signal generation step of carrying out a subtraction between said first wobble pit signal and said second wobble pit signal and of generating a differential signal.

**13.** A tracking error signal generating method for a disc-shaped information recording medium, comprising:

a reproduction step of outputting a reproduction signal including information of a first clock pit, a second clock pit, a first wobble pit and a second wobble pit formed on said disc-shaped information recording medium;
a clock pit signal detection step of detecting a first clock pit signal, which is the reproduction signal of said first clock pit, and a second clock pit signal which is the reproduction signal of said second clock pit from said reproduction signal;
a clock pit signal interval measurement step of measuring the time interval between said first clock pit signal and said second clock pit signal and of outputting a second clock pit signal interval value which is the measured value;
a computation step of receiving said second clock pit signal interval value, and of calculating and outputting a first wobble pit signal interval value and a second wobble pit signal interval value which are values nearly proportional to said second clock pit signal interval value;
a first wobble pit signal detection step of detecting said reproduction signal at first timing derived on the basis of at least said first clock pit signal or said second clock pit signal and said first wobble pit signal interval value and of outputting a first wobble pit signal which is the detected reproduction signal;
a second wobble pit signal detection step of detecting said reproduction signal at second timing derived on the basis of at least said first clock pit signal or said second clock pit signal and said second wobble pit signal interval value and of outputting a second wobble pit signal which is the detected reproduction signal; and
a differential signal generation step of carrying out a subtraction between said first wobble pit signal and said second wobble pit signal and of generating a differential signal.

**14.** A tracking error signal generating method for a disc-shaped information recording medium in accordance with claim 12 or 13, wherein said clock pit signal detection step comprises:

a window signal generation step of generating a window signal in which a first time measured from said first clock pit signal or said second clock pit signal is used as a starting point and a second time delayed further from saidfirst time is used as an ending point;

a peak detection step of detecting the peak portion of said reproduction signal included in said window signal;
a peak level judgment step of making a judgment as to whether the level of said peak portion is in a constant range including the level of said first clock pit signal or said second clock pit signal; and
an output step of outputting said peak portion as the next said first clock pit signal or the next said second clock pit signal in the case when the level of said peak portion is in the constant range including the level of said first clock pit signal or said second clock pit signal.

**15.** A tracking error signal generating method for a disc-shaped information recording medium in accordance with claim 14, wherein
said peak detection step detects said reproduction signal at five or more clock timing points sequentially arranged on a time axis, and if the level of said reproduction signal at each clock timing point has a single maximal or minimal value on the time axis, said peak detection step outputs said first clock pit signal or said second clock pit signal having an edge at the clock timing point in which said single maximal or minimal value is detected.

**16.** A tracking error signal generating method for a disc-shaped information recording medium, comprising:

a reproduction step of outputting a reproduction signal including information of a groove portion or an inter-groove portion or both a groove portion and an inter-groove portion and information of a first wobble pit and a second wobble pit, which are formed on said disc-shaped information recording medium;
an edge signal detection step of detecting, from said reproduction signal, a first edge signal which is the reproduction signal at the groove trailing edge position or the groove leading edge position of said groove portion or said inter-groove portion or both said groove portion and said inter-groove portion;
a first edge signal interval measurement step of measuring the time interval between two adjacent signals of said first edge signals and of outputting a first edge signal interval value which is the measured value;
a computation step of receiving said first edge signal interval value, and of calculating and outputting a first wobble pit signal interval value and a second wobble pit signal interval value which are values nearly proportional to said first edge signal interval value;
a first wobble pit signal detection step of detecting said reproduction signal at first timing derived on the basis of at least said first edge signal and said first wobble pit signal interval value and of outputting a first wobble pit signal which is the detected reproduction signal;
a second wobble pit signal detection step of detecting said reproduction signal at second timing derived on the basis of at least said first edge signal and said second wobble pit signal interval value and of outputting a second wobble pit signal which is the detected reproduction signal; and
a differential signal generation step of carrying out a subtraction between said first wobble pit signal and said second wobble pit signal and of generating a differential signal.

**17.** A tracking error signal generating method for a disc-shaped information recording medium, comprising:

a reproduction step of outputting a reproduction signal including information of a groove portion or an inter-groove portion or both a groove portion and an inter-groove portion and information of a first wobble pit and a second wobble pit, which are formed on said disc-shaped information recording medium;
an edge signal detection step of detecting, from said reproduction signal, a first edge signal, which is the reproduction signal at the groove trailing edge position of said groove portion or said inter-groove portion or both said groove portion and said inter-groove portion, and a second edge signal which is the reproduction signal at the groove leading edge position of said groove portion or said inter-groove portion or both said groove portion and said inter-groove portion;
an edge signal interval measurement step of measuring the time interval between said first edge signal and said second edge signal and of outputting a second edge signal interval value which is the measured value;
a computation step of receiving said second edge signal interval value, and of calculating and outputting a first wobble pit signal interval value and a second wobble pit signal interval value which are values nearly proportional to said second edge signal interval value;
a first wobble pit signal detection step of detecting said reproduction signal at first timing derived on the basis of at least said first edge signal or said second edge signal and said first wobble pit signal interval value and of outputting a first wobble pit signal which is the detected reproduction signal;
a second wobble pit signal detection step of detecting said reproduction signal at second timing derived on the basis of at least said first edge signal or said second edge signal and said second wobble pit signal interval value and of outputting a second wobble pit signal which is the detected reproduction signal; and
a differential signal generation step of carrying out a subtraction between said first wobble pit signal and said second wobble pit signal and of generating a differential signal.

**18.** A tracking error signal generating method for a disc-shaped information recording medium in accordance with claim 16 or 17, wherein

said edge signal detection step detects said reproduction signal at five or more clock timing points sequentially arranged on a time axis, and if the level of said reproduction signal at each clock timing point increases or decreases monotonously on the time axis, said edge signal detection step generates said first edge signal or said second edge signal having an edge at a given timing point among said five or more clock timing points.

**19.** A tracking error signal generating method for a disc-shaped information recording medium in accordance with claim 18, wherein

if the level of said reproduction signal at the start clock timing point among said five or more clock timing points is in a first level range and if the level of said reproduction signal at the end clock timing point among said five or more clock timing points is in a second level range, said edge signal detection step generates said first edge signal or said second edge signal having an edge at a given timing point among said five or more clock timing points.

**20.** A disc-shaped information recording medium control method for controlling the position of a head portion so that said differential signal generated by said tracking error signal generating method in accordance with any one of claims 12 to 19 becomes smaller after the light beam applied from said optical pickup is focused on said disc-shaped information recording medium.

**21.** (After amendment) A disc-shaped information recording medium control method comprising:

a reproduction step of outputting a reproduction signal including information of a first clock pit, a second clock pit, and one or more pre-pits disposed in a region between said first clock pit and said second clock pit, which are formed on a disc-shaped information recording medium;
a clock pit signal detection step of detecting a first clock pit signal, which is the reproduction signal of said first clock pit, and a second clock pit signal which is the reproduction- signal of said second clock pit from said pre-pits reproduction signal;
a clock pit signal interval measurement step of measuring the time interval between said first clock pit signal and said second clock pit signal and of outputting a second clock pit signal interval value which is the measured value of said time interval between said first clock pit signal and said second clock pit signal; and
a rotation step of rotating said disc-shaped information recording medium so that said second clock pit signal interval value becomes a constant value.

**22.** (After amendment) A disc-shaped information recording medium control method comprising:

a reproduction step of outputting the reproduction signal of a groove portion or an inter-groove portion or both a groove portion and an inter-groove portion, formed on a disc-shaped information recording medium and divided by a pre-pit region;
an edge signal detection step of detecting, from said reproduction signal, a first edge signal, which is the reproduction signal at the leading edge of said pre-pit region, and a second edge signal which is the reproduction signal at the trailing edge of said pre-pit region;
an edge signal interval measurement step of measuring the time interval between said first edge signal and said second edge signal and of outputting a second edge signal interval value which is the measured value of said time interval between said first edge signal and said second edge signal; and
a rotation step of rotating said disc-shaped information recording medium so that said second edge signal interval value becomes a constant value.

**23.** A tracking error signal generating apparatus for a disc-shaped information recording medium in accordance with claim 5 or 6, wherein said edge signal detection portion comprises:

a window signal generation portion of generating a window signal in which a first time measured from said first edge signal or said second edge signal is used as a starting point and a second time delayed further from said first time is used as an ending point;
a peak detection portion of detecting the peak portion of said reproduction signal included in said window signal;
a peak level judgment portion of making a judgment as to whether the level of said peak portion is in a constant range including the level of said first edge signal or said second edge signal; and
an output portion of outputting said peak portion as the next said first edge signal or the next said second edge signal in the case when the level of said peak portion is in the constant range including the level of said first edge signal or said second edge signal.

**24.** A tracking error signal generating apparatus for a disc-shaped information recording medium in accordance with claim 23, wherein

said peak detection portion detects said reproduction signal at five or more clock timing points sequentially arranged on a time axis, and if the level of said reproduction signal at each clock timing point has a single maximal or minimal value on the time axis, said peak detection portion outputs said first edge signal or said second edge signal having an edge at the clock timing point in which said single maximal or minimal value is detected.

**25.** (Deleted)

**26.** (Deleted)

**27.** A tracking error signal generating apparatus for a disc-shaped information recording medium in accordance with claim 1, 2, 5 or 6, further comprising a period measuring device of measuring the rotation period of said disc-shaped information recording medium, wherein

said computation portion calculates said first wobble pit signal interval value and said second wobble pit signal interval value by using only said first clock pit signal interval value, said second clock pit signal interval value, said first edge signal interval value or said second edge signal interval value included in the range estimated on the basis of said rotation period.

**28.** A tracking error signal generating apparatus for a disc-shaped information recording medium in accordance with claim 1, 2, 5 or 6, wherein said computation portion calculates said first wobble pit signal interval value and said second wobble pit signal interval value on the basis of said first clock pit signal interval value, said second clock pit signal interval value, said first edge signal interval value or said second edge signal interval value obtained by averaging n (n: a given positive integer of 2 or more) measured values, and

the value of said n in the state when said disc-shaped information recording medium carries out steady rotation is larger than the value of said n in the state when said disc-shaped information recording medium accelerates or decelerates.

**29.** (Added) A disc-shaped information recording medium control apparatus comprising:

a reproduction portion of outputting a reproduction signal including information of a first clock pit formed on a disc-shaped information recording medium;
a clock pit signal detection portion of detecting a first clock pit signal which is the reproduction signal of said first clock pit from said reproduction signal; and
a first clock pit signal interval measurement portion of measuring the time interval between two adjacent signals of said first clock pit signals and of outputting a first clock pit signal interval value which is the measured value, wherein
said disc-shaped information recording medium is rotated so that said first clock pit signal interval value becomes a constant value.

**30.** (Added) A disc-shaped information recording medium control apparatus comprising:

a reproduction portion of outputting the reproduction signal of a groove portion or an inter-groove portion or both a groove portion and an inter-groove portion, formed on a disc-shaped information recording medium and divided by a pre-pit region;
an edge signal detection portion of detecting, from said reproduction signal, a first edge signal which is the reproduction signal at the leading edge or trailing edge of said pre-pit region; and
a first edge signal interval measurement portion of measuring the time interval between two adjacent signals of said first edge signals and of outputting a first edge signal interval value which is the measured value, wherein
said disc-shaped information recording medium is rotated so that said first edge signal interval value becomes a constant value.

**31.** (Added) A disc-shaped information recording medium control method comprising:

a reproduction step of outputting a reproduction signal including information of a first clock pit formed on a disc-shaped information recording medium;

a clock pit signal detection step of detecting a first clock pit signal which is the reproduction signal of said first clock pit;

a first clock pit signal interval measurement step of measuring the time interval between two adjacent signals of said first clock pit signals and of outputting a first clock pit signal interval value which is the measured value; and

a step of rotating said disc-shaped information recording medium so that said first clock pit signal interval value becomes a constant value.

**32.** (Added) A disc-shaped information recording medium control method comprising:

a reproduction step of outputting the reproduction signal of a groove portion or an inter-groove portion or both a groove portion and an inter-groove portion formed on a disc-shaped information recording medium and divided by a pre-pit region;

an edge signal detection step of detecting, from said reproduction signal, a first edge signal which is the reproduction signal at the leading edge or trailing edge of said pre-pit region;

a first edge signal interval measurement step of measuring the time interval between two adjacent signals of said first edge signals and of outputting a first edge signal interval value which is the measured value; and

a step of rotating said disc-shaped information recording medium so that said first edge signal interval value becomes a constant value.

**EXPLANATION ON THE BASIS OF ARTICLE 19 (1) OF THE CONVENTION**

Claims 10, 11, 21 and 22 are amended, claims 25 and 26 are deleted, and claims 29 to 32 are added.

JP63-136357A describes an invention wherein mark intervals 1T and 4T are measured by using a fixed clock, the ratio between the mark interval 1T and the mark interval 4T is detected, and motor control is carried out so that the mark interval 4T becomes constant. The invention in accordance with claims 10 and 21 is an invention wherein the reproduction signal of two clock pits is output from the reproduction signal including the two clock pits and other pre-pits disposed therebetween, and motor control is carried out so that the interval between the two clock pits becomes constant. JP11-25461 describes an invention wherein a data channel clock is generated on the basis of a tangential push-pull signal output from a clock pit. JP6-103612A describes an invention wherein motor control is carried out on the basis of the measured value of the interval of the edges of grooves formed radially. The invention in accordance with claims 11 and 22 is an invention wherein the reproduction signal at the leading edge and the trailing edge of a pre-pit region for dividing a groove portion or the like is output, and motor control is carried out so that the interval between the leading edge and the trailing edge becomes constant. The inventions in accordance with claims 10, 11, 21 and 22 are thus completely different from the cited prior art.

DATA-USE CLOCK
DATA-USE PLL
PHASE COMPA-RATOR
LOOP FILTER
VCO
1/M FREQUENCY DIVIDER
TIMING GENERATING CIRCUIT
COMPA-RATOR
COMPA-RATOR
PEAK HOLDER
PEAK HOLDER
SAMPLE HOLDER
TRACKING CONTROL PORTION
VOICE COIL MOTOR DRIVING PORTION
VOICE COIL MOTOR
DIFFEREN-TIATING CIRCUIT
HEAD AMP
FOCUS SERVO
HEAD PORTION
LASER APC
BEAM SPOT
101 : OPTICAL DISC
SPINDLE MOTOR
SPINDLE MOTOR CONTROL PORTION
FIG. 1

242: FIRST CLOCK PIT DETECTION SIGNAL
201: FIRST CLOCK PIT DISCRIMINATOR
231: FIRST CLOCK PIT SIGNAL
131: BINARIZED REPRODUCTION SIGNAL
202
203
132: BINARIZED DIFFERENTIATED REPRODUCTION SIGNAL
133: CLOCK SIGNAL
DELAY DEVICE
204
232
RESET
COUNTER
205
233
CLOCK
DATA
DATA
206
LATCH CIRCUIT
COMPARATOR
211
RESET
COUNTER
213
CLOCK
DELAY DEVICE
212
236: GATE TIMING TABLE REGISTER FOR COMPUTATION VALUES
210
237: COINCIDENCE SIGNAL
238
234
207
MICRO -COMPUTER
235: ADDRESS DATA
144: FREQUENCY DIVISION RATIO SIGNAL
ROM
208
GATE TIMING TABLE REGISTER
209
COUNT VALUE OF LEADING EDGE OF FIRST CLOCK PIT WINDOW SIGNAL
COUNT VALUE OF TRAILING EDGE OF FIRST CLOCK PIT WINDOW SIGNAL
COUNT VALUE OF TRAILING EDGE OF CLOCK PIT PULSE SIGNAL
COUNT VALUE OF LEADING EDGE OF FIRST WOBBLE PIT DETECTION WINDOW SIGNAL
COUNT VALUE OF DIFFERENTIAL SIGNAL LATCH SIGNAL
COMPUTATION VALUE OF COUNT VALUE OF LEADING EDGE OF FIRST CLOCK PIT WINDOW SIGNAL
COMPUTATION VALUE OF COUNT VALUE OF TRAILING EDGE OF FIRST CLOCK PIT WINDOW SIGNAL
COMPUTATION VALUE OF COUNT VALUE OF DIFFERENTIAL SIGNAL LATCH SIGNAL
ADDRESS POINTER
FIRST CLOCK PIT WINDOW SIGNAL GENERATOR
214
239
SET
CLOCK PIT PULSE SIGNAL GENERATOR
215
134: CLOCK PIT PULSE SIGNAL
FIRST WOBBLE PIT DETECTION WINDOW SIGNAL GENERATOR
216
240
218
135: FIRST WOBBLE PIT SIGNAL DETECTION SIGNAL
SECOND WOBBLE PIT DETECTION WINDOW SIGNAL GENERATOR
217
219
136: SECOND WOBBLE PIT SIGNAL DETECTION SIGNAL
241
DIFFERENTIAL SIGNAL LATCH SIGNAL GENERATOR
220
137: DIFFERENTIAL SIGNAL LATCH SIGNAL

FIG. 2

FIG. 3

(a)
306
305
312
313
303
304
302
301

(b)
305
306
307
303
304
303
304
303
316
308
309
310
317
315

(a)
INNER CIRCUMFERENTIAL DIRECTION OF DISC
BEAM SPOT MOVEMENT DIRECTION
303
304
PRE-PIT REGION #1279
PRE-PIT REGION #1280
316
308
309
310
317
PRE-PIT REGION #1
PRE-PIT REGION #2
303
304
(b)
138
REPRODUCTION SIGNAL
316
308
309
310
317
TRACKING ERROR POLARITY SIGNAL
1
0

F I G. 4

(A) INNER CIRCUMFERENCE PORTION OF OPTICAL DISC
PRE-PIT REGION #1
DATA RECORDING REGION #1
PRE-PIT REGION #2
DATA RECORDING REGION #2
T1W (θ1W)
T2W (θ2W)
T2C (θ2C)
T1C (θ1C)
316
308
309
310
317
(B) OUTER CIRCUMFERENCE PORTION OF OPTICAL DISC
PRE-PIT REGION #1
DATA RECORDING REGION #1
PRE-PIT REGION #2
T1W' (θ1W)
T2W' (θ2W)
T2C'' (θ2C)
T1C' (θ1C)

FIG. 5

138
139
131
132
239
242
231
133
234
240
241
135
136
137
601
reset
load
reset
load
reset
load

FIG. 6

FIG. 7

(a)

Vh2
Vh1
V1
V5
Vl2
V2
V4
V3
Vl1
T1
T2
T3
T4
T5

(b)

V5
V2
V1
V4
V3
T1
T2
T3
T4
T5

FIG. 8

801
OUTPUT REPRODUCTION SIGNAL OF PRE-PITS
802
DETECT FIRST CLOCK PIT SIGNAL FROM INSIDE OF REPRODUCTION SIGNAL
803
MEASURE INTERVAL TIME BETWEEN TWO ADJACENT FIRST CLOCK PIT SIGNALS
804
COMPUTE FIRST WOBBLE PIT SIGNAL INTERVAL VALUE AND SECOND WOBBLE PIT SIGNAL INTERVAL VALUE
805
DETECT FIRST WOBBLE PIT SIGNAL AND SECOND WOBBLE PIT SIGNAL
806
GENERATE DIFFERENTIAL SIGNAL BETWEEN FIRST WOBBLE PIT SIGNAL AND SECOND WOBBLE PIT SIGNAL
807
CARRY OUT TRACKING CONTROL SO THAT DIFFERENTIAL SIGNAL BECOMES SMALL

242: FIRST CLOCK PIT DETECTION SIGNAL
201: FIRST CLOCK PIT DISCRIMINATOR
231: FIRST CLOCK PIT SIGNAL
131: BINARIZED REPRODUCTION SIGNAL
202
203
912
915: SECOND CLOCK PIT DETECTION SIGNAL
901: SECOND CLOCK PIT DISCRIMINATOR
902
903
916
132: BINARIZED DIFFERENTIATED REPRODUCTION SIGNAL
LATCH CIRCUIT
904
204
DELAY DEVICE
133: CLOCK SIGNAL
232
RESET
COUNTER
205
RESET
COUNTER
213
911: SECOND CLOCK PIT SIGNAL
CLOCK
CLOCK
212
DELAY DEVICE
DATA
233
211
DATA
COMPARATOR
ROM
208
LATCH CIRCUIT
906
237: COINCIDENCE SIGNAL
236
210
209
GATE TIMING TABLE REGISTER
914
207
MICROCOMPUTER
ADDRESS POINTER
235: ADDRESS DATA
144: FREQUENCY DIVISION RATIO SIGNAL
GATE TIMING TABLE REGISTER FOR COMPUTATION VALUES
FIRST CLOCK PIT WINDOW SIGNAL GENERATOR
239
214
SECOND CLOCK PIT WINDOW SIGNAL GENERATOR
905
SET
CLOCK PIT PULSE SIGNAL GENERATOR
215
134: CLOCK PIT PULSE SIGNAL
216
FIRST WOBBLE PIT DETECTION WINDOW SIGNAL GENERATOR
240
218
135: FIRST WOBBLE PIT SIGNAL DETECTION SIGNAL
238
217
SECOND WOBBLE PIT DETECTION WINDOW SIGNAL GENERATOR
219
136: SECOND WOBBLE PIT SIGNAL DETECTION SIGNAL
220
241
DIFFERENTIAL SIGNAL LATCH SIGNAL GENERATOR
137: DIFFERENTIAL SIGNAL LATCH SIGNAL

F I G. 9

FIG. 10

(a)
1006
1005
1003
1012
1013
1004
1002
1001

(b)
1005
1006
1007
1003
1004
1003
1004
1003
1016
1008
1009
1010
1017
1015

(A) INNER CIRCUMFERENCE PORTION OF OPTICAL DISC
PRE-PIT REGION #1
DATA RECORDING REGION #1
PRE-PIT REGION #2
DATA RECORDING REGION #2
1016
1008
1009
1010
1017
T1W (L1W)
T2W (L2W)
T2C (L2C)
T1C (L1C)
(B) OUTER CIRCUMFERENCE PORTION OF OPTICAL DISC
PRE-PIT REGION #1
DATA RECORDING REGION #1
PRE-PIT REGION #2
T1W' (L1W)
T2W' (L2W)
T2C' (L2C)
T1C' (L1C)

FIG. 11

138
139
131
132
239
242
912
915
231
911
133
914
240
241
135
136
137
601
reset
load
reset
load
reset
load

FIG. 12

FIG. 13

1301
OUTPUT REPRODUCTION SIGNAL OF PRE-PITS
1302
DETECT FIRST CLOCK PIT SIGNAL FROM INSIDE OF REPRODUCTION SIGNAL
1303
MEASURE INTERVAL BETWEEN FIRST CLOCK PIT SIGNAL AND SECOND CLOCK PIT SIGNAL
1304
COMPUTE FIRST WOBBLE PIT SIGNAL INTERVAL VALUE AND SECOND WOBBLE PIT SIGNAL INTERVAL VALUE
1305
DETECT FIRST WOBBLE PIT SIGNAL AND SECOND WOBBLE PIT SIGNAL
1306
GENERATE DIFFERENTIAL SIGNAL BETWEEN FIRST WOBBLE PIT SIGNAL AND SECOND WOBBLE PIT SIGNAL
1307
CARRY OUT TRACKING CONTROL SO THAT DIFFERENTIAL SIGNAL BECOMES SMALL

1401
TARGET VALUE
906
LATCH CIRCUIT
1403
n0
n1
n1-n0
1404
CURRENT CONVERTER
1405
VOLTAGE CONVERTER
1411
$K_p$
1412
$K_i \Sigma$
1413
1407
MAGNETO-OPTICAL DISC
105
HEAD PORTION
MOTOR DRIVING PORTION
102
SPINDLE MOTOR
1406

F I G. 1 4

FIG. 15

(a)

1506
1505
1503
1512
1513
1504
1502
1501

(b)

1505
1506
1507
1503
1504
1503
1504
1503
1516
1508
1509
1510
1517
1511
1514

(a)
INNER CIRCUMFERENTIAL DIRECTION OF DISC
BEAM SPOT MOVEMENT DIRECTION
1511 GROOVE PORTION
1514 INTER-GROOVE PORTION
1516
1508
1509
1510
1517
1506 PRE-PIT REGION #N-1
1506 PRE-PIT REGION #N
1506 PRE-PIT REGION #1
1506 PRE-PIT REGION #2
(b)
LEVEL OF REPRODUCTION SIGNAL
t1
t2
1516
1508
1509
1510
1517


F I G. 16

138
139
1703
131
1704
239
231
133
234
240
241
135
136
137
1701
1702
reset
load

FIG. 17

FIG. 18
(a)
Vh4
Vh3
Vl4
Vl3
V5
V4
V3
V2
V1
T1
T2
T3
T4
T5

(b)

V2

V5

V4

V3

V1

T1 T2 T3 T4 T5

FIG. 19

1901
OUTPUT REPRODUCTION SIGNAL OF GROOVE PORTION AND PRE-PITS
1902
DETECT REPRODUCTION SIGNAL(FIRST EDGE SIGNAL)OF TRAILING EDGE OF GROOVE PORTION FROM INSIDE OF REPRODUCTION SIGNAL
1903
MEASURE INTERVAL BETWEEN TWO ADJACENT FIRST EDGE SIGNALS
1904
COMPUTE FIRST WOBBLE PIT SIGNAL INTERVAL VALUE AND SECOND WOBBLE PIT SIGNAL INTERVAL VALUE
1905
DETECT FIRST WOBBLE PIT SIGNAL AND SECOND WOBBLE PIT SIGNAL
1906
GENERATE DIFFERENTIAL SIGNAL BETWEEN FIRST WOBBLE PIT SIGNAL AND SECOND WOBBLE PIT SIGNAL
1907
CARRY OUT TRACKING CONTROL SO THAT DIFFERENTIAL SIGNAL BECOMES SMALL

FIG. 20

(a)
2006
2005
2003
2012
2013
2004
2002
2001

(b)
2005
2006
2007
2003
2004
2003
2004
2003
2016
2008
2009
2010
2017
2011
2014

138
139
1703
131
1704
239
231
911
133
914
240
241
135
136
137
1701
1702
reset
load

FIG. 21

FIG. 22

2201
OUTPUT REPRODUCTION SIGNAL OF GROOVE PORTION AND PRE-PITS
2202
DETECT REPRODUCTION SIGNAL (FIRST EDGE SIGNAL) OF TRAILING EDGE OF GROOVE PORTION FROM INSIDE OF REPRODUCTION SIGNAL
2203
MEASURE INTERVAL BETWEEN FIRST EDGE SIGNAL AND SECOND EDGE SIGNAL
2204
COMPUTE FIRST WOBBLE PIT SIGNAL INTERVAL VALUE AND SECOND WOBBLE PIT SIGNAL INTERVAL VALUE
2205
DETECT FIRST WOBBLE PIT SIGNAL AND SECOND WOBBLE PIT SIGNAL
2206
GENERATE DIFFERENTIAL SIGNAL BETWEEN FIRST WOBBLE PIT SIGNAL AND SECOND WOBBLE PIT SIGNAL
2207
CARRY OUT TRACKING CONTROL SO THAT DIFFERENTIAL SIGNAL BECOMES SMALL

FIG. 23

(a)

2306
2305
2303
2312
2313
2304
2302
2301

(b)

2305
2306
2307
2303
2304
2303
2304
2303
2316
2308
2309
2310
2317
2311
2314

INNER CIRCUMFERENTIAL
DIRECTION OF DISC
BEAM SPOT MOVEMENT DIRECTION
2311
2314
2316
2308
2309
2310
2317
(a)
PRE-PIT REGION #N-1
PRE-PIT REGION #N
PRE-PIT REGION #1
PRE-PIT REGION #2
(b)
t1
t2
2316
2308
2309
2310
2317
138
REPRODUCTION SIGNAL

FIG. 24

FIG. 25

(a)

2506
2505
2503
2512
2513
2504
2502
2501

(b)

2505
2506
2507
2503
2504
2503
2504
2503
2516
2508
2509
2510
2517
2511
2514

INNER CIRCUMFERENTIAL DIRECTION OF DISC
BEAM SPOT MOVEMENT DIRECTION
(a)
2514
2511
2516
2508
2509
2510
2517
PRE-PIT REGION #N-1
PRE-PIT REGION #N
PRE-PIT REGION #1
PRE-PIT REGION #2
t1
t2
2516
2508
2509
2510
2517
(b)
138
REPRODUCTION SIGNAL

FIG. 26

DATA-USE CLOCK
2710
DATA PLL
TRACKING ERROR DETECTION PORTION
2709
SEEK STATE
FG SIGNAL
TRACKING ERROR SIGNAL
ADDITION SIGNAL
FOCUS -ON
2707
2708
2711
2705
HEAD AMP
FOCUS SERVO
TRACKING SERVO
2704
HEAD PORTION
2702
SPINDLE MOTOR
LASER APC
2706
SPINDLE MOTOR CONTROL PORTION
2701
2703

FIG. 27

2709 TRACKING ERROR DETECTION PORTION
2710 DATA-USE PLL
ADDITION SIGNAL
VARIABLE GAIN AMP
2801
A/D CONVERTER
2802
2803
SIGNAL LEVEL DETECTOR
PHASE DIFFERENCE SIGNAL
124
1/m FREQUENCY DIVIDER
2816
CLOCK PIT 1 PHASE ERROR DETECTOR
2817
D/A CONVERTER
122
LOOP FILTER
123
VCO
DATA-USE CLOCK
2804
PIT DETECTOR
FOCUS-ON
2805
CLOCK PIT 1 LEVEL DETECTOR
2807
CLOCK PIT 1 DETECTOR
2806
CLOCK PIT 2 LEVEL DETECTOR
CLOCK PIT 2 DETECTOR
2808
2809
CLOCK PIT 1 PERIOD MEASURING DEVICE
2810
SERVO AREA DISTANCE MEASURING DEVICE
WINDOW GENERATOR
2811
2813
WOBBLE 1 BOTTOM LEVEL DETECTOR
2814
WOBBLE 2 BOTTOM LEVEL DETECTOR
D/A CONVERTER
2815
MOTOR PERIOD MEASURING DEVICE
2812
TRACKING ERROR SIGNAL
SEEK STATE
FG SIGNAL

FIG. 28

F I G. 29
A
B
C
D
1005
1006
ADDITION SIGNAL AMPLIFICATION FACTOR DETERMINATION MODE
SIGNAL LEVEL DETECTION MODE
GND
F I G. 30
C
P
Q
R
OUTPUT OF PIT DETECTOR

PIT DETECTION SIGNAL
SPACE DETECTION SIGNAL
CLOCK PIT 1 DETECTION SIGNAL
CLOCK PIT 2 DETECTION SIGNAL
1006
1005
T
SP
SL
SIGNAL LEVEL DETECTION MODE
SEGMENT PERIOD AND SERVO AREA ZONE INITIAL MEASUREMENT MODE
TRACKING ERROR SIGNAL DETECTION LOCK MODE

F I G. 3 1

1U
1D
2U
2D
PIT DETECTION SIGNAL
CLOCK PIT 1 WINDOW
CLOCK PIT 2 WINDOW
WOBBLE PIT 1 WINDOW
WOBBLE PIT 2 WINDOW
1005
1006
1005
1006
1005
1006
TRACKING ERROR SIGNAL DETECTION LOCK MODE
CLOCK PIT DETECTION ERROR MODE
TRACKING ERROR SIGNAL DETECTION LOCK MODE

FIG. 32

DATA-USE PLL
PHASE COMPA -RATOR
LOOP FILTER
VCO
1/M FRE -QUENCY DIVIDER
DATA-USE CLOCK
SERVO-USE PLL
PHASE COMPA -RATOR
LOOP FILTER
VCO
1/N FRE -QUENCY DIVIDER
3301 : OPTICAL DISC
SPINDLE MOTOR
BEAM SPOT
HEAD PORTION
DIFFEREN TIATING CIRCUIT
COMPA -RATOR
COMPA -RATOR
TIMING GENERATING CIRCUIT
SPINDLE MOTOR CONTROL PORTION
LASER APC
HEAD AMP
FOCUS SERVO
PEAK HOLDER
PEAK HOLDER
SAMPLE HOLDER
TRACKING CONTROL PORTION
VOICE COIL MOTOR DRIVING PORTION
VOICE COIL MOTOR
117
121
122
123
124
133
3311
3312
3313
3321
3314
102
104
110
139
134
111
132
3316
3333
105
138
109
131
103
107
112
135
136
137
106
108
113
140
141
114
142
115
143
118
119
120

FIG. 33

242: FIRST CLOCK PIT DETECTION SIGNAL
201: FIRST CLOCK PIT DISCRIMINATOR
231: FIRST CLOCK PIT SIGNAL
131: BINARIZED REPRODUCTION SIGNAL
202
203
912
915: SECOND CLOCK PIT DETECTION SIGNAL
901: SECOND CLOCK PIT DISCRIMINATOR
902
903
916
132: BINARIZED DIFFERENTIATED REPRODUCTION SIGNAL
LATCH CIRCUIT
904
DELAY DEVICE
204
133: CLOCK SIGNAL
232
RESET
COUNTER
205
911: SECOND CLOCK PIT SIGNAL
CLOCK
DATA
233
211
RESET
COUNTER
213
CLOCK
212
DELAY DEVICE
DATA
COMPARATOR
LATCH CIRCUIT
237: COINCIDENCE SIGNAL
236
906
210
ROM
208
209
GATE TIMING TABLE REGISTER
914
207
MICROCOMPUTER
235: ADDRESS DATA
144: FREQUENCY DIVISION RATIO SIGNAL
ADDRESS POINTER
GATE TIMING TABLE REGISTER FOR COMPUTATION VALUES
FIRST CLOCK PIT WINDOW SIGNAL GENERATOR
239
214
SECOND CLOCK PIT WINDOW SIGNAL GENERATOR
905
SET
CLOCK PIT PULSE SIGNAL GENERATOR
215
134: CLOCK PIT PULSE SIGNAL
216
FIRST WOBBLE PIT DETECTION WINDOW SIGNAL GENERATOR
240
218
135: FIRST WOBBLE PIT SIGNAL DETECTION SIGNAL
238
217
SECOND WOBBLE PIT DETECTION WINDOW SIGNAL GENERATOR
219
136: SECOND WOBBLE PIT SIGNAL DETECTION SIGNAL
241
DIFFERENTIAL SIGNAL LATCH SIGNAL GENERATOR
137: DIFFERENTIAL SIGNAL LATCH SIGNAL
220

F I G. 3 4

138
139
131
132
239
242
231
2733
240
241
135
136
137
reset
reset
reset

FIG. 35

(A) INNER CIRCUMFERENCE PORTION OF OPTICAL DISC
PRE-PIT REGION
DATA RECORDING REGION
IMAGE OF RECORD DATA
2909
2916
2908
2733
133
TIME AXIS
(B) OUTER CIRCUMFERENCE PORTION OF OPTICAL DISC
PRE-PIT REGION
DATA RECORDING REGION
IMAGE OF RECORD DATA
2909
2916
2908
2733
133
TIME AXIS

FIG. 36

FIG. 37

(a)
3706
3705
3703
3712
3713
3704
3702
3701

(b)
3705
3706
3707
3703
3704
3703
3704
3703
3716
3708
3709
3715

## INTERNATIONAL SEARCH REPORT

International application No.
PCT/JP01/07857

A. CLASSIFICATION OF SUBJECT MATTER
Int.Cl[7] G11B 7/095, 7/004, 20/14, 19/28

According to International Patent Classification (IPC) or to both national classification and IPC

B. FIELDS SEARCHED

Minimum documentation searched (classification system followed by classification symbols)
Int.Cl[7] G11B 7/09, 7/095, 7/004, 20/10, 20/14, 19/28

Documentation searched other than minimum documentation to the extent that such documents are included in the fields searched
Jitsuyo Shinan Koho 1922-1996 Toroku Jitsuyo Shinan Koho 1994-2001
Kokai Jitsuyo Shinan Koho 1971-2001 Jitsuyo Shinan Toroku Koho 1996-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 5-266595 A (Hitachi, Ltd.), 15 October, 1993 (15.10.93), Full text; Figs. 1 to 12 & US 5377178 A1 | 1-9,12-20,23, 24,27,28 |
| A | JP 7-235058 A (Hitachi, Ltd.), 05 September, 1995 (05.09.95), Full text; Figs. 1 to 14 & US 5572502 A1 | 1-9,12-20,23, 24,27,28 |
| X | JP 63-136357 A (Sharp Corporation), 08 June, 1988 (08.06.88), Full text; Figs. 1-2 & DE 3776639 A & EP 274214 A1 & US 5056076 A1 | 10,21 |
| Y | JP 11-25461 A (Seiji YONESAWA), 29 January, 1999 (29.01.99), Full text; Figs. 1-8 (Family: none) | 11,22 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 December, 2001 (04.12.01) | 18 December, 2001 (18.12.01) |
| Name and mailing address of the ISA/ Japanese Patent Office | Authorized officer |
| Facsimile No. | Telephone No. |

Form PCT/ISA/210 (second sheet) (July 1992)

INTERNATIONAL SEARCH REPORT

International application No.
PCT/JP01/07857

C (Continuation). DOCUMENTS CONSIDERED TO BE RELEVANT

| Category* | Citation of document, with indication, where appropriate, of the relevant passages | Relevant to claim No. |
|---|---|---|
| Y | JP 6-103612 A (Sony Corporation), 15 April, 1994 (15.04.94), Full text; Figs. 1-12 (Family: none) | 11,22 |
| | JP 8-161829 A (Canon Inc.), 21 June, 1996 (21.06.96), | |
| X | Full text; Figs. 1-19 | 25 |
| Y | Full text; Figs. 1-19 (Family: none) | 26 |
| Y | JP 1-159835 A (Seiko Epson Corporation), 22 June, 1989 (22.06.89), Full text; Figs. 1-6 (Family: none) | 26 |

Form PCT/ISA/210 (continuation of second sheet) (July 1992)

**INTERNATIONAL SEARCH REPORT**

International application No.
PCT/JP01/07857

**Box I Observations where certain claims were found unsearchable (Continuation of item 1 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 2 of first sheet)**

This International Searching Authority found multiple inventions in this international application, as follows:

Claims 1-9, 12-20, 23, 24, 26-28 relate to a track error signal detection.

Claims 10, 21 relate to the rotational control of a discoidal information record medium by means of clock pits.

Claims 11, 22 relate to the rotational control of a discoidal information record medium by means of a signal acquired from the position of the end of a groove and a signal acquired from the position of the start of the groove.

Claim 25 relates to a phase locked loop of a discoidal information record medium.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.
☒ No protest accompanied the payment of additional search fees.

Form PCT/ISA/210 (continuation of first sheet (1)) (July 1992)